# EUROPEAN PATENT APPLICATION

(11) **EP 4 195 554 A1**
(43) Date of publication of application: **14.06.2023**
(21) Application number: 21852750.5
(22) Date of filing: 06.08.2021
(51) Int. Cl.: H04L 1/18

(54) **UCI TRANSMISSION METHOD, UCI RECEIVING METHOD, TERMINAL, AND NETWORK DEVICE**

(30) Priority: 06.08.2020 CN 202010785796
(71) Applicant: Datang Mobile Communications Equipment Co., Ltd., Beijing 100085 (CN)
(72) Inventor: GAO, Xuejuan, Beijing 100085 (CN); SI, Qianqian, Beijing 100085 (CN)
(74) Representative: Studio Torta S.p.A.
(86) International application number: PCT/CN2021/111214
(87) International publication number: WO 2022/028579

(57) **Abstract**

The present disclosure provides a UCI transmission method, a UCI reception method, a terminal and a network device. The UCI transmission method includes: receiving, by a terminal, a first PDCCH, the first PDCCH including a retransmission indication information; determining, by the terminal, a first time unit in accordance with the retransmission indication information; and transmitting, by the terminal, first UCI in a second time unit, the first UCI being UCI dropped in the first time unit, the second time unit being a time unit where uplink channel corresponding to the first PDCCH is transmitted.

## Description

### CROSS-REFERENCE TO RELATED APPLICATION

This application claims a priority of the Chinese patent application No. 202010785796.1 filed on August 6, 2020, which is incorporated herein by reference in its entirety.

### TECHNICAL FIELD

The present disclosure relates to the field of communication technology, in particular to an Uplink Control Information (UCI) transmission, a UCI reception method, a terminal and a network device.

### BACKGROUND

In some communication systems (e.g., a 5^{th}-Generation (5G) system), some pieces of UCI may be dropped for some reasons. However, after the UCI has been dropped, downlink scheduling of the communication system may be adversely affected. For example, downlink transmission is repeated when a network side fails to receive the UCI from a terminal, especially the UCI without any subsequent periodic transmission occasion. Hence, the working efficiency of the current communication system is relatively low when the UCI is dropped.

### SUMMARY

An object of the present disclosure is to provide a UCI transmission method, a UCI reception method, a terminal and a network device, so as to solve the problem in the related art where the working efficiency of the communication system is relatively low when the UCI is dropped.

In one aspect, the present disclosure provides in some embodiments a UCI transmission method, including: receiving, by a terminal, a first Physical Downlink Control Channel (PDCCH), the first PDCCH including a retransmission indication information; determining, by the terminal, a first time unit in accordance with the retransmission indication information; and transmitting, by the terminal, first UCI in a second time unit, the first UCI being UCI dropped in the first time unit, the second time unit being a time unit where uplink channel corresponding to the first PDCCH is transmitted.

In a possible embodiment of the present disclosure, a value range of the retransmission indication information includes a first indication state and a second indication state, the first indication state indicates that no UCI retransmission is to be performed, and the second indication state indicates that UCI retransmission is to be performed. The determining, by the terminal, the first time unit in accordance with the retransmission indication information includes determining the first time unit in accordance with the retransmission indication information in the case that the retransmission indication information is in the second indication state.

In a possible embodiment of the present disclosure, the retransmission indication information is used to indicate an offset value, and the terminal determines the first time unit in accordance with the offset value; or the retransmission indication information includes K bits, each bit corresponds to a sub-time period in a predefined time period, the first time unit includes one or more time units contained in a sub-time period corresponding to a bit having a first value in the K bits, K is an integer greater than or equal to 1, and one sub-time period includes at least one time unit; or the retransmission indication information includes K bits, each bit corresponds to a time unit in a predefined time period, the first time unit includes one or more time units corresponding to a bit having a first value in the K bits, and K is an integer greater than or equal to 1.

In a possible embodiment of the present disclosure, the determining, by the terminal, the first time unit in accordance with the offset value includes: determining one or more time units before the time unit where the uplink channel scheduled by the first PDCCH is transmitted as the first time unit in accordance with the offset value and the time unit where the uplink channel scheduled by the first PDCCH is transmitted; or determining one or more time units before a time unit where the first PDCCH is transmitted as the first time unit in accordance with the offset value and the time unit where the first PDCCH is transmitted; or determining one or more time units before a time unit where a downlink shared channel scheduled by the first PDCCH is transmitted as the first time unit in accordance with the offset value and the time unit where the downlink shared channel scheduled by the first PDCCH is transmitted.

In a possible embodiment of the present disclosure, a unit of the offset value is determined with a definition of the first time unit as a reference; or the unit of the offset value is determined with a definition of the second time unit as a reference; or in the case that the definition of the first time unit is different from the definition of the second time unit, the unit of the offset value is determined with the definition of a time unit, with a larger time length between the first time unit and the second time unit, as a reference; or in the case that the definition of the first time unit is different from the definition of the second time unit, the unit of the offset value is determined with the definition of a time unit, with a smaller time length between the first time unit and the second time unit, as a reference; or the unit of the offset value is determined with the definition of the first time unit and the definition of the second time unit as a reference, or with the definition of any of the first time unit and the second time unit as a reference; wherein the definition of the first time unit is the same as the definition of the second time unit through pre-definition or configuration.

In a possible embodiment of the present disclosure, the predefined time period includes one of a predefined time period containing the first PDCCH transmission, a predefined time period before the first PDCCH transmission, a predefined time period containing uplink channel transmission scheduled by the first PDCCH, or a predefined time period before the uplink channel transmission scheduled by the first PDCCH; and/or a unit of a time unit corresponding to each bit or a unit of a sub-time period corresponding to each bit is determined with a definition of the first time unit as a reference; or a unit of the time unit corresponding to each bit or a unit of a sub-time period corresponding to each bit, is determined with a definition of the second time unit as a reference; or in the case that the definition of the first time unit is different from the definition of the second time unit, a unit of the time unit corresponding to each bit or a unit of a sub-time period corresponding to each bit, is determined with the definition of a time unit with a larger time length between the first time unit and the second time unit as a reference; or in the case that the definition of the first time unit is different from the definition of the second time unit, a unit of the time unit corresponding to each bit or a unit of a sub-time period corresponding to each bit, is determined with a time unit with a smaller time length between the first time unit and the second time unit as a reference; or a unit of the time unit corresponding to each bit or a unit of a sub-time period corresponding to each bit, is determined with the definition of the first time unit and the definition of the second time unit as a reference, or with the definition of any of the first time unit and the second time unit as a reference; wherein the definition of the first time unit is the same as the definition of the second time unit through pre-definition or configuration.

In a possible embodiment of the present disclosure, causes for dropping the first UCI include at least one of: that there is a conflict between an uplink channel carrying the first UCI and the other channel, the other channel having a priority level higher than the uplink channel carrying the first UCI; that all or parts of transmission resources for the uplink channel carrying the first UCI are contained in an uplink region which is notified to be ceased or cancelled through uplink cancellation indication signaling in the case that uplink cancellation is configured for the terminal; that there are symbols occupied by a downlink symbol or a Synchronization Signal Block (SSB) configured through high-layer signaling in a symbol set of the uplink channel carrying the first UCI; that a flexible symbol configured through high-layer signaling is contained in the symbol set of the uplink channel carrying the first UCI and there is a downlink transmission scheduled by a PDCCH on the flexible symbol, or the flexible symbol is indicated as a downlink symbol through indication information in Downlink Control Information (DCI) indicating a slot structure when the terminal is configured to detect the DCI indicating the slot structure; that the flexible symbol configured through high-layer signaling is contained in the symbol set of the uplink channel carrying the first UCI, the terminal is configured to detect the DCI indicating the slot structure but the terminal fails to receive the DCI indicating the slot structure; that a Physical Uplink Shared Channel (PUSCH) carrying the first UCI is located in a region where uplink skipping is executed by the terminal; or that a Configured Grant (CG) PUSCH carrying the first UCI is ceased or cancelled due to the other PUSCH with DCI scheduling.

In a possible embodiment of the present disclosure, the definition of each of the first time unit and the second time unit includes one of at least one subframe, at least one slot, or at least one sub-slot; wherein the definition of the first time unit is the same as or different from the definition of the second time unit.

In a possible embodiment of the present disclosure, in the case that a plurality of first PDCCHs has been received by the terminal and one or more Hybrid Automatic Repeat request-ACKnowledgments (HARQ-ACKs) for one or more Physical Downlink Shared Channels (PDSCHs) scheduled by the plurality of first PDCCHs and/or for a Semi-Persistent Scheduling (SPS) PDSCH release indicated by the plurality of first PDCCHs are transmitted in the second time unit, offset values indicated through retransmission indication information in the plurality of first PDCCHs are the same; or the offset values indicated through retransmission indication information in the plurality of first PDCCHs are different, and the first time unit is determined in accordance with a retransmission indication field in each first PDCCH in the plurality of first PDCCHs or a retransmission indication field in a last one of the plurality of first PDCCHs.

In a possible embodiment of the present disclosure, in the case that the first PDCCH includes a priority level indication field, a priority level of the first UCI is the same as or different from a priority level indicated in the priority level indication field, or the priority level of the first UCI is greater than or equal to the priority level indicated in the priority level indication field; or in the case that the first PDCCH does not include the priority level indication field, the priority level of the first UCI is the same as or different from a predefined priority level corresponding to DCI used by the first PDCCH, or the priority level of the first UCI is greater than or equal to the predefined priority level corresponding to the DCI used by the first PDCCH.

In a possible embodiment of the present disclosure, the transmitting, by the terminal, the first UCI in the second time unit includes transmitting the first UCI in the second time unit in accordance with a size and bits of the first UCI in the first time unit.

In a possible embodiment of the present disclosure, in the case that the other UCI is not transmitted by the terminal in the second time unit, the transmitting, by the terminal, the first UCI in the second time unit includes: when a PDSCH transmission is scheduled by the first PDCCH or an SPS PDSCH release is indicated by the first PDCCH, and an HARQ-ACK for the PDSCH or SPS PDSCH release is transmitted in the second time unit, transmitting the first UCI on a PUCCH resource in the second time unit, the PUCCH resource being determined in accordance with the quantity of bits of the first UCI and a PUCCH resource indication field in the first PDCCH, or the PUCCH resource being determined in accordance with a PUCCH resource index corresponding to the first UCI in the first time unit, or the PUCCH resource being a resource preconfigured through high-layer signaling; or when a PUSCH is scheduled by the first PDCCH to be transmitted in the second time unit, transmitting the first UCI on a PUSCH resource in the second time unit.

In a possible embodiment of the present disclosure, in the case that the first time unit includes a plurality of time units, the transmitting, by the terminal, the first UCI in the second time unit includes: cascading a plurality of pieces of first UCI dropped in the plurality of time units to each other in a predetermined cascading order, and transmitting the cascaded first UCI on a PUCCH resource in the second time unit, the PUCCH resource being determined in accordance with a PUCCH resource index in a target time unit in the plurality of time units corresponding to the first UCI in the target time unit, the target time unit being a first one of the plurality of time units, a last one of the plurality of time units or a time unit in the plurality of time units in which the PUCCH resource corresponding to the first UCI has a maximum capacity, or the PUCCH resource being determined in accordance with the quantity of bits of the cascaded first UCI and a PUCCH resource indication field in the first PDCCH, or the PUCCH resource being a resource preconfigured through high-layer signaling, the predetermined cascading order including at least one of a chronological order of the time units or an order of UCI types; or independently transmitting the plurality of pieces of first UCI dropped in the plurality of time units on a plurality of PUCCH resources in the second time unit, the plurality of PUCCH resources being determined in accordance with a PUCCH resource index corresponding to each of the plurality of pieces of first UCI in a corresponding time unit within the plurality of time units.

In a possible embodiment of the present disclosure, in the case that second UCI is transmitted by the terminal in the second time unit, the transmitting, by the terminal, the first UCI in the second time unit includes: transmitting the first UCI and the second UCI in a multiplexing manner through a same PUCCH resource, the PUCCH resource being determined in accordance with the total quantity of bits of the first UCI and the second UCI and a PUCCH resource indication field in the first PDCCH, or the PUCCH resource being a resource preconfigured through high-layer signaling; or when HARQ-ACK is contained in both the first UCI and the second UCI, cascading the second UCI with the first UCI, and transmitting the first UCI and the second UCI through a same PUCCH resource, the PUCCH resource being determined in accordance with the total quantity of bits of the first UCI and the second UCI and a PUCCH resource indication field in the first PDCCH, or the PUCCH resource being a resource preconfigured through high-layer signaling; or transmitting the first UCI through a first PUCCH resource and transmitting the second UCI through a second PUCCH resource, wherein the first PUCCH resource does not overlap with the second PUCCH resource in a time domain, the first PUCCH resource being determined in accordance with the quantity of bits of the first UCI and a PUCCH resource indication field in the first PDCCH, or the first PUCCH resource being determined in accordance with a PUCCH resource index corresponding to the first UCI in the first time unit, or the first PUCCH resource being a resource preconfigured through high-layer signaling; or determining a first PUCCH resource corresponding to the first UCI and a second PUCCH resource corresponding to the second UCI, transmitting the first UCI through the first PUCCH resource and transmitting the second UCI through the second PUCCH resource when the first PUCCH resource does not overlap with the second PUCCH resource in a time domain, and transmitting the first UCI and the second UCI in a multiplexing manner through a same PUCCH resource when the first PUCCH resource overlaps with the second PUCCH resource in the time domain, the first PUCCH resource being determined in accordance with the quantity of bits of the first UCI and a PUCCH resource indication field in the first PDCCH, or the first PUCCH resource being determined in accordance with a PUCCH resource index corresponding to the first UCI in the first time unit, or the first PUCCH resource being a resource preconfigured through high-layer signaling.

In a possible embodiment of the present disclosure, a type of the first UCI is the same as or different from a type of the second UCI, and the second UCI includes at least one of an HARQ-ACK of the first PDCCH, or an HARQ-ACK of a PDSCH scheduled by the first PDCCH.

In a possible embodiment of the present disclosure, the first UCI includes at least one of an HARQ-ACK, Channel State Information (CSI) or a Scheduling Request (SR); and/or the first UCI includes all or parts of pieces of UCI dropped by the terminal in the first time unit.

In a possible embodiment of the present disclosure, in the case that the terminal determines that the terminal supports or is configured with UCI retransmission, the first PDCCH includes the retransmission indication information.

In another aspect, the present disclosure provides in some embodiments a UCI reception method, including: transmitting, by a network device, a first PDCCH to a terminal, the first PDCCH including retransmission indication information; and receiving, by the network device, first UCI from the terminal in a second time unit, the first UCI being UCI dropped in a first time unit, the first time unit being a time unit determined in accordance with the retransmission indication information, and the second time unit being a time unit where uplink channel corresponding to the first PDCCH is transmitted.

In a possible embodiment of the present disclosure, a value range of the retransmission indication information includes a first indication state and a second indication state, the first indication state indicates that no UCI retransmission is to be performed, and the second indication state indicates that UCI retransmission is to be performed. The first time unit is determined in accordance with the retransmission indication information in the case that the retransmission indication information is in the second indication state.

In a possible embodiment of the present disclosure, the retransmission indication information is used to indicate an offset value, and the first time unit is determined in accordance with the offset value; or the retransmission indication information includes K bits, each bit corresponds to a sub-time period in a predefined time period, the first time unit includes one or more time units contained in a sub-time period corresponding to a bit having a first value in the K bits, K is an integer greater than or equal to 1, and one sub-time period includes at least one time unit; or the retransmission indication information includes K bits, each bit corresponds to a time unit in a predefined time period, the first time unit includes one or more time units corresponding to a bit having a first value in the K bits, and K is an integer greater than or equal to 1.

In a possible embodiment of the present disclosure, the determining the first time unit in accordance with the offset value includes: determining one or more time units before the time unit where the uplink channel scheduled by the first PDCCH is transmitted as the first time unit in accordance with the offset value and the time unit where the uplink channel scheduled by the first PDCCH is transmitted; or determining one or more time units before a time unit where the first PDCCH is transmitted as the first time unit in accordance with the offset value and the time unit where the first PDCCH is transmitted; or determining one or more time units before a time unit where a downlink shared channel scheduled by the first PDCCH is transmitted as the first time unit in accordance with the offset value and the time unit where the downlink shared channel scheduled by the first PDCCH is transmitted.

In a possible embodiment of the present disclosure, a unit of the offset value is determined with a definition of the first time unit as a reference; or the unit of the offset value is determined with a definition of the second time unit as a reference; or in the case that the definition of the first time unit is different from the definition of the second time unit, the unit of the offset value is determined with the definition of a time unit, with a larger time length between the first time unit and the second time unit, as a reference; or in the case that the definition of the first time unit is different from the definition of the second time unit, the unit of the offset value is determined with the definition of a time unit, with a smaller time length between the first time unit and the second time unit, as a reference; or the unit of the offset value is determined with the definition of the first time unit and the definition of the second time unit as a reference, or with the definition of any of the first time unit and the second time unit as a reference; wherein the definition of the first time unit is the same as the definition of the second time unit through pre-definition or configuration.

In a possible embodiment of the present disclosure, the predefined time period includes one of a predefined time period containing the first PDCCH transmission, a predefined time period before the first PDCCH transmission, a predefined time period containing uplink channel transmission scheduled by the first PDCCH, or a predefined time period before the uplink channel transmission scheduled by the first PDCCH; and/or a unit of a time unit corresponding to each bit or a unit of a sub-time period corresponding to each bit is determined with a definition of the first time unit as a reference; or a unit of the time unit corresponding to each bit or a unit of a sub-time period corresponding to each bit, is determined with a definition of the second time unit as a reference; or in the case that the definition of the first time unit is different from the definition of the second time unit, a unit of the time unit corresponding to each bit or a unit of a sub-time period corresponding to each bit, is determined with the definition of a time unit with a larger time length between the first time unit and the second time unit as a reference; or in the case that the definition of the first time unit is different from the definition of the second time unit, a unit of the time unit corresponding to each bit or a unit of a sub-time period corresponding to each bit, is determined with a time unit with a smaller time length between the first time unit and the second time unit as a reference; or a unit of the time unit corresponding to each bit or a unit of a sub-time period corresponding to each bit, is determined with the definition of the first time unit and the definition of the second time unit as a reference, or with the definition of any of the first time unit and the second time unit as a reference; wherein the definition of the first time unit is the same as the definition of the second time unit through pre-definition or configuration.

In a possible embodiment of the present disclosure, causes for dropping the first UCI include at least one of: that there is a conflict between an uplink channel carrying the first UCI and the other channel, the other channel having a priority level higher than the uplink channel carrying the first UCI; that all or parts of transmission resources for the uplink channel carrying the first UCI are contained in an uplink region which is notified to be ceased or cancelled through uplink cancellation indication signaling in the case that uplink cancellation is configured for the terminal; that there are symbols occupied by a downlink symbol or an SSB configured through high-layer signaling in a symbol set of the uplink channel carrying the first UCI; that a flexible symbol configured through high-layer signaling is contained in the symbol set of the uplink channel carrying the first UCI and there is a downlink transmission scheduled by a PDCCH on the flexible symbol, or the flexible symbol is indicated as a downlink symbol through indication information in DCI indicating a slot structure when the terminal is configured to detect the DCI indicating the slot structure; that the flexible symbol configured through high-layer signaling is contained in the symbol set of the uplink channel carrying the first UCI, the terminal is configured to detect the DCI indicating the slot structure but the terminal fails to receive the DCI indicating the slot structure; that a PUSCH carrying the first UCI is located in a region where uplink skipping is executed by the terminal; or that a CG PUSCH carrying the first UCI is ceased or cancelled due to the other PUSCH with DCI scheduling.

In a possible embodiment of the present disclosure, the definition of each of the first time unit and the second time unit includes one of at least one subframe, at least one slot, or at least one sub-slot; wherein the definition of the first time unit is the same as or different from the definition of the second time unit.

In a possible embodiment of the present disclosure, in the case that a plurality of first PDCCHs has been transmitted by the network device and one or more HARQ-ACKs for one or more PDSCHs scheduled by the plurality of first PDCCHs and/or for a SPS PDSCH release indicated by the plurality of first PDCCHs are transmitted in the second time unit, offset values indicated through retransmission indication information in the plurality of first PDCCHs are the same; or the offset values indicated through retransmission indication information in the plurality of first PDCCHs are different, and the first time unit is determined in accordance with a retransmission indication field in each first PDCCH in the plurality of first PDCCHs or a retransmission indication field in a last one of the plurality of first PDCCHs.

In a possible embodiment of the present disclosure, in the case that the first PDCCH includes a priority level indication field, a priority level of the first UCI is the same as or different from a priority level indicated in the priority level indication field, or the priority level of the first UCI is greater than or equal to the priority level indicated in the priority level indication field; or in the case that the first PDCCH does not include the priority level indication field, the priority level of the first UCI is the same as or different from a predefined priority level corresponding to DCI used by the first PDCCH, or the priority level of the first UCI is greater than or equal to the predefined priority level corresponding to the DCI used by the first PDCCH.

In a possible embodiment of the present disclosure, the first UCI is transmitted in the second time unit in accordance with a size and bits of the first UCI in the first time unit.

In a possible embodiment of the present disclosure, in the case that the other UCI does not need to be received by the network device in the second time unit, the receiving, by the network device, the first UCI from the terminal in the second time unit includes: when a PDSCH transmission is scheduled by the first PDCCH or an SPS PDSCH release is indicated by the first PDCCH, and an HARQ-ACK for the PDSCH or SPS PDSCH release is transmitted in the second time unit, receiving the first UCI on a PUCCH resource in the second time unit, the PUCCH resource being determined in accordance with the quantity of bits of the first UCI and a PUCCH resource indication field in the first PDCCH, or the PUCCH resource being determined in accordance with a PUCCH resource index corresponding to the first UCI in the first time unit, or the PUCCH resource being a resource preconfigured through high-layer signaling; or when a PUSCH is scheduled by the first PDCCH to be transmitted in the second time unit, receiving the first UCI on a PUSCH resource in the second time unit.

In a possible embodiment of the present disclosure, in the case that the first time unit includes a plurality of time units, the receiving, by the network device, the first UCI in the second time unit includes: determining that a plurality of pieces of first UCI dropped in the plurality of time units is cascaded to each other in a predetermined cascading order, and receiving the cascaded first UCI on a PUCCH resource in the second time unit, the PUCCH resource being determined in accordance with a PUCCH resource index in a target time unit in the plurality of time units corresponding to the first UCI in the target time unit, the target time unit being a first one of the plurality of time units, a last one of the plurality of time units or a time unit in the plurality of time units in which the PUCCH resource corresponding to the first UCI has a maximum capacity, or the PUCCH resource being determined in accordance with the quantity of bits of the cascaded first UCI and a PUCCH resource indication field in the first PDCCH, or the PUCCH resource being a resource preconfigured through high-layer signaling, the predetermined cascading order including at least one of a chronological order of the time units or an order of UCI types; or independently receiving the plurality of pieces of first UCI dropped in the plurality of time units on a plurality of PUCCH resources in the second time unit, the plurality of PUCCH resources being determined in accordance with a PUCCH resource index corresponding to each of the plurality of pieces of first UCI in a corresponding time unit within the plurality of time units.

In a possible embodiment of the present disclosure, in the case that second UCI needs to be received by the network device in the second time unit, the receiving, by the network device, the first UCI from the terminal in the second time unit includes: receiving the first UCI and the second UCI transmitted in a multiplexing manner through a same PUCCH resource, the PUCCH resource being determined in accordance with the total quantity of bits of the first UCI and the second UCI and a PUCCH resource indication field in the first PDCCH, or the PUCCH resource being a resource preconfigured through high-layer signaling; or when HARQ-ACK is contained in both the first UCI and the second UCI, determining that the second UCI is cascaded with the first UCI, and receiving the first UCI and the second UCI through a same PUCCH resource, the PUCCH resource being determined in accordance with the total quantity of bits of the first UCI and the second UCI and a PUCCH resource indication field in the first PDCCH, or the PUCCH resource being a resource preconfigured through high-layer signaling; or receiving the first UCI through a first PUCCH resource and receiving the second UCI through a second PUCCH resource, wherein the first PUCCH resource does not overlap with the second PUCCH resource in a time domain, the first PUCCH resource being determined in accordance with the quantity of bits of the first UCI and a PUCCH resource indication field in the first PDCCH, or the first PUCCH resource being determined in accordance with a PUCCH resource index corresponding to the first UCI in the first time unit, or the first PUCCH resource being a resource preconfigured through high-layer signaling; or determining a first PUCCH resource corresponding to the first UCI and a second PUCCH resource corresponding to the second UCI, receiving the first UCI through the first PUCCH resource and receiving the second UCI through the second PUCCH resource when the first PUCCH resource does not overlap with the second PUCCH resource in a time domain, and receiving the first UCI and the second UCI transmitted in a multiplexing manner through a same PUCCH resource when the first PUCCH resource overlaps with the second PUCCH resource in the time domain, the first PUCCH resource being determined in accordance with the quantity of bits of the first UCI and a PUCCH resource indication field in the first PDCCH, or the first PUCCH resource being determined in accordance with a PUCCH resource index corresponding to the first UCI in the first time unit, or the first PUCCH resource being a resource preconfigured through high-layer signaling.

In a possible embodiment of the present disclosure, a type of the first UCI is the same as or different from a type of the second UCI, and the second UCI includes at least one of an HARQ-ACK of the first PDCCH, or an HARQ-ACK of a PDSCH scheduled by the first PDCCH.

In a possible embodiment of the present disclosure, the first UCI includes at least one of an HARQ-ACK, CSI or an SR; and/or the first UCI includes all or parts of pieces of UCI dropped by the terminal in the first time unit.

In a possible embodiment of the present disclosure, in the case that the network device determines that the terminal supports or is configured with UCI retransmission, the first PDCCH includes the retransmission indication information.

In yet another aspect, the present disclosure provides in some embodiments a terminal, including a memory, a transceiver and a processor. The memory is configured to store therein a computer program. The transceiver is configured to transmit and receive data under the control of the processor. The processor is configured to read the computer program in the memory so as to: receive a first PDCCH, the first PDCCH including a retransmission indication information; determine a first time unit in accordance with the retransmission indication information; and transmit first UCI in a second time unit, the first UCI being UCI dropped in the first time unit, the second time unit being a time unit where uplink channel corresponding to the first PDCCH is transmitted.

In a possible embodiment of the present disclosure, a value range of the retransmission indication information includes a first indication state and a second indication state, the first indication state indicates that no UCI retransmission is to be performed, and the second indication state indicates that UCI retransmission is to be performed. The determining the first time unit in accordance with the retransmission indication information includes determining the first time unit in accordance with the retransmission indication information in the case that the retransmission indication information is in the second indication state.

In a possible embodiment of the present disclosure, the retransmission indication information is used to indicate an offset value, and the terminal determines the first time unit in accordance with the offset value; or the retransmission indication information includes K bits, each bit corresponds to a sub-time period in a predefined time period, the first time unit includes one or more time units contained in a sub-time period corresponding to a bit having a first value in the K bits, K is an integer greater than or equal to 1, and one sub-time period includes at least one time unit; or the retransmission indication information includes K bits, each bit corresponds to a time unit in a predefined time period, the first time unit includes one or more time units corresponding to a bit having a first value in the K bits, and K is an integer greater than or equal to 1.

In a possible embodiment of the present disclosure, the determining the first time unit in accordance with the offset value includes: determining one or more time units before the time unit where the uplink channel scheduled by the first PDCCH is transmitted as the first time unit in accordance with the offset value and the time unit where the uplink channel scheduled by the first PDCCH is transmitted; or determining one or more time units before a time unit where the first PDCCH is transmitted as the first time unit in accordance with the offset value and the time unit where the first PDCCH is transmitted; or determining one or more time units before a time unit where a downlink shared channel scheduled by the first PDCCH is transmitted as the first time unit in accordance with the offset value and the time unit where the downlink shared channel scheduled by the first PDCCH is transmitted.

In a possible embodiment of the present disclosure, a unit of the offset value is determined with a definition of the first time unit as a reference; or the unit of the offset value is determined with a definition of the second time unit as a reference; or in the case that the definition of the first time unit is different from the definition of the second time unit, the unit of the offset value is determined with the definition of a time unit, with a larger time length between the first time unit and the second time unit, as a reference; or in the case that the definition of the first time unit is different from the definition of the second time unit, the unit of the offset value is determined with the definition of a time unit, with a smaller time length between the first time unit and the second time unit, as a reference; or the unit of the offset value is determined with the definition of the first time unit and the definition of the second time unit as a reference, or with the definition of any of the first time unit and the second time unit as a reference; wherein the definition of the first time unit is the same as the definition of the second time unit through pre-definition or configuration.

In a possible embodiment of the present disclosure, the predefined time period includes one of a predefined time period containing the first PDCCH transmission, a predefined time period before the first PDCCH transmission, a predefined time period containing uplink channel transmission scheduled by the first PDCCH, or a predefined time period before the uplink channel transmission scheduled by the first PDCCH; and/or a unit of a time unit corresponding to each bit or a unit of a sub-time period corresponding to each bit is determined with a definition of the first time unit as a reference; or a unit of the time unit corresponding to each bit or a unit of a sub-time period corresponding to each bit, is determined with a definition of the second time unit as a reference; or in the case that the definition of the first time unit is different from the definition of the second time unit, a unit of the time unit corresponding to each bit or a unit of a sub-time period corresponding to each bit, is determined with the definition of a time unit with a larger time length between the first time unit and the second time unit as a reference; or in the case that the definition of the first time unit is different from the definition of the second time unit, a unit of the time unit corresponding to each bit or a unit of a sub-time period corresponding to each bit, is determined with a time unit with a smaller time length between the first time unit and the second time unit as a reference; or a unit of the time unit corresponding to each bit or a unit of a sub-time period corresponding to each bit, is determined with the definition of the first time unit and the definition of the second time unit as a reference, or with the definition of any of the first time unit and the second time unit as a reference; wherein the definition of the first time unit is the same as the definition of the second time unit through pre-definition or configuration.

In a possible embodiment of the present disclosure, causes for dropping the first UCI include at least one of: that there is a conflict between an uplink channel carrying the first UCI and the other channel, the other channel having a priority level higher than the uplink channel carrying the first UCI; that all or parts of transmission resources for the uplink channel carrying the first UCI are contained in an uplink region which is notified to be ceased or cancelled through uplink cancellation indication signaling in the case that uplink cancellation is configured for the terminal; that there are symbols occupied by a downlink symbol or a Synchronization Signal Block (SSB) configured through high-layer signaling in a symbol set of the uplink channel carrying the first UCI; that a flexible symbol configured through high-layer signaling is contained in the symbol set of the uplink channel carrying the first UCI and there is a downlink transmission scheduled by a PDCCH on the flexible symbol, or the flexible symbol is indicated as a downlink symbol through indication information in DCI indicating a slot structure when the terminal is configured to detect the DCI indicating the slot structure; that the flexible symbol configured through high-layer signaling is contained in the symbol set of the uplink channel carrying the first UCI, the terminal is configured to detect the DCI indicating the slot structure but the terminal fails to receive the DCI indicating the slot structure; that a PUSCH carrying the first UCI is located in a region where uplink skipping is executed by the terminal; or that a CG PUSCH carrying the first UCI is ceased or cancelled due to the other PUSCH with DCI scheduling.

In a possible embodiment of the present disclosure, the definition of each of the first time unit and the second time unit includes one of at least one subframe, at least one slot, or at least one sub-slot; wherein the definition of the first time unit is the same as or different from the definition of the second time unit.

In a possible embodiment of the present disclosure, in the case that a plurality of first PDCCHs has been received by the terminal and one or more HARQ-ACKs for one or more PDSCHs scheduled by the plurality of first PDCCHs and/or for a SPS PDSCH release indicated by the plurality of first PDCCHs are transmitted in the second time unit, offset values indicated through retransmission indication information in the plurality of first PDCCHs are the same; or the offset values indicated through retransmission indication information in the plurality of first PDCCHs are different, and the first time unit is determined in accordance with a retransmission indication field in each first PDCCH in the plurality of first PDCCHs or a retransmission indication field in a last one of the plurality of first PDCCHs.

In a possible embodiment of the present disclosure, in the case that the first PDCCH includes a priority level indication field, a priority level of the first UCI is the same as or different from a priority level indicated in the priority level indication field, or the priority level of the first UCI is greater than or equal to the priority level indicated in the priority level indication field; or in the case that the first PDCCH does not include the priority level indication field, the priority level of the first UCI is the same as or different from a predefined priority level corresponding to DCI used by the first PDCCH, or the priority level of the first UCI is greater than or equal to the predefined priority level corresponding to the DCI used by the first PDCCH.

In a possible embodiment of the present disclosure, the transmitting the first UCI in the second time unit includes transmitting the first UCI in the second time unit in accordance with a size and bits of the first UCI in the first time unit.

In a possible embodiment of the present disclosure, in the case that the other UCI is not transmitted by the terminal in the second time unit, the transmitting the first UCI in the second time unit includes: when a PDSCH transmission is scheduled by the first PDCCH or an SPS PDSCH release is indicated by the first PDCCH, and an HARQ-ACK for the PDSCH or SPS PDSCH release is transmitted in the second time unit, transmitting the first UCI on a PUCCH resource in the second time unit, the PUCCH resource being determined in accordance with the quantity of bits of the first UCI and a PUCCH resource indication field in the first PDCCH, or the PUCCH resource being determined in accordance with a PUCCH resource index corresponding to the first UCI in the first time unit, or the PUCCH resource being a resource preconfigured through high-layer signaling; or when a PUSCH is scheduled by the first PDCCH to be transmitted in the second time unit, transmitting the first UCI on a PUSCH resource in the second time unit.

In a possible embodiment of the present disclosure, in the case that the first time unit includes a plurality of time units, the processor is further configured to: cascade a plurality of pieces of first UCI dropped in the plurality of time units to each other in a predetermined cascading order, and transmit the cascaded first UCI on a PUCCH resource in the second time unit, the PUCCH resource being determined in accordance with a PUCCH resource index in a target time unit in the plurality of time units corresponding to the first UCI in the target time unit, the target time unit being a first one of the plurality of time units, a last one of the plurality of time units or a time unit in the plurality of time units in which the PUCCH resource corresponding to the first UCI has a maximum capacity, or the PUCCH resource being determined in accordance with the quantity of bits of the cascaded first UCI and a PUCCH resource indication field in the first PDCCH, or the PUCCH resource being a resource preconfigured through high-layer signaling, the predetermined cascading order including at least one of a chronological order of the time units or an order of UCI types; or independently transmit the plurality of pieces of first UCI dropped in the plurality of time units on a plurality of PUCCH resources in the second time unit, the plurality of PUCCH resources being determined in accordance with a PUCCH resource index corresponding to each of the plurality of pieces of first UCI in a corresponding time unit within the plurality of time units.

In a possible embodiment of the present disclosure, in the case that second UCI is transmitted by the terminal in the second time unit, the transmitting the first UCI in the second time unit includes: transmitting the first UCI and the second UCI in a multiplexing manner through a same PUCCH resource, the PUCCH resource being determined in accordance with the total quantity of bits of the first UCI and the second UCI and a PUCCH resource indication field in the first PDCCH, or the PUCCH resource being a resource preconfigured through high-layer signaling; or when HARQ-ACK is contained in both the first UCI and the second UCI, cascading the second UCI with the first UCI, and transmitting the first UCI and the second UCI through a same PUCCH resource, the PUCCH resource being determined in accordance with the total quantity of bits of the first UCI and the second UCI and a PUCCH resource indication field in the first PDCCH, or the PUCCH resource being a resource preconfigured through high-layer signaling; or transmitting the first UCI through a first PUCCH resource and transmitting the second UCI through a second PUCCH resource, wherein the first PUCCH resource does not overlap with the second PUCCH resource in a time domain, the first PUCCH resource being determined in accordance with the quantity of bits of the first UCI and a PUCCH resource indication field in the first PDCCH, or the first PUCCH resource being determined in accordance with a PUCCH resource index corresponding to the first UCI in the first time unit, or the first PUCCH resource being a resource preconfigured through high-layer signaling; or determining a first PUCCH resource corresponding to the first UCI and a second PUCCH resource corresponding to the second UCI, transmitting the first UCI through the first PUCCH resource and transmitting the second UCI through the second PUCCH resource when the first PUCCH resource does not overlap with the second PUCCH resource in a time domain, and transmitting the first UCI and the second UCI in a multiplexing manner through a same PUCCH resource when the first PUCCH resource overlaps with the second PUCCH resource in the time domain, the first PUCCH resource being determined in accordance with the quantity of bits of the first UCI and a PUCCH resource indication field in the first PDCCH, or the first PUCCH resource being determined in accordance with a PUCCH resource index corresponding to the first UCI in the first time unit, or the first PUCCH resource being a resource preconfigured through high-layer signaling.

In a possible embodiment of the present disclosure, a type of the first UCI is the same as or different from a type of the second UCI, and the second UCI includes at least one of an HARQ-ACK of the first PDCCH, or an HARQ-ACK of a PDSCH scheduled by the first PDCCH.

In a possible embodiment of the present disclosure, the first UCI includes at least one of an HARQ-ACK, CSI or an SR; and/or the first UCI includes all or parts of pieces of UCI dropped by the terminal in the first time unit.

In a possible embodiment of the present disclosure, in the case that the processor determines that the terminal supports or is configured with UCI retransmission, the first PDCCH includes the retransmission indication information.

In still yet another aspect, the present disclosure provides in some embodiments a network device, including a memory, a transceiver and a processor. The memory is configured to store therein a computer program. The transceiver is configured to transmit and receive data under the control of the processor. The processor is configured to read the computer program in the memory, so as to: transmit a first PDCCH to a terminal, the first PDCCH including retransmission indication information; and receive first UCI from the terminal in a second time unit, the first UCI being UCI dropped in a first time unit, the first time unit being a time unit determined in accordance with the retransmission indication information, and the second time unit being a time unit where uplink channel corresponding to the first PDCCH is transmitted.

In a possible embodiment of the present disclosure, a value range of the retransmission indication information includes a first indication state and a second indication state, the first indication state indicates that no UCI retransmission is to be performed, and the second indication state indicates that UCI retransmission is to be performed. The first time unit is determined in accordance with the retransmission indication information in the case that the retransmission indication information is in the second indication state.

In a possible embodiment of the present disclosure, the retransmission indication information is used to indicate an offset value, and the first time unit is determined in accordance with the offset value; or the retransmission indication information includes K bits, each bit corresponds to a sub-time period in a predefined time period, the first time unit includes one or more time units contained in a sub-time period corresponding to a bit having a first value in the K bits, K is an integer greater than or equal to 1, and one sub-time period includes at least one time unit; or the retransmission indication information includes K bits, each bit corresponds to a time unit in a predefined time period, the first time unit includes one or more time units corresponding to a bit having a first value in the K bits, and K is an integer greater than or equal to 1.

In a possible embodiment of the present disclosure, the determining the first time unit in accordance with the offset value includes: determining one or more time units before the time unit where the uplink channel scheduled by the first PDCCH is transmitted as the first time unit in accordance with the offset value and the time unit where the uplink channel scheduled by the first PDCCH is transmitted; or determining one or more time units before a time unit where the first PDCCH is transmitted as the first time unit in accordance with the offset value and the time unit where the first PDCCH is transmitted; or determining one or more time units before a time unit where a downlink shared channel scheduled by the first PDCCH is transmitted as the first time unit in accordance with the offset value and the time unit where the downlink shared channel scheduled by the first PDCCH is transmitted.

In a possible embodiment of the present disclosure, a unit of the offset value is determined with a definition of the first time unit as a reference; or the unit of the offset value is determined with a definition of the second time unit as a reference; or in the case that the definition of the first time unit is different from the definition of the second time unit, the unit of the offset value is determined with the definition of a time unit, with a larger time length between the first time unit and the second time unit, as a reference; or in the case that the definition of the first time unit is different from the definition of the second time unit, the unit of the offset value is determined with the definition of a time unit, with a smaller time length between the first time unit and the second time unit, as a reference; or the unit of the offset value is determined with the definition of the first time unit and the definition of the second time unit as a reference, or with the definition of any of the first time unit and the second time unit as a reference; wherein the definition of the first time unit is the same as the definition of the second time unit through pre-definition or configuration.

In a possible embodiment of the present disclosure, the predefined time period includes one of a predefined time period containing the first PDCCH transmission, a predefined time period before the first PDCCH transmission, a predefined time period containing uplink channel transmission scheduled by the first PDCCH, or a predefined time period before the uplink channel transmission scheduled by the first PDCCH; and/or a unit of a time unit corresponding to each bit or a unit of a sub-time period corresponding to each bit is determined with a definition of the first time unit as a reference; or a unit of the time unit corresponding to each bit or a unit of a sub-time period corresponding to each bit, is determined with a definition of the second time unit as a reference; or in the case that the definition of the first time unit is different from the definition of the second time unit, a unit of the time unit corresponding to each bit or a unit of a sub-time period corresponding to each bit, is determined with the definition of a time unit with a larger time length between the first time unit and the second time unit as a reference; or in the case that the definition of the first time unit is different from the definition of the second time unit, a unit of the time unit corresponding to each bit or a unit of a sub-time period corresponding to each bit, is determined with a time unit with a smaller time length between the first time unit and the second time unit as a reference; or a unit of the time unit corresponding to each bit or a unit of a sub-time period corresponding to each bit, is determined with the definition of the first time unit and the definition of the second time unit as a reference, or with the definition of any of the first time unit and the second time unit as a reference; wherein the definition of the first time unit is the same as the definition of the second time unit through pre-definition or configuration.

In a possible embodiment of the present disclosure, causes for dropping the first UCI include at least one of: that there is a conflict between an uplink channel carrying the first UCI and the other channel, the other channel having a priority level higher than the uplink channel carrying the first UCI; that all or parts of transmission resources for the uplink channel carrying the first UCI are contained in an uplink region which is notified to be ceased or cancelled through uplink cancellation indication signaling in the case that uplink cancellation is configured for the terminal; that there are symbols occupied by a downlink symbol or an SSB configured through high-layer signaling in a symbol set of the uplink channel carrying the first UCI; that a flexible symbol configured through high-layer signaling is contained in the symbol set of the uplink channel carrying the first UCI and there is a downlink transmission scheduled by a PDCCH on the flexible symbol, or the flexible symbol is indicated as a downlink symbol through indication information in DCI indicating a slot structure when the terminal is configured to detect the DCI indicating the slot structure; that the flexible symbol configured through high-layer signaling is contained in the symbol set of the uplink channel carrying the first UCI, the terminal is configured to detect the DCI indicating the slot structure but the terminal fails to receive the DCI indicating the slot structure; that a PUSCH carrying the first UCI is located in a region where uplink skipping is executed by the terminal; or that a CG PUSCH carrying the first UCI is ceased or cancelled due to the other PUSCH with DCI scheduling.

In a possible embodiment of the present disclosure, the definition of each of the first time unit and the second time unit includes one of at least one subframe, at least one slot, or at least one sub-slot; wherein the definition of the first time unit is the same as or different from the definition of the second time unit.

In a possible embodiment of the present disclosure, in the case that a plurality of first PDCCHs has been transmitted by the network device and one or more HARQ-ACKs for one or more PDSCHs scheduled by the plurality of first PDCCHs and/or for a SPS PDSCH release indicated by the plurality of first PDCCHs are transmitted in the second time unit, offset values indicated through retransmission indication information in the plurality of first PDCCHs are the same; or the offset values indicated through retransmission indication information in the plurality of first PDCCHs are different, and the first time unit is determined in accordance with a retransmission indication field in each first PDCCH in the plurality of first PDCCHs or a retransmission indication field in a last one of the plurality of first PDCCHs.

In a possible embodiment of the present disclosure, in the case that the first PDCCH includes a priority level indication field, a priority level of the first UCI is the same as or different from a priority level indicated in the priority level indication field, or the priority level of the first UCI is greater than or equal to the priority level indicated in the priority level indication field; or in the case that the first PDCCH does not include the priority level indication field, the priority level of the first UCI is the same as or different from a predefined priority level corresponding to DCI used by the first PDCCH, or the priority level of the first UCI is greater than or equal to the predefined priority level corresponding to the DCI used by the first PDCCH.

In a possible embodiment of the present disclosure, the first UCI is transmitted in the second time unit in accordance with a size and bits of the first UCI in the first time unit.

In a possible embodiment of the present disclosure, in the case that the other UCI does not need to be received by the network device in the second time unit, the receiving, by the network device, the first UCI from the terminal in the second time unit includes: when a PDSCH transmission is scheduled by the first PDCCH or an SPS PDSCH release is indicated by the first PDCCH, and an HARQ-ACK for the PDSCH or SPS PDSCH release is transmitted in the second time unit, receiving the first UCI on a PUCCH resource in the second time unit, the PUCCH resource being determined in accordance with the quantity of bits of the first UCI and a PUCCH resource indication field in the first PDCCH, or the PUCCH resource being determined in accordance with a PUCCH resource index corresponding to the first UCI in the first time unit, or the PUCCH resource being a resource preconfigured through high-layer signaling; or when a PUSCH is scheduled by the first PDCCH to be transmitted in the second time unit, receiving the first UCI on a PUSCH resource in the second time unit.

In a possible embodiment of the present disclosure, in the case that the first time unit includes a plurality of time units, the processor is configured to read the computer program so as to: determine that a plurality of pieces of first UCI dropped in the plurality of time units is cascaded to each other in a predetermined cascading order, and receive the cascaded first UCI on a PUCCH resource in the second time unit, the PUCCH resource being determined in accordance with a PUCCH resource index in a target time unit in the plurality of time units corresponding to the first UCI in the target time unit, the target time unit being a first one of the plurality of time units, a last one of the plurality of time units or a time unit in the plurality of time units in which the PUCCH resource corresponding to the first UCI has a maximum capacity, or the PUCCH resource being determined in accordance with the quantity of bits of the cascaded first UCI and a PUCCH resource indication field in the first PDCCH, or the PUCCH resource being a resource preconfigured through high-layer signaling, the predetermined cascading order including at least one of a chronological order of the time units or an order of UCI types; or independently receive the plurality of pieces of first UCI dropped in the plurality of time units on a plurality of PUCCH resources in the second time unit, the plurality of PUCCH resources being determined in accordance with a PUCCH resource index corresponding to each of the plurality of pieces of first UCI in a corresponding time unit within the plurality of time units.

In a possible embodiment of the present disclosure, in the case that second UCI needs to be received by the network device in the second time unit, the receiving the first UCI from the terminal in the second time unit includes: receiving the first UCI and the second UCI transmitted in a multiplexing manner through a same PUCCH resource, the PUCCH resource being determined in accordance with the total quantity of bits of the first UCI and the second UCI and a PUCCH resource indication field in the first PDCCH, or the PUCCH resource being a resource preconfigured through high-layer signaling; or when HARQ-ACK is contained in both the first UCI and the second UCI, determining that the second UCI is cascaded with the first UCI, and receiving the first UCI and the second UCI through a same PUCCH resource, the PUCCH resource being determined in accordance with the total quantity of bits of the first UCI and the second UCI and a PUCCH resource indication field in the first PDCCH, or the PUCCH resource being a resource preconfigured through high-layer signaling; or receiving the first UCI through a first PUCCH resource and receiving the second UCI through a second PUCCH resource, wherein the first PUCCH resource does not overlap with the second PUCCH resource in a time domain, the first PUCCH resource being determined in accordance with the quantity of bits of the first UCI and a PUCCH resource indication field in the first PDCCH, or the first PUCCH resource being determined in accordance with a PUCCH resource index corresponding to the first UCI in the first time unit, or the first PUCCH resource being a resource preconfigured through high-layer signaling; or determining a first PUCCH resource corresponding to the first UCI and a second PUCCH resource corresponding to the second UCI, receiving the first UCI through the first PUCCH resource and receiving the second UCI through the second PUCCH resource when the first PUCCH resource does not overlap with the second PUCCH resource in a time domain, and receiving the first UCI and the second UCI transmitted in a multiplexing manner through a same PUCCH resource when the first PUCCH resource overlaps with the second PUCCH resource in the time domain, the first PUCCH resource being determined in accordance with the quantity of bits of the first UCI and a PUCCH resource indication field in the first PDCCH, or the first PUCCH resource being determined in accordance with a PUCCH resource index corresponding to the first UCI in the first time unit, or the first PUCCH resource being a resource preconfigured through high-layer signaling.

In a possible embodiment of the present disclosure, a type of the first UCI is the same as or different from a type of the second UCI, and the second UCI includes at least one of an HARQ-ACK of the first PDCCH, or an HARQ-ACK of a PDSCH scheduled by the first PDCCH.

In a possible embodiment of the present disclosure, the first UCI includes at least one of an HARQ-ACK, CSI or an SR; and/or the first UCI includes all or parts of pieces of UCI dropped by the terminal in the first time unit.

In a possible embodiment of the present disclosure, in the case that the processor determines that the terminal supports or is configured with UCI retransmission, the first PDCCH includes the retransmission indication information.

In still yet another aspect, the present disclosure provides in some embodiments a terminal, including: a reception unit configured to receive a first PDCCH, the first PDCCH including a retransmission indication information; a determination unit configured to determine a first time unit in accordance with the retransmission indication information; and a transmission unit configured to transmit first UCI in a second time unit, the first UCI being UCI dropped in the first time unit, the second time unit being a time unit where uplink channel corresponding to the first PDCCH is transmitted.

In still yet another aspect, the present disclosure provides in some embodiments a network device, including: a transmission unit configured to transmit a first PDCCH to a terminal, the first PDCCH including a retransmission indication information; and a reception unit configured to receive first UCI from the terminal in a second time unit, the first UCI being UCI dropped in a first time unit, the first time unit being determined in accordance with the retransmission indication information, the second time unit being a time unit where uplink channel corresponding to the first PDCCH is transmitted.

In still yet another aspect, the present disclosure provides in some embodiments a processor-readable storage medium storing therein a computer program. The computer program is executed by a processor so as to implement the above-mentioned UCI transmission method or the above-mentioned UCI reception method.

According to the embodiments of the present disclosure, the terminal receives the first PDCCH including the retransmission indication information therein, determines the first time unit in accordance with the retransmission indication information, and transmits the first UCI in the second time unit. The first UCI is UCI dropped in the first time unit, and the second time unit is a time unit where uplink channel transmission corresponding to the PDCCH is performed. As a result, it is able to retransmit the first UCI, and prevent the occurrence of such problems that the downlink retransmission is performed unnecessarily (e.g., in the case that the HARQ-ACK is dropped), the scheduling is not optimum (e.g., in the case that the CSI is dropped) and the uplink scheduling is not performed in time (e.g., in the case that the SR is dropped) when the first UCI is dropped and the network device does not obtain the UCI in time, thereby to improve the working efficiency of the communication system.

### BRIEF DESCRIPTION OF THE DRAWINGS

FIG. 1A is a schematic view showing applicable network architecture according to one embodiment of the present disclosure;
FIG. 1B is a schematic view showing downlink scheduling timing and HARQ-ACK feedback timing according to one embodiment of the present disclosure;
FIG. 1C is a schematic view showing a detection occasion for a dynamic codebook according to one embodiment of the present disclosure;
FIG. 1D is a schematic view showing the dynamic codebook according to one embodiment of the present disclosure,
FIG. 1E is a schematic view showing a downlink transmission occasion according to one embodiment of the present disclosure;
FIG. 1F is a schematic view showing the HARQ-ACK feedback timing according to one embodiment of the present disclosure;
FIG. 2 is a flow chart of a UCI transmission method according to one embodiment of the present disclosure;
FIG. 3 is a flow chart of a UCI reception method according to one embodiment of the present disclosure;
FIG. 4 is a schematic view showing UCI retransmission according to one embodiment of the present disclosure;
FIG. 5 is another schematic view showing the UCI retransmission according to one embodiment of the present disclosure;
FIG. 6 is a block diagram of a terminal according to one embodiment of the present disclosure;
FIG. 7 is a block diagram of a network device according to one embodiment of the present disclosure;
FIG. 8 is another block diagram of the terminal according to one embodiment of the present disclosure; and
FIG. 9 is another block diagram of the network device according to one embodiment of the present disclosure.

### DETAILED DESCRIPTION

In order to make the objects, the technical solutions and the advantages of the present disclosure more apparent, the present disclosure will be described hereinafter in a clear and complete manner in conjunction with the drawings and embodiments.

The expression "and/or" is merely used to describe the relationship between objects, and it includes three relationships. For example, "A and/or B" may represent that, there is only A, there are both A and B, and there is only B. Further, the symbol "/" usually refers to "and/or".

The expression "a plurality of" refers to two or more, and the other quantifiers are similar.

In order to make the objects, the technical solutions and the advantages of the present disclosure more apparent, the present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

An object of the present disclosure is to provide a UCI transmission method, a UCI reception method, a terminal and a network device, so as to solve the problem in the related art where the working efficiency of the communication system is relatively low.

Methods and devices are based on a same inventive concept, and a principle of the method for solving the problem is similar to that of the corresponding device, so the implementation of the device may refer to that of the method, which will not be particularly defined.

Schemes in the embodiments of the present disclosure may be applied to various systems, e.g., Global System of Mobile communication (GSM), Code Division Multiple Access (CDMA) system, Wideband Code Division Multiple Access (WCDMA) system, General Packet Radio Service (GPRS) system, Long Term Evolution (LTE) system, LTE Frequency Division Duplexing (FDD) system, LTE Time Division Duplexing (TDD) system, Long Term Evolution Advanced (LTE-A) system, Universal Mobile Telecommunication System (UMTS), Worldwide Interoperability for Microwave Access (WiMAX) system, 5^{th}-Generation (5G) New Radio (NR) system, or 6^{th}-Generation (6G) system. Each of these systems includes a terminal device and a network device. Each system further includes a core network part, e.g., an Evolved Packet System (EPS) or 5G system (5GS).

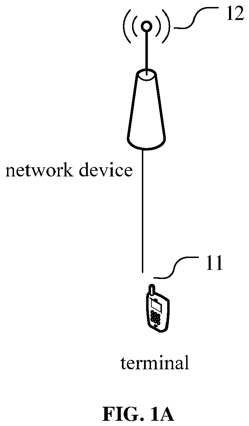

FIG. 1A shows applicable network architecture. As shown in FIG. 1A, the network architecture includes a terminal 11 and a network device 12.

The terminal involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as User Equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocketsized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, remote terminal, access terminal, user terminal, user agent or user device, which will not be particularly defined herein.

The network device involved in the embodiments of the present disclosure may be a base station which includes a plurality of cells providing services for the terminal. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the GSM or CDMA system, a NodeB in the WCDMA system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

Multi Input Multi Output (MIMO transmission is performed between the network device and the terminal each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

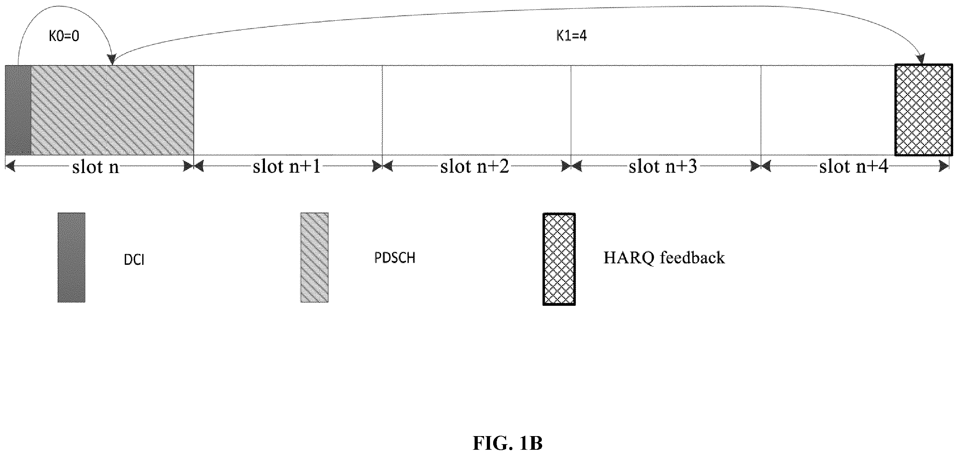

A flexible timing relationship is supported in a wireless communication system (e.g., 5^{th}-Generation New Radio Access Technology (RAT) (5G NR)). For a PDCCH whose scheduling information is carried by a PDSCH, it indicates a scheduling timing (i.e., K0) between the PDSCH and the PDCCH as well as an HARQ-ACK timing (i.e., K1) between the PDSCH and a corresponding HARQ-ACK. To be specific, a time-domain resource assignment indication field in a DCI format used by the PDCCH indicates a slot offset K0 between a slot where the PDSCH is located and a slot where DCI is located, and a timing indication field in the DCI format indicates the quantity K1 of slots between a time point when the PDSCH is ended and a time point when the HARQ-ACK is started, i.e., the HARQ-ACK transmission is performed in a slot n+K1 for the PDSCH transmitted in a slot n, as shown in FIG. 1B. A universal set of K1 is {0,1,2,3,4,5,6,7,8,9,10,11,12,13,14,15}, and usually at most 8 values are configured for the terminal. In some protocol versions, a value of K1 is in unit of slot, i.e., K1=1 represents that an interval is one slot. In some other protocol versions No. 6, the value of K1 is in a unit of slot or sub-slot, and the sub-slot is preconfigured with a length of two symbols (i.e., there are seven consecutive sub-slots in one slot) or seven symbols (there are two consecutive sub-slots in one slot).

It should be appreciated that, the description is given in the embodiments of the present disclosure on the basis of the 5G NR system, but the schemes in the embodiments of the present disclosure may be applied to any system other than the 5G NR system, e.g., a 6G system.

In the embodiments of the present disclosure, UCI includes such information as HARQ-ACK, CSI and SR. The HARQ-ACK includes both ACKnowledgement (ACK) and Non-ACKnowledgement (NACK), and it is used to notify the network device whether the PDSCH or the PDCCH indicating SPS PDSCH release has been received correctly with respect to the PDSCH or the PDCCH indicating the SPS resource release (also called as SPS PDSCH release). The CSI is used to feed back downlink channel quality, so as to help the network device to perform downlink scheduling in a better manner, e.g., a Modulation and Coding Scheme (MCS) or an appropriate Resource Block (RB) resource is configured in accordance with the CSI. The SR is used to request the network device for a PUSCH transmission resource carrying an uplink service when the uplink service needs to be transmitted by the terminal.

The UCI is transmitted on the PUCCH. The HARQ-ACK is transmitted on symbols in a slot or sub-slot determined in accordance with K1 notified through the DCI or K1 preconfigured through high-layer signaling when the DCI does not include an indication field indicating K1 (specific symbol positions of a PUCCH are obtained in accordance with relevant parameters in PUCCH resources indicated through a PUCCH resource indication field in the DCI). Especially, the PUCCH resources for transmitting the HARQ-ACK for the SPS PDSCH are obtained in accordance with PUCCH resources preconfigured for the SPS PDSCH through high-layer signaling. For a periodic CSI and a periodic SR, the PUCCH resources are preconfigured through high-layer signaling, and a transmission occasion is a fixed symbol position in a fixed slot determined in accordance with a periodicity and an offset value preconfigured through high-layer signaling. When there is a conflict between the PUCCH carrying the UCI and a PUSCH in a time domain (e.g., the PUCCH and the PUSCH overlap each other in the time domain on a same carrier or different carriers) and a specific condition has been met (e.g., a time condition for multiplexing transmission), the UCI on the PUCCH is transmitted on the PUSCH, and the PUCCH is not transmitted any more, so as to prevent the PUCCH and the PUSCH from being transmitted simultaneously. Hence, in some cases, the PUSCH may also carry the UCI thereon.

Two generation modes of HARQ-ACK codebooks, i.e., semi-static and dynamic, are supported in the 5G NR system. The so-called HARQ-ACK codebook is an HARQ-ACK feedback sequence generated with respect to downlink transmission for the HARQ-ACK feedback at a same time-domain position or on a same uplink channel.

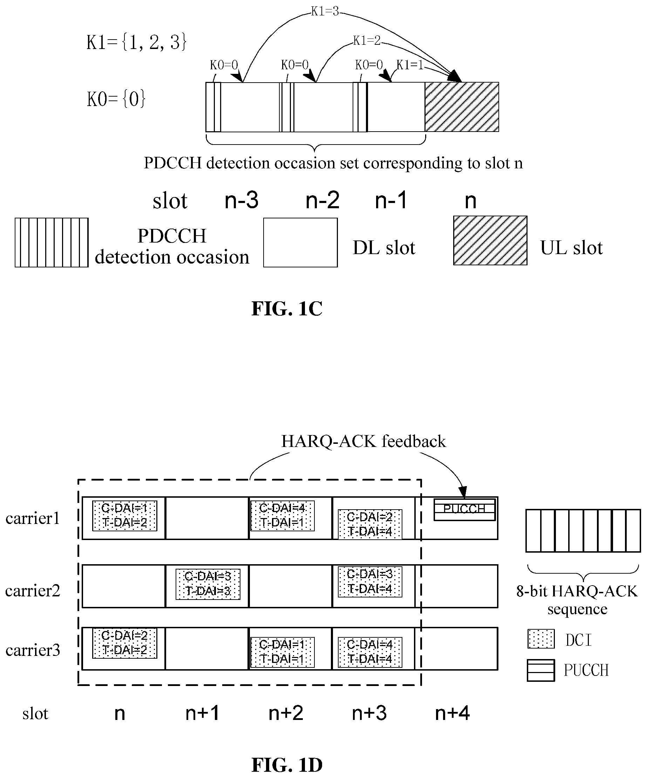

For the dynamic HARQ-ACK codebook, HARQ-ACKs are ranked in accordance with indication in a Counter-Downlink Assignment Index (C-DAI) field in Downlink (DL) DCI, and the total quantity of bits of the dynamic HARQ-ACK codebook is determined in accordance with a Total-DAI (T-DAI) field. Hence, a size of the HARQ-ACK codebook may be adjusted at different feedback time points in accordance with actual scheduling, so as to dynamically change the size of the cookbook, thereby to reduce an HARQ-ACK feedback overhead. However, it is necessary to prevent the occurrence of packet losses on a plurality of carriers simultaneously at a last scheduling time point. When the packet loss occurs for the DCI as a whole at the last time point, it is impossible for the terminal to obtain the correct T-DAI. To be specific, a PDCCH Monitoring Occasion (MO) corresponding to an activated BandWidth Part (BWP) on a carrier needs first to be determined in accordance with K1, K0 and configured retransmission times (if configured). As shown in FIG. 1C, for simplicity, it is presumed that no retransmission is performed, i.e., a downlink transmission occasion may be found in accordance with n-K1 and a corresponding PDCCH MO may be found in accordance with a scheduling relationship (K0) of the downlink transmission occasion. When the quantity of retransmission times is greater than 1, K0 for the retransmitted PDSCH is determined in accordance with a first slot in a plurality of slots occupied by the retransmission of the PDSCH, and K1 for the retransmitted PDSCH is determined in accordance with a last slot in the plurality of slots occupied by the retransmission of the PDSCH. It means that, N slots in downlink slots n-K1 to n-K1-N are a group slots for the retransmission of the PDSCH, and for the group of slots, a PDCCH MO determined in accordance with K0 is a PDCCH MO corresponding to the slot n-K1-N. It is presumed that K0 is always 0 (actually, K0 may have different values, and when K0 have a plurality of values, a plurality of PDCCH MOs may be determined with respect to a downlink slot corresponding to n-K1), and each slot may also include a plurality of PDCCH MOs. In the case of carrier aggregation, a universal set of PDCCH MOs corresponding to all the carriers is obtained in accordance with the PDCCH MO corresponding to each carrier. The PDCCH MOs on different carriers are probably not aligned with each other in time, so the PDCCH MOs are ranked in accordance with time (a chorological order) and then a frequency domain (an ascending order of carrier indexes). The terminal detects a PDCCH using a certain DCI format (e.g., one or more of formats 1-0, 1-1 or 1-2) in the determined PDCCH MO set, and generates the HARQ-ACK codebook in accordance with DAI information (including C-DAI and T-DAI) in the received PDCCH. The C-DAI is used to indicate, in a frequency domain and then in a time domain, the total quantity of PDSCHs, or the total quantity of PDCCHs indicating the SPS PDSCH release, which have been transmitted at a current PDCCH MO on a current carrier. The T-DAI is used to indicate the total quantity of PDSCHs, or the total quantity of PDCCHs indicating the SPS PDSCH release, which have been transmitted at the current PDCCH MO on all carriers. T-DAIs in the DCI in the PDCCH MOs aligned in the time domain on a plurality of carriers are the same, as shown in FIG. 1D.

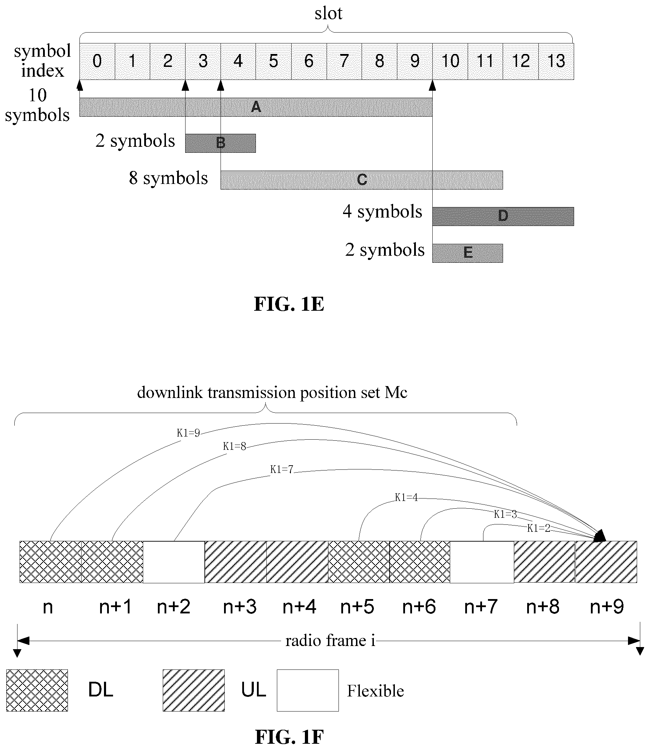

The semi-static HARQ-ACK codebook is determined in accordance with a K1 set configured for carriers for transmitting the PUCCHs, and a size of the codebook does not change along with the actually-scheduled downlink transmission, so it is not affected by the DCI packet loss and thereby the transmission is relatively stable. To be specific, for each carrier c (specifically a currently-activated BWP on the carrier), a position set Mc for downlink transmission of the HRQ-ACK in a slot or sub-slot n is determined in accordance with the K1 set, and then the HARQ-ACK codebook transmitted in the slot or sub-slot n is determined in accordance with Mc. Taking the PUCCH transmitted on the basis of slots as an example, for each carrier c, a slot set D for feeding back the HARQ-ACK in the slot n is determined in accordance with each value of K1 in the K1 set. In each slot in the slot set, the quantity of downlink transmission occasions (i.e., positions for the PDSCH transmission) in the slot is further determined in accordance with various time-domain positions (one time-domain position is called as a Start and Length Indicator Value (SLIV), which represents a combination of a start symbol and the quantity of transmission symbols) in preconfigured downlink time-domain resource assignment information (a TDRA table or set, each row in the table representing one time-domain scheduling condition with a start symbol, the quantity of symbols, a scheduling timing (i.e., the quantity K0 of slots between the PDCCH and the scheduled PDSCH)). When the terminal does not support to receive more than one unicast PDSCH in one slot, it is determined that one slot corresponds to one downlink transmission occasion. When the terminal supports to receive more than one unicast PDSCH in one slot, SLIVs in an SLIV set in the TDRA table are divided into groups in accordance with a predetermined rule. For example, a first SLIV with an earliest end position is found and taken as a reference to find all SLIVs whose start positions are located before the end position of the SLIV, and these SLIVs form one group and correspond to one possible downlink transmission occasion (this is because the SLIVs overlapping with each other are merely used for flexible scheduling, and in actual scheduling, merely one of the SLIVs is selected). Then, these SLIVs are removed from the SLIV set. The above steps are repeated for the remaining SLIVs until all the SLIVs in the TDRA table have been processed, so as to obtain a plurality of downlink transmission occasions. FIG. 1E shows a result, where elements A/B/C constitute a group and correspond to one downlink transmission occasion, and elements D/E form a group and corresponding to one downlink transmission occasion, i.e., totally two downlink transmission occasions are obtained. Further, prior to determining the quantity of downlink transmission occasions, when a semi-static uplink/downlink slot structure is configured, in each slot, some SLIVs incapable of being used (i.e., invalid SLIVs) are removed in accordance with whether there is a conflict between each of these SLIVs and an uplink symbol. For example, a symbol set in an SLIV includes an uplink symbol, and the downlink transmission does not occur actually due to a conflict between uplink and downlink resources, so the SLIV may be removed from the SLIV set. When the conflict occurs for the symbol sets corresponding to all the SLIVs in one slot, there is no downlink transmission in the slot, and thereby there is no downlink transmission occasion in the slot. When the PDSCH is configured to be retransmitted, one SLIV needs to be reserved as long as it is available in a slot in a plurality of slots for retransmission, i.e., an SLIV is removed only when there is a conflict between the SLIV and the uplink symbol in each slot of a plurality of slots for retransmission. Based on the above, the set Mc of the downlink transmission occasions corresponding to the carrier c is obtained. Mc consists of the downlink transmission occasions determined as mentioned hereinabove in each slot in the slot set D and arranged sequentially. The HARQ-ACK codebook for the carrier c in the slot n is determined in accordance with Mc, including the size of the codebook, specific contents of the HARQ-ACKs, and an order thereof. When the carrier aggregation is configured, the HARQ-ACK codebooks corresponding to the carriers are cascaded to each other in accordance with an order of carrier index numbers (e.g., an ascending order of the carrier index numbers), so as to obtain the HARQ-ACK codebook to be finally transmitted by the terminal in the slot n. To be specific, when merely one unicast PDSCH is supported to be transmitted on one carrier and in one slit, presumed that the K1 set is {2,3,4,5,6,7,8,9}, FIG. 1F shows an Mc set for feeding back the HARQ-ACK in a slot n+9. Slots determined in accordance with K1=5 and 6 are semi-static UL slots, and there is no downlink transmission in the two slots, so there is no downlink transmission occasion in the two slots. At this time, it is unnecessary to reserve any HARQ-ACK position in the HARQ-ACK codebook, so it is able to reduce redundancy information in the HARQ-ACK codebook.

It should be appreciated that, the above description about the features in the embodiments of the present disclosure is merely for illustrative purposes, but shall not be construed as limiting the schemes in the embodiments of the present disclosure.

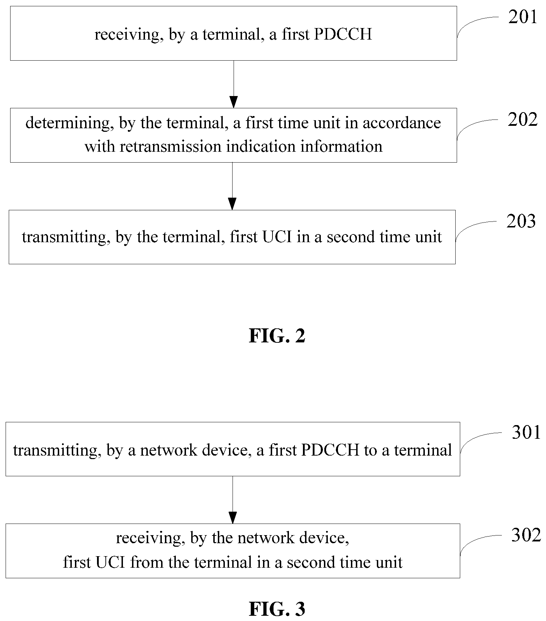

As shown in FIG. 2, the present disclosure provides in some embodiments a UCI transmission method, which includes: Step 201 of receiving, by a terminal, a first PDCCH, the first PDCCH including a retransmission indication information; Step 202 of determining, by the terminal, a first time unit in accordance with the retransmission indication information; and Step 203 of transmitting, by the terminal, first UCI in a second time unit, the first UCI being UCI dropped in the first time unit, the second time unit being a time unit where uplink channel corresponding to the first PDCCH is transmitted.

The first PDCCH is transmitted through a certain type of DCI, so in the embodiments of the present disclosure, the PDCCH and the DCI may be replaced with each other equivalently.

The retransmission indication information is information provided through a retransmission indication field in the first PDCCH, e.g., a retransmission indication field in the DCI used by the first PDCCH. The retransmission indication field may reuse indication information already defined in the DCI, or it may be a newly-added indication field.

The determining, by the terminal, the first time unit in accordance with the retransmission indication information includes determining one or more time units in accordance with the retransmission indication information. The first UCI is all or a part of UCI dropped in these time units.

The uplink channel transmission corresponding to the first PDCCH includes, but not limited to, at least one of uplink transmission scheduled by the first PDCCH, uplink feedback of the first PDCCH, or uplink feedback for downlink transmission scheduled by the PDCCH.

In the embodiments of the present disclosure, a definition of each of the first time unit and the second time unit includes one of: at least one subframe, at least one slot, or at least one sub-slot; wherein the definition of the first time unit is the same as or different from the definition of the second time unit.

For example, one first time unit is a slot, and one second time unit is a slot or sub-slot.

In the embodiments of the present disclosure, through the above-mentioned steps, it is able to retransmit the first UCI in the second time unit, and prevent the system transmission performance from deterioration when the UCI is dropped, thereby to improve the working efficiency of a communication system as well as the transmission performance of the entire communication system.

In a possible embodiment of the present disclosure, a value range of the retransmission indication information includes a first indication state and a second indication state, the first indication state indicates that no UCI retransmission is to be performed, and the second indication state indicates that UCI retransmission is to be performed. The determining, by the terminal, the first time unit in accordance with the retransmission indication information includes determining the first time unit in accordance with the retransmission indication information in the case that the retransmission indication information is in the second indication state.

The first indication state is a constant state, e.g., a constant value. The second indication state is any state other than the first indication state, e.g., the second indication state is any value in a plurality of values, and different first time units may be determined in accordance with different values of the second indication state.

In a possible embodiment of the present disclosure, the second indication state of the retransmission indication information is used to indicate an offset value, and the terminal determines the first time unit in accordance with the offset value.

The offset value is used to indicate an offset of the first time unit relative to the uplink channel transmission scheduled by the first PDCCH, or an offset of the first time unit relative to first PDCCH transmission, or an offset of the first time unit relative to downlink transmission scheduled by the first PDCCH.

During the implementation, it is able to accurately determine the first time unit in accordance with the offset value.

In a possible embodiment of the present disclosure, the determining, by the terminal, the first time unit in accordance with the offset value includes: determining one or more time units before the time unit where the uplink channel scheduled by the first PDCCH is transmitted as the first time unit in accordance with the offset value and the time unit where the uplink channel scheduled by the first PDCCH is transmitted; or determining one or more time units before a time unit where the first PDCCH is transmitted as the first time unit in accordance with the offset value and the time unit where the first PDCCH is transmitted; or determining one or more time units before a time unit where a downlink shared channel scheduled by the first PDCCH is transmitted as the first time unit in accordance with the offset value and the time unit where the downlink shared channel scheduled by the first PDCCH is transmitted.

The uplink channel transmission is PUSCH transmission or PUCCH transmission.

The determining one or more time units before the time unit where the uplink channel scheduled by the first PDCCH is transmitted as the first time unit in accordance with the offset value and the time unit where the uplink channel scheduled by the first PDCCH is transmitted includes determining one or more time units located before the time unit where the uplink channel transmission is performed and offset by the offset value relative to the time unit where the uplink channel transmission is performed.

The determining one or more time units before the time unit where the first PDCCH transmission is performed as the first time unit in accordance with the offset value and the time unit where the first PDCCH transmission is performed includes determining one or more time units located before the time unit where the first PDCCH transmission is performed and offset by the offset value relative to the time unit where the first PDCCH transmission is performed.

The determining one or more time units before the time unit where the downlink channel transmission is performed as the first time unit in accordance with the offset value and the time unit where the downlink shared channel transmission scheduled by the first PDCCH is performed includes determining one or more time units located before the time unit where the downlink shared channel transmission is performed and offset by the offset value relative to the time unit where the downlink shared channel transmission is performed.

For example, for simplicity, the time units associated with the first PDCCH (i.e., the time unit where the uplink channel transmission scheduled by the first PDCCH is performed, the time unit where the first PDCCH transmission is performed and the time unit where the downlink shared channel transmission scheduled by the first PDCCH is performed) are called as third time units. When a definition of the third time unit is the same as a unit of the offset value, the first time unit is determined as follows.
(1) When each of the third time unit and the offset value is in unit of slot, the third time unit is a slot n and the offset value is k, a slot n-k is determined as the first time unit. When the unit of the first time unit is further allowed to be different from that of the offset value, the slot n-k is determined as the first time unit in the case that the first time unit is in unit of slot, and all sub-slots in the slot n-k are determined as the first time units or a specific sub-slot (e.g., a first sub-slot or a last sub-slot) in the slot n-k is determined as the first time unit in the case that the first time unit is in unit of sub-slot.
(2) When each of the third time unit and the offset value is in unit of sub-slot, the third time unit is a slot n and the offset value is k, a sub-slot n-k is determined as the first time unit. When the unit of the first time unit is further allowed to be different from that of the offset value, the sub-slot n-k is determined as the first time unit in the case that the first time unit is in unit of sub-slot, and a slot m including the sub-slot n-k is determined as the first time unit in the case that the first time unit is in unit of slot.
   When the definition (in unit of time) of the third time unit is different from the unit of the offset value, the first time unit is determined as follows.
(3) When the third time unit is in unit of slot, the offset value is in unit of sub-slot, the third time unit is a slot n and the offset value is k, a slot n-k' located before the slot n and spaced apart from the slot n by k sub-slots (or k' slots into which the k sub-slots are converted) is obtained with a start point of the slot n as a reference, and all the sub-slots in the slot n-k' are determined as the first time units, or a specific sub-slot in the slot n-k' (e.g., a first sub-slot or a last sub-slot) is determined as the first time unit. When the unit of the first time unit is further allowed to be different from that of the offset value, all the sub-slots or a specific sub-slot in the slot n-k' are determined as the first time units in the case that the first time unit is in unit of sub-slot, and the slot n-k' is determined as the first time unit in the case that the first time unit is unit of slot.
(4) When the third time unit is in unit of sub-slot, the offset value is in unit of slot, the third time unit is a sub-slot n and the offset value is k, a slot n'-k located before the sub-slot n and spaced apart from the sub-slot n by k slots is obtained with a start point of a slot n' where the sub-slot n is located as a reference, and the slot n'-k is determined as the first time unit. Alternatively, the offset value k is converted into k' in unit of sub-slots, and a sub-slot n-k' located before the sub-slot n and spaced apart from the sub-slot n by k' sub-slots is obtained with a start point of the sub-slot n as a reference, and a slot m including the sub-slot n-k' is determined as the first time unit. When the unit of the first time unit is further allowed to be different from that of the offset value, the slot n'-k or the slot m is determined as the first time unit in the case that the first time unit is in unit of slot. In the case that the first time unit is unit of sub-slot, all the sub-slots in the slot n'-k are determined as the first time units, or a specific sub-slot in the slot n'-k (e.g., a first sub-slot or a last sub-slot) is determined as the first time unit, or the sub-slot n-k' is determined as the first time unit.

In a possible embodiment of the present disclosure, the unit of the offset value is determined with a definition of the first time unit as a reference; or the unit of the offset value is determined with a definition of the second time unit as a reference; or in the case that the definition of the first time unit is different from the definition of the second time unit, the unit of the offset value is determined with the definition of a time unit, with a larger time length between the first time unit and the second time unit, as a reference; or in the case that the definition of the first time unit is different from the definition of the second time unit, the unit of the offset value is determined with the definition of a time unit, with a smaller time length between the first time unit and the second time unit, as a reference; or the unit of the offset value is determined with the definition of the first time unit and the definition of the second time unit as a reference, or with the definition of any of the first time unit and the second time unit as a reference; wherein the definition of the first time unit is the same as the definition of the second time unit through pre-definition or configuration.

When the unit of the offset value is determined with the definition of the first time unit as a reference, the unit of the offset value is determined with the definition of the first time unit as a reference in the case that the definition of the first time unit is different from the definition of the second time unit. For example, when the definition (unit) of the second time unit is slot, i.e., one second time unit is a slot, and the definition (unit) of the first time unit is sub-slot, i.e., one first time unit is one sub-slot, the offset value is in unit of sub-slot.

Alternatively, when the unit of the offset value is determined with the definition of the first time unit as a reference, the unit of the offset value is determined with the definition of any of the first time unit and the second time unit as a reference in the case that the definition of the first time unit is the same as the definition of the second time unit. In other words, in this case, because the definitions of the first time unit and the second time unit are the same, the unit of the offset value is determined with the definition of the first time unit. For example, when the definition of each of the first time unit and the second time unit is slot, the offset value is in unit of slot.

When the unit of the offset value is determined with the definition of the second time unit as a reference, the unit of the offset value is determined with the definition of the second time unit as a reference in the case that the definition of the first time unit is different from the definition of the second time unit. For example, when the definition (unit) of the second time unit is slot, i.e., one second time unit is a slot, and the definition (unit) of the first time unit is sub-slot, i.e., one first time unit is one sub-slot, the offset value is in unit of slot.

Alternatively, when the unit of the offset value is determined with the definition of the second time unit as a reference, the unit of the offset value is determined with the definition of any of the first time unit and the second time unit as a reference in the case that the definition of the first time unit is the same as the definition of the second time unit. In other words, in this case, because the definitions of the first time unit and the second time unit are the same, the unit of the offset value is determined with the definition of the second time unit. For example, when the definition of each of the first time unit and the second time unit is slot, the offset value is in unit of slot.

In the case that the definition of the first time unit is different from the definition of the second time unit, the unit of the offset value is determined with the definition of a time unit, with a larger time length between the first time unit and the second time unit, as a reference. For example, when the definition of the first time unit is slot, i.e., one first time unit is one slot, and the definition of the second time unit is sub-slot, i.e., one second time unit is one sub-slot, the offset value is in unit of slot.

In the case that the definition of the first time unit is different from the definition of the second time unit, the unit of the offset value is determined with the definition of a time unit, with a smaller time length between the first time unit and the second time unit, as a reference. For example, when the definition of the first time unit is slot, i.e., one first time unit is one slot, and the definition of the second time unit is sub-slot, i.e., one second time unit is one sub-slot, the offset value is in unit of sub-slot.

The unit of the offset value is determined with the definition of the first time unit and the definition of the second time unit as a reference, or with the definition of any of the first time unit and the second time unit as a reference, in the case that the definition of the first time unit is the same as the definition of the second time unit through agreement or configuration. For example, the definition of the first time unit and the definition of the second time unit are both sub-slots through pre-agreement or pre-configuration. In this way, when the dropped first UCI was transmitted on the basis of sub-slots, the first UCI is retransmitted also on the basis of sub-slots, rather than in a PUCCH on the basis of slots.

In a possible embodiment of the present disclosure, the retransmission indication information includes K bits, each bit corresponds to a sub-time period in a predefined time period, the first time unit includes one or more time units contained in a sub-time period corresponding to a bit having a first value in the K bits, K is an integer greater than or equal to 1, and one sub-time period includes at least one time unit.

When one sub-time period is just one time unit, the retransmission indication information includes K bits, and each bit corresponds to one time unit in the predefined time period. The first time unit includes one or more time units contained in a sub-time period corresponding to a bit having a first value in the K bits, where K is an integer greater than or equal to 1.

One predefined time period includes K sub-time periods or K time units.

When each bit corresponds to one sub-time period in one predefined time period, the K bits correspond to the sub-time periods in the predefined time period respectively. In this way, it is able to accurately determine the first time unit in accordance with the K bits.

The first value is defined in a protocol or configured at a network side, e.g., it is 1 or 0.

During the implementation, the time unit in the sub-time period corresponding to the bit having the first value is determined as the first time unit, and a sub-time period corresponding to a bit having a second value is omitted (i.e., it is considered that no first UCI needs to be retransmitted in the time unit in the sub-time period corresponding to the bit having the second value). The second value is different from the first value, e.g., when the first value is 1, the second value is 0. When one sub-time period includes a plurality of time units, a plurality of time units in the sub-time period corresponding to the bit having the first value is determined as the first time units. When one sub-time period merely includes one time unit, the sub-time period corresponding to the bit having the first value is just one time unit and determined as the first time unit.

When the first value is 1, each bit in the K bits corresponds to one sub-time period in one predefined time period. When the bit has a value of 1, it means that the time unit in the corresponding sub-time period is determined as the first time unit, and when the bit has a value of 0, it means that no UCI needs to be retransmitted in the time unit in the corresponding sub-time period.

In a possible embodiment of the present disclosure, the predefined time period includes one of a predefined time period containing the first PDCCH transmission, a predefined time period before the first PDCCH transmission, a predefined time period containing uplink channel transmission scheduled by the first PDCCH, or a predefined time period before the uplink channel transmission scheduled by the first PDCCH.

The predefined time period before the first PDCCH transmission is a predefined time period before the predefined time period containing the first PDCCH transmission.

In the embodiments of the present disclosure, the predefined time period is any of the above-mentioned time periods predefined in a protocol or preconfigured at the network side.

The uplink transmission is PUCCH or PUSCH transmission. For example, when the uplink transmission is a PUCCH, the HARQ-ACK of the first PDCCH itself or the HARQ-ACK of the PDSCH scheduled by the first PDCCH needs to be transmitted on the PUCCH, so the PUCCH is called as uplink transmission scheduled by the first PDCCH. When the uplink transmission is a PUSCH, the PUSCH transmission is scheduled by the first PDCCH, so the PUSCH is called as uplink transmission scheduled by the first PDCCH.

The predefined time period corresponding to the retransmission indication field includes a predefined time period containing the PDCCH transmission, a predefined time period before the predefined time period containing the PDCCH transmission, a predefined time period containing the uplink transmission scheduled by the PDCCH, or a predefined time period before the predefined time period containing the uplink transmission scheduled by the PDCCH.

For example, the predefined time period is a radio frame. Taking a 15kHz subcarrier spacing as an example, when one slot is a sub-time period, a time period includes 10 sub-time periods, K=10 bits, and each bit corresponds to one slot. When the first PDCCH is transmitted in a radio frame #2, an indication field with K=10 in the first PDCCH is used to indicate a slot or slots in the 10 slots of the radio frame #2 as the first time unit, i.e., the UCI in the slot or slots is dropped and needs to be retransmitted.

In a possible embodiment of the present disclosure, a unit of a time unit corresponding to each bit or a unit of a sub-time period corresponding to each bit is determined with a definition of the first time unit as a reference; or a unit of the time unit corresponding to each bit or a unit of a sub-time period corresponding to each bit, is determined with a definition of the second time unit as a reference; or in the case that the definition of the first time unit is different from the definition of the second time unit, a unit of the time unit corresponding to each bit or a unit of a sub-time period corresponding to each bit, is determined with the definition of a time unit with a larger time length between the first time unit and the second time unit as a reference; or in the case that the definition of the first time unit is different from the definition of the second time unit, a unit of the time unit corresponding to each bit or a unit of a sub-time period corresponding to each bit, is determined with a time unit with a smaller time length between the first time unit and the second time unit as a reference; or a unit of the time unit corresponding to each bit or a unit of a sub-time period corresponding to each bit, is determined with the definition of the first time unit and the definition of the second time unit as a reference, or with the definition of any of the first time unit and the second time unit as a reference; wherein the definition of the first time unit is the same as the definition of the second time unit through pre-definition or configuration.

The description about a unit of the time unit corresponding to each bit or a unit of a sub-time period corresponding to each bit may refer to that about the unit of the offset value. For example, when the definition of the second time unit is slot, the definition of the first time unit is sub-slot, and the first time unit is taken as a reference through agreement, the time unit corresponding to each bit or the sub-time period corresponding to each bit is in unit of sub-slot.

In a possible embodiment of the present disclosure, causes for dropping the first UCI include at least one of: that there is a conflict between an uplink channel carrying the first UCI and the other channel, the other channel having a priority level higher than the uplink channel carrying the first UCI; that all or parts of transmission resources for the uplink channel carrying the UCI are contained in an uplink region which is notified to be ceased or cancelled through uplink Cancellation Indication (CI) signaling in the case that uplink cancellation is configured for the terminal; that there are symbols occupied by a downlink symbol or an SSB configured through high-layer signaling in a symbol set of the uplink channel carrying the first UCI; that a flexible symbol configured through high-layer signaling is contained in the symbol set of the uplink channel carrying the first UCI and there is a downlink transmission scheduled by a PDCCH on the flexible symbol, or the flexible symbol is indicated as a downlink symbol through indication information in DCI indicating a slot structure when the terminal is configured to detect the DCI indicating the slot structure; that the flexible symbol configured through high-layer signaling is contained in the symbol set of the uplink channel carrying the first UCI, the terminal is configured to detect the DCI indicating the slot structure but the terminal fails to receive the DCI indicating the slot structure; that a PUSCH carrying the first UCI is located in a region where uplink skipping is executed by the terminal; or that a CG PUSCH carrying the first UCI is ceased or cancelled due to the other PUSCH with DCI scheduling.

When there is a conflict between the uplink channel carrying the UCI and the other channel, the uplink channel carrying the UCI overlaps with a channel having a high priority level in the time domain, so an uplink channel carrying the UCI and having a low priority level is dropped.

The uplink cancellation indication signaling is transmitted through the DCI, e.g., the DCI in format 2 through format 4. For example, a part of terminals which have received the UCI in an uplink region are notified through the uplink cancellation indication information to stop the uplink transmission and free up resources for the other terminals with a higher priority level, so as to drop the UCI.

The downlink transmission scheduled by the PDCCH includes at least one of a PDSCH, a PDCCH indicating an SRS resource release (also called as SPS PDSCH release), or a Channel State Information-Reference Signal (CSI-RS).

The DCI indicating the slot structure is DCI carrying Slot Format Indication (SFI), e.g., DCI in a format 2-0.

In a possible embodiment of the present disclosure, in the case that a plurality of first PDCCHs has been received by the terminal and one or more HARQ-ACKs for one or more PDSCHs scheduled by the plurality of first PDCCHs and/or for a SPS PDSCH release indicated by the plurality of first PDCCHs are transmitted in the second time unit, offset values indicated through retransmission indication information in the plurality of first PDCCHs are the same; or the offset values indicated through retransmission indication information in the plurality of first PDCCHs are different, and the first time unit is determined in accordance with a retransmission indication field in each first PDCCH in the plurality of first PDCCHs or a retransmission indication field in a last one of the plurality of first PDCCHs.

When the offset values indicated through the retransmission indication information in the plurality of first PDCCHs are the same, any PDCCH in the plurality of first PDCCHs indicates the first time unit, so it is able to ensure the UCI retransmission reliability of the terminal. For example, even if one PDCCH is lost, the retransmission indication information may also be obtained from the other PDCCH. When the offset values indicated through retransmission indication information in the plurality of first PDCCHs are different, at least two first PDCCHs in the plurality of first PDCCHs indicate different first time units, so the network device is allowed to change the retransmission indication information in the subsequent first PDCCHs according to the practical needs in real time. When the retransmission indication information in all the first PDCCHs is valid, the first time unit is determined in accordance with the retransmission indication information in all the first PDCCHs, so as to indicate the retransmission of the first UCI in more first time units. Alternatively, when the retransmission indication information in a last one of the first PDCCHs is taken as a reference, the retransmission indication information in a current first PDCCH is allowed to cover the retransmission indication information in a previous first PDCCH, i.e., the network device is allowed to update the previous indication information (e.g., when merely the first UCI in one first time unit is allowed to be retransmitted, the first UCI in another first time unit B is dropped after a first time unit A has already been indicated in a previous first PDCCH and the first UCI in the first time unit B is more important than the first UCI in the first time unit A, the network device may indicate the first time unit b through changing the retransmission indication information in the subsequent first PDCCH so that the terminal preferentially retransmit the first UCI in the first time unit B).

In a possible embodiment of the present disclosure, in the case that the first PDCCH includes a priority level indication field, a priority level of the first UCI is the same as or different from a priority level indicated in the priority level indication field, or the priority level of the first UCI is greater than or equal to the priority level indicated in the priority level indication field; or in the case that the first PDCCH does not include the priority level indication field, the priority level of the first UCI is the same as or different from a predefined priority level corresponding to DCI used by the first PDCCH, or the priority level of the first UCI is greater than or equal to the predefined priority level corresponding to the DCI used by the first PDCCH.

During the implementation, when the priority level of the first UCI is the same as the priority level indicated in the priority level indication field, the UCI having a same priority level is transmitted in a multiplexing manner. When the priority level of the first UCI is different from the priority level indicated in the priority level indication field, the UCI having different priority levels is transmitted in a multiplexing manner.

The predefined priority level corresponding to the DCI is a priority level agreed or configured in advance for the DCI. For example, default priority levels agreed or configured in advance for different DCI formats may be different from each other or the same.

In a possible embodiment of the present disclosure, the transmitting, by the terminal, the first UCI in the second time unit includes transmitting the first UCI in the second time unit in accordance with a size and bits of the first UCI in the first time unit.

The size refers to the quantity of bits of the first UCI, and the bits refer to bit contents of the first UCI.

A mode of determining the size and bits of the first UCI in the first time unit may refer to the above-mentioned mode of determining the size and bits of the semi-static and dynamic HARQ-ACK codebooks. Of course, the size and bits of the first UCI may also be determined in a mode newly defined in a protocol.

When the first UCI is transmitted in the second time unit in accordance with the size and bits of the first UCI in the first time unit, a sequence of the first UCI transmitted in the second time unit is the same as a sequence of the first UCI which should have been transmitted but has been dropped in the first time unit.

In a possible embodiment of the present disclosure, in the case that the other UCI is not transmitted by the terminal in the second time unit, the transmitting, by the terminal, the first UCI in the second time unit includes: when a PDSCH transmission is scheduled by the first PDCCH or an SPS PDSCH release is indicated by the first PDCCH, and an HARQ-ACK for the PDSCH or SPS PDSCH release is transmitted in the second time unit, transmitting the first UCI on a PUCCH resource in the second time unit, the PUCCH resource being determined in accordance with the quantity of bits of the first UCI and a PUCCH resource indication field in the first PDCCH, or the PUCCH resource being determined in accordance with a PUCCH resource index corresponding to the first UCI in the first time unit, or the PUCCH resource being a resource preconfigured through high-layer signaling; or when a PUSCH is scheduled by the first PDCCH to be transmitted in the second time unit, transmitting the first UCI on a PUSCH resource in the second time unit.

When the other UCI is not transmitted by the terminal in the second time unit, no other UCI is contained in the second time unit.

When the PUCCH resource is determined in accordance with the PUCCH resource index corresponding to the first UCI in the first time unit, the PUCCH resource with a same PUCCH resource index as a PUCCH resource corresponding to the first UCI in the first time unit is selected in the second time unit, and then the first UCI is transmitted on the PUCCH resource.

In a possible embodiment of the present disclosure, in the case that the first time unit includes a plurality of time units, the transmitting, by the terminal, the first UCI in the second time unit includes: cascading a plurality of pieces of first UCI dropped in the plurality of time units to each other in a predetermined cascading order, and transmitting the cascaded first UCI on a PUCCH resource in the second time unit, the PUCCH resource being determined in accordance with a PUCCH resource index in a target time unit in the plurality of time units corresponding to the first UCI in the target time unit, the target time unit being a first one of the plurality of time units, a last one of the plurality of time units or a time unit in the plurality of time units in which the PUCCH resource corresponding to the first UCI has a maximum capacity, or the PUCCH resource being determined in accordance with the quantity of bits of the cascaded first UCI and a PUCCH resource indication field in the first PDCCH, or the PUCCH resource being a resource preconfigured through high-layer signaling, the predetermined cascading order including at least one of a chronological order of the time units or an order of UCI types; or independently transmitting the plurality of pieces of first UCI dropped in the plurality of time units on a plurality of PUCCH resources in the second time unit, the plurality of PUCCH resources being determined in accordance with a PUCCH resource index corresponding to each of the plurality of pieces of first UCI in a corresponding time unit within the plurality of time units.

During the implementation, the PUCCH resource is determined in accordance with a first one or a last one of the plurality of time units, or the time unit in which the PUCCH resource has a maximum capacity, or in accordance with the quantity of bits of the first UCI and the PUCCH resource indication field in the first PDCCH.

The predetermined cascading order includes at least one of a chronological order of the time units or an order of UCI types. For example, when the definition of the first time unit is slot, e.g., UCI in a first slot is an HARQ-ACK, UCI in a second slot is CSI and UCI in a third slot is an HARQ-ACK, the HARQ-ACK in the first slot, the CSI in the second slot and the HARQ-ACK in the third slot are cascaded sequentially, or the plurality of pieces of UCI is cascaded in accordance with the types of the UCI, or both. For example, the plurality of pieces of UCI is ranked in accordance with the types of the UCI, and when there is a plurality of pieces of UCI of a same type, these pieces of UCI are ranked in an chronological order, i.e., at this time the HARQ-ACK in the first slot, the HARQ-ACK in the third slot and the CSI in the second slot are cascaded sequentially. Of course, the plurality of pieces of UCI may also be ranked in a chronological order and then in an order of the types of UCI.

When the plurality of pieces of first UCI dropped in the plurality of time units is transmitted independently on a plurality of PUCCH resources in the second time unit, each first UCI in the plurality of pieces of first UCI is transmitted on the PUCCH resource in the corresponding first time unit. Here, the PUCCH resources corresponding to the plurality of pieces of first UCI in the first time unit may not overlap with each other.

In a possible embodiment of the present disclosure, in the case that second UCI is transmitted by the terminal in the second time unit, the transmitting, by the terminal, the first UCI in the second time unit includes: transmitting the first UCI and the second UCI in a multiplexing manner through a same PUCCH resource, the PUCCH resource being determined in accordance with the total quantity of bits of the first UCI and the second UCI and a PUCCH resource indication field in the first PDCCH, or the PUCCH resource being a resource preconfigured through high-layer signaling; or when HARQ-ACK is contained in both the first UCI and the second UCI, cascading the second UCI with the first UCI, and transmitting the first UCI and the second UCI through a same PUCCH resource, the PUCCH resource being determined in accordance with the total quantity of bits of the first UCI and the second UCI and a PUCCH resource indication field in the first PDCCH, or the PUCCH resource being a resource preconfigured through high-layer signaling; or transmitting the first UCI through a first PUCCH resource and transmitting the second UCI through a second PUCCH resource, wherein the first PUCCH resource does not overlap with the second PUCCH resource in a time domain, the first PUCCH resource being determined in accordance with the quantity of bits of the first UCI and a PUCCH resource indication field in the first PDCCH, or the first PUCCH resource being determined in accordance with a PUCCH resource index corresponding to the first UCI in the first time unit, or the first PUCCH resource being a resource preconfigured through high-layer signaling; or determining a first PUCCH resource corresponding to the first UCI and a second PUCCH resource corresponding to the second UCI, transmitting the first UCI through the first PUCCH resource and transmitting the second UCI through the second PUCCH resource when the first PUCCH resource does not overlap with the second PUCCH resource in a time domain, and transmitting the first UCI and the second UCI in a multiplexing manner through a same PUCCH resource when the first PUCCH resource overlaps with the second PUCCH resource in the time domain, the first PUCCH resource being determined in accordance with the quantity of bits of the first UCI and a PUCCH resource indication field in the first PDCCH, or the first PUCCH resource being determined in accordance with a PUCCH resource index corresponding to the first UCI in the first time unit, or the first PUCCH resource being a resource preconfigured through high-layer signaling.

When the first PUCCH resource overlaps with the second PUCCH in the time domain, the first UCI and the second UCI are transmitted on a same PUCCH resource in a multiplexing manner, and this PUCCH resource is determined in accordance with a UCI multiplexing transmission rule defined in a protocol.

When the PUCCH resource is determined in accordance with the PUCCH resource index for the first UCI in the first time unit, a PUCCH resource with a same PUCCH resource index as a PUCCH resource corresponding to the first UCI in the first time unit is selected in the second time unit as the PUCCH resource for the transmission in the second time unit.

A type of the first UCI is the same as, or different from, a type of the second UCI, and the second UCI includes at least one of an HARQ-ACK of the first PDCCH, or an HARQ-ACK of a PDSCH scheduled by the first PDCCH.

The second UCI and the first UCI are cascaded in a predetermined order, e.g., the first UCI is cascaded after the second UCI, or the second UCI is cascaded after the first UCI, or a plurality of pieces of UCI of a same type in the first UCI and the second UCI are cascaded in a predetermined order (e.g., the first UCI is cascaded after the second UCI or the second UCI is cascaded after the first UCI) and then the plurality of pieces of UCI of each type is cascaded in a predetermined order, e.g., in an order of HARQ-ACK, SR and CSI, or in an order of HARQ-ACK, CSI and SR.

In a possible embodiment of the present disclosure, the first UCI includes at least one of an HARQ-ACK, a CSI or an SR.

In a possible embodiment of the present disclosure, the first UCI includes all or parts of pieces of UCI dropped by the terminal in the first time unit.

For example, when the first UCI includes all pieces of UCI, the HARQ-ACK and the SR in the first time unit are dropped, and the HARQ-ACK and the SR that should be transmitted in the first time unit is retransmitted. For another example, when the first UCI includes a part of the pieces of UCI, one or more types of the dropped UCI is retransmitted through pre-agreement or pre-configuration, and the other UCI is not retransmitted. For example, the HARQ-ACK dropped in the first time unit is retransmitted through agreement or configuration, and when the CSI and/or SR are also dropped in the first time unit, the CSI and/or SR do not need to be retransmitted (the SR and the CSI are transmitted periodically, so they may be transmitted in a next period).

Based on the above, it is able to improve the flexibility of the UCI retransmission.

In a possible embodiment of the present disclosure, in the case that the terminal determines that the terminal supports or is configured with UCI retransmission, the first PDCCH includes the retransmission indication information.

When the first PDCCH includes the retransmission indication information in the case that the terminal determines that the terminal supports or is configured with UCI retransmission, the first PDCCH is determined to include the retransmission indication information only in the case that the terminal determines that the terminal supports or is configured with the UCI retransmission, and then the corresponding retransmission is performed using the UCI transmission method in the embodiments of the present disclosure. For the terminal which does not support or is not configured with the UCI retransmission, the PDCCH may not include the retransmission indication information, and it is also unnecessary to determine the first time unit and retransmit the first UCI as mentioned hereinabove.

According to the embodiments of the present disclosure, the terminal receives the first PDCCH including the retransmission indication information, determines the first time unit in accordance with the retransmission indication information, and transmits the first UCI in the second time unit. The first UCI is UCI dropped in the first time unit, and the second time unit is a time unit where uplink channel transmission corresponding to the PDCCH is performed. As a result, it is able to retransmit the first UCI, and prevent the occurrence of such problems that the downlink retransmission is performed unnecessarily (e.g., in the case that the HARQ-ACK is dropped), the scheduling is not optimum (e.g., in the case that the CSI is dropped) and the uplink scheduling is not performed in time (e.g., in the case that the SR is dropped) when the first UCI is dropped and the network device does not obtain the UCI in time, thereby to improve the working efficiency of the communication system.

As shown in FIG. 3, the present disclosure further provides in some embodiments a UCI reception method which includes: Step 301 of transmitting, by a network device, a first PDCCH to a terminal, the first PDCCH including retransmission indication information; and Step 302 of receiving, by the network device, first UCI from the terminal in a second time unit, the first UCI being UCI dropped in a first time unit, the first time unit being a time unit determined in accordance with the retransmission indication information, and the second time unit being a time unit where uplink channel corresponding to the first PDCCH is transmitted.

In a possible embodiment of the present disclosure, a value range of the retransmission indication information includes a first indication state and a second indication state, the first indication state indicates that no UCI retransmission is to be performed, and the second indication state indicates that UCI retransmission is to be performed. The first time unit is determined in accordance with the retransmission indication information in the case that the retransmission indication information is in the second indication state.

In a possible embodiment of the present disclosure, the retransmission indication information is used to indicate an offset value, and the first time unit is determined in accordance with the offset value; or the retransmission indication information includes K bits, each bit corresponds to a sub-time period in a predefined time period, the first time unit includes one or more time units contained in a sub-time period corresponding to a bit having a first value in the K bits, K is an integer greater than or equal to 1, and one sub-time period includes at least one time unit; or the retransmission indication information includes K bits, each bit corresponds to a time unit in a predefined time period, the first time unit includes one or more time units corresponding to a bit having a first value in the K bits, and K is an integer greater than or equal to 1.

In a possible embodiment of the present disclosure, the determining the first time unit in accordance with the offset value includes: determining one or more time units before the time unit where the uplink channel scheduled by the first PDCCH is transmitted as the first time unit in accordance with the offset value and the time unit where the uplink channel scheduled by the first PDCCH is transmitted; or determining one or more time units before a time unit where the first PDCCH is transmitted as the first time unit in accordance with the offset value and the time unit where the first PDCCH is transmitted; or determining one or more time units before a time unit where a downlink shared channel scheduled by the first PDCCH is transmitted as the first time unit in accordance with the offset value and the time unit where the downlink shared channel scheduled by the first PDCCH is transmitted.

In a possible embodiment of the present disclosure, a unit of the offset value is determined with a definition of the first time unit as a reference; or the unit of the offset value is determined with a definition of the second time unit as a reference; or in the case that the definition of the first time unit is different from the definition of the second time unit, the unit of the offset value is determined with the definition of a time unit, with a larger time length between the first time unit and the second time unit, as a reference; or in the case that the definition of the first time unit is different from the definition of the second time unit, the unit of the offset value is determined with the definition of a time unit, with a smaller time length between the first time unit and the second time unit, as a reference; or the unit of the offset value is determined with the definition of the first time unit and the definition of the second time unit as a reference, or with the definition of any of the first time unit and the second time unit as a reference; wherein the definition of the first time unit is the same as the definition of the second time unit through pre-definition or configuration.

In a possible embodiment of the present disclosure, the predefined time period includes one of a predefined time period containing the first PDCCH transmission, a predefined time period before the first PDCCH transmission, a predefined time period containing uplink channel transmission scheduled by the first PDCCH, or a predefined time period before the uplink channel transmission scheduled by the first PDCCH; and/or a unit of a time unit corresponding to each bit or a unit of a sub-time period corresponding to each bit is determined with a definition of the first time unit as a reference; or a unit of the time unit corresponding to each bit or a unit of a sub-time period corresponding to each bit, is determined with a definition of the second time unit as a reference; or in the case that the definition of the first time unit is different from the definition of the second time unit, a unit of the time unit corresponding to each bit or a unit of a sub-time period corresponding to each bit, is determined with the definition of a time unit with a larger time length between the first time unit and the second time unit as a reference; or in the case that the definition of the first time unit is different from the definition of the second time unit, a unit of the time unit corresponding to each bit or a unit of a sub-time period corresponding to each bit, is determined with a time unit with a smaller time length between the first time unit and the second time unit as a reference; or a unit of the time unit corresponding to each bit or a unit of a sub-time period corresponding to each bit, is determined with the definition of the first time unit and the definition of the second time unit as a reference, or with the definition of any of the first time unit and the second time unit as a reference; wherein the definition of the first time unit is the same as the definition of the second time unit through pre-definition or configuration.

In a possible embodiment of the present disclosure, causes for dropping the first UCI include at least one of: that there is a conflict between an uplink channel carrying the first UCI and the other channel, the other channel having a priority level higher than the uplink channel carrying the first UCI; that all or parts of transmission resources for the uplink channel carrying the first UCI are contained in an uplink region which is notified to be ceased or cancelled through uplink cancellation indication signaling in the case that uplink cancellation is configured for the terminal; that there are symbols occupied by a downlink symbol or an SSB configured through high-layer signaling in a symbol set of the uplink channel carrying the first UCI; that a flexible symbol configured through high-layer signaling is contained in the symbol set of the uplink channel carrying the first UCI and there is a downlink transmission scheduled by a PDCCH on the flexible symbol, or the flexible symbol is indicated as a downlink symbol through indication information in DCI indicating a slot structure when the terminal is configured to detect the DCI indicating the slot structure; that the flexible symbol configured through high-layer signaling is contained in the symbol set of the uplink channel carrying the first UCI, the terminal is configured to detect the DCI indicating the slot structure but the terminal fails to receive the DCI indicating the slot structure; that a PUSCH carrying the first UCI is located in a region where uplink skipping is executed by the terminal; or that a CG PUSCH carrying the first UCI is ceased or cancelled due to the other PUSCH with DCI scheduling.

In a possible embodiment of the present disclosure, the definition of each of the first time unit and the second time unit includes one of at least one subframe, at least one slot, or at least one sub-slot; wherein the definition of the first time unit is the same as or different from the definition of the second time unit.

In a possible embodiment of the present disclosure, in the case that a plurality of first PDCCHs has been transmitted by the network device and one or more HARQ-ACKs for one or more PDSCHs scheduled by the plurality of first PDCCHs and/or for a SPS PDSCH release indicated by the plurality of first PDCCHs are transmitted in the second time unit, offset values indicated through retransmission indication information in the plurality of first PDCCHs are the same; or the offset values indicated through retransmission indication information in the plurality of first PDCCHs are different, and the first time unit is determined in accordance with a retransmission indication field in each first PDCCH in the plurality of first PDCCHs or a retransmission indication field in a last one of the plurality of first PDCCHs.

In a possible embodiment of the present disclosure, in the case that the first PDCCH includes a priority level indication field, a priority level of the first UCI is the same as or different from a priority level indicated in the priority level indication field, or the priority level of the first UCI is greater than or equal to the priority level indicated in the priority level indication field; or in the case that the first PDCCH does not include the priority level indication field, the priority level of the first UCI is the same as or different from a predefined priority level corresponding to DCI used by the first PDCCH, or the priority level of the first UCI is greater than or equal to the predefined priority level corresponding to the DCI used by the first PDCCH.

In a possible embodiment of the present disclosure, the first UCI is transmitted in the second time unit in accordance with a size and bits of the first UCI in the first time unit.

In a possible embodiment of the present disclosure, in the case that the other UCI does not need to be received by the network device in the second time unit, the receiving, by the network device, the first UCI from the terminal in the second time unit includes: when a PDSCH transmission is scheduled by the first PDCCH or an SPS PDSCH release is indicated by the first PDCCH, and an HARQ-ACK for the PDSCH or SPS PDSCH release is transmitted in the second time unit, receiving the first UCI on a PUCCH resource in the second time unit, the PUCCH resource being determined in accordance with the quantity of bits of the first UCI and a PUCCH resource indication field in the first PDCCH, or the PUCCH resource being determined in accordance with a PUCCH resource index corresponding to the first UCI in the first time unit, or the PUCCH resource being a resource preconfigured through high-layer signaling; or when a PUSCH is scheduled by the first PDCCH to be transmitted in the second time unit, receiving the first UCI on a PUSCH resource in the second time unit.

In a possible embodiment of the present disclosure, in the case that the first time unit includes a plurality of time units, the receiving, by the network device, the first UCI in the second time unit includes: determining that a plurality of pieces of first UCI dropped in the plurality of time units is cascaded to each other in a predetermined cascading order, and receiving the cascaded first UCI on a PUCCH resource in the second time unit, the PUCCH resource being determined in accordance with a PUCCH resource index in a target time unit in the plurality of time units corresponding to the first UCI in the target time unit, the target time unit being a first one of the plurality of time units, a last one of the plurality of time units or a time unit in the plurality of time units in which the PUCCH resource corresponding to the first UCI has a maximum capacity, or the PUCCH resource being determined in accordance with the quantity of bits of the cascaded first UCI and a PUCCH resource indication field in the first PDCCH, or the PUCCH resource being a resource preconfigured through high-layer signaling, the predetermined cascading order including at least one of a chronological order of the time units or an order of UCI types; or independently receiving the plurality of pieces of first UCI dropped in the plurality of time units on a plurality of PUCCH resources in the second time unit, the plurality of PUCCH resources being determined in accordance with a PUCCH resource index corresponding to each of the plurality of pieces of first UCI in a corresponding time unit within the plurality of time units.

In a possible embodiment of the present disclosure, in the case that second UCI needs to be received by the network device in the second time unit, the receiving, by the network device, the first UCI from the terminal in the second time unit includes: receiving the first UCI and the second UCI transmitted in a multiplexing manner through a same PUCCH resource, the PUCCH resource being determined in accordance with the total quantity of bits of the first UCI and the second UCI and a PUCCH resource indication field in the first PDCCH, or the PUCCH resource being a resource preconfigured through high-layer signaling; or when HARQ-ACK is contained in both the first UCI and the second UCI, determining that the second UCI is cascaded with the first UCI, and receiving the first UCI and the second UCI transmitted in a cascading manner through a same PUCCH resource, the PUCCH resource being determined in accordance with the total quantity of bits of the first UCI and the second UCI and a PUCCH resource indication field in the first PDCCH, or the PUCCH resource being a resource preconfigured through high-layer signaling; or receiving the first UCI through a first PUCCH resource and receiving the second UCI through a second PUCCH resource, wherein the first PUCCH resource does not overlap with the second PUCCH resource in a time domain, the first PUCCH resource being determined in accordance with the quantity of bits of the first UCI and a PUCCH resource indication field in the first PDCCH, or the first PUCCH resource being determined in accordance with a PUCCH resource index corresponding to the first UCI in the first time unit, or the first PUCCH resource being a resource preconfigured through high-layer signaling; or determining a first PUCCH resource corresponding to the first UCI and a second PUCCH resource corresponding to the second UCI, receiving the first UCI through the first PUCCH resource and receiving the second UCI through the second PUCCH resource when the first PUCCH resource does not overlap with the second PUCCH resource in a time domain, and receiving the first UCI and the second UCI transmitted in a multiplexing manner through a same PUCCH resource when the first PUCCH resource overlaps with the second PUCCH resource in the time domain, the first PUCCH resource being determined in accordance with the quantity of bits of the first UCI and a PUCCH resource indication field in the first PDCCH, or the first PUCCH resource being determined in accordance with a PUCCH resource index corresponding to the first UCI in the first time unit, or the first PUCCH resource being a resource preconfigured through high-layer signaling.

In a possible embodiment of the present disclosure, a type of the first UCI is the same as or different from a type of the second UCI, and the second UCI includes at least one of an HARQ-ACK of the first PDCCH, or an HARQ-ACK of a PDSCH scheduled by the first PDCCH.

In a possible embodiment of the present disclosure, the first UCI includes at least one of an HARQ-ACK, CSI or an SR; and/or the first UCI includes all or parts of pieces of UCI dropped by the terminal in the first time unit.

In a possible embodiment of the present disclosure, in the case that the network device determines that the terminal supports or is configured with UCI retransmission, the first PDCCH includes the retransmission indication information.

It should be appreciated that, the UCI reception method in the embodiments of the present disclosure corresponds to the network device in FIG. 2, and the implementation of the UCI reception method may refer to the relevant description in FIG. 2 with a same beneficial effect, which will not be particularly defined herein.

The methods in the embodiments of the present disclosure will be described hereinafter in conjunction with the following embodiments.

### First Embodiment

In this embodiment, the following description will be given by taking the transmission using a semi-static codebook as an example.

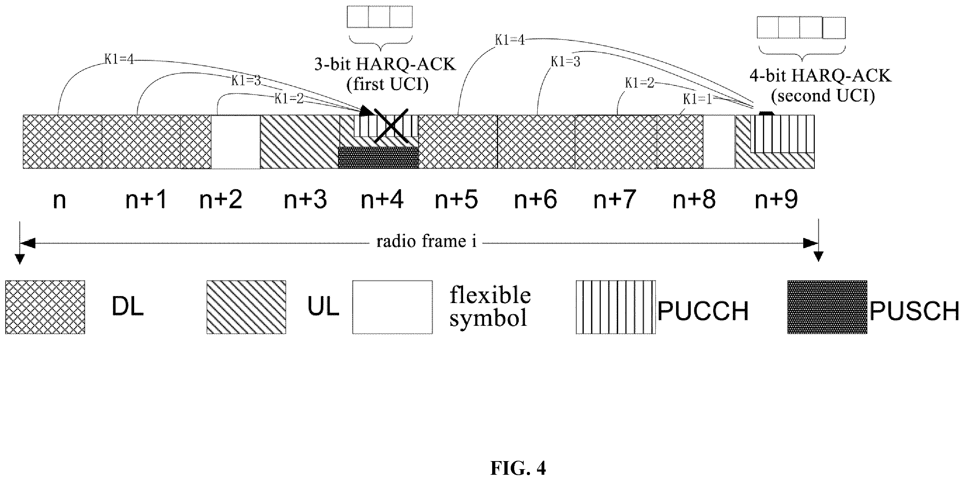

It is presumed that the terminal is configured with one carrier, the semi-static codebook is used for the transmission, and the quantity of slots between the end of the PDSCH and the beginning of the HARQ-ACK is Kl={ 1,2,3,4}. Taking the PUCCH transmission on the basis of slot as an example, a size of a semi-static HARQ-ACK codebook in a slot 4 is determined, using a semi-static codebook determination mode, as 3-bit HARQ-ACK corresponding to HARQ-ACKs for the PDSCH in slots 0, 1 and 2, and a slot 3 is an uplink slot and not included in a range of the semi-static codebook in the slot 4. A semi-static HARQ-ACK codebook in a slot 9 is determined as 4-bit HARQ-ACK corresponding to HARQ-ACKs for the PDSCH in slots 5, 6, 7 and 8. In the slot 4, the HARQ-ACK transmitted on a PUCCH resource 1 is an HARQ-ACK for an Enhanced Mobile Broadband (eMBB) service with a low priority level, and there is in the slot 4 a PUSCH carrying an Ultra Reliable Low Latency Communications (URLLC) service and conflicting with the PUCCH resource 1, so the PUCCH resource 1 in the slot 4 is dropped, and a shown in FIG. 4, the first UCI corresponding to the 3-bit HARQ-ACK is dropped.

In this scenario, behaviors of the network device will be described as follows.

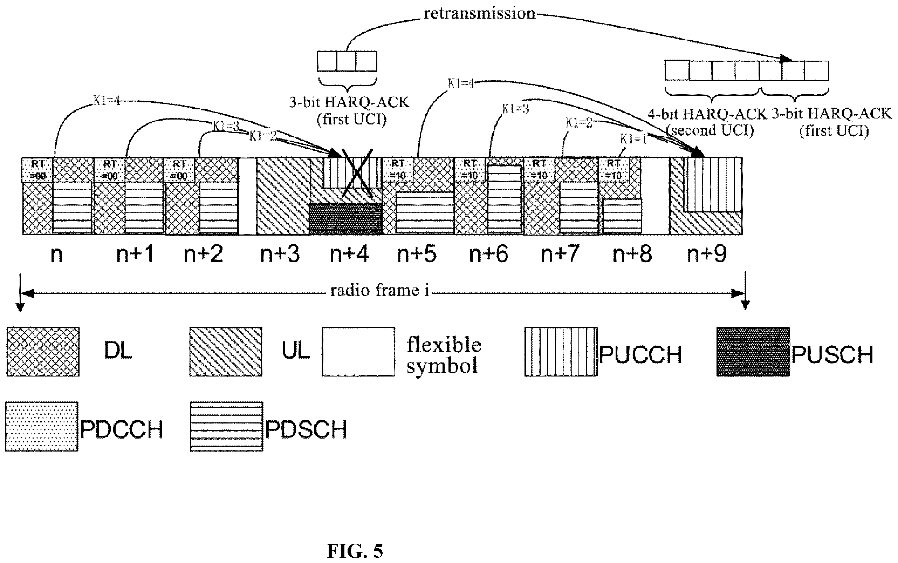

The network device determines that the first UCI (eMBB HARQ-ACK) on the PUCCH resource 1 is dropped in the slot 4 because the PUSCH carrying the URLLC service is scheduled. In order to provide a retransmission occasion for the first UCI, after determining that the first UCI has been dropped, the network device sets retransmission indication information in the first PDCCH in a slot or slots to indicate that the first UCI dropped in the slot 4 is to be retransmitted in a subsequent slot. To be specific, as shown in FIG. 5, the retransmission indication information may be set in the following modes.

First mode: in the first PDCCH for scheduling the PDSCH transmission in each slot of the slots 5, 6, 7 and 8, the network device may set the retransmission indication information to be in an indication state indicating that the slot 4 is the first time unit. Of course, the network device may also merely set the retransmission indication information in the first PDCCH in the slot to be in an indication state indicating that the slot 4 is the first time unit. In this mode, the retransmission indication information includes the following indication modes.

Mode 1: the retransmission indication information indicates an offset value, and indication states thereof are shown in Table 1 or 2. The offset value is in unit of slot. It is presumed that the first time unit is determined with a slot (i.e., the second time unit) where the uplink transmission corresponding to the first PDCCH is performed (a slot where the PUSCH transmission scheduled by the first PDCCH is performed, i.e., the slot determined in accordance with a timing K2 for scheduling the PUSCH in the first PDCCH, or a slot where the HARQ-ACK for the first PDCCH itself is transmitted through the PUCCH or a slot where the HARQ-ACK for the PDSCH scheduled by the first PDCCH is transmitted through the PUCCH, i.e., the slot determined in accordance with K1 in the first PDCCH or K1 configured through high-layer signaling) (of course, the first time unit may also be determined in any other ways, e.g., the first time unit may be determined with a slot where the first PDCCH itself is located or a slot where the PDSCH scheduled by the first PDCCH is located as a reference, which will not be particularly defined herein). For example, K1 indication fields in the first PDCCHs in the slots 5, 5, 6 and 7 have values of 4, 3, 2 and 1 respectively, and the HARQ-ACK is transmitted in the slot 9 through the PUCCH, i.e., the second time unit is slot 9. When it is necessary to indicate that the HARQ-ACK in the slot 4 is to be retransmitted in the slot 9 with the slot 9 as a reference, the offset value indicated through the retransmission indication information needs to be set as five slots. For example, as shown in Tale 1, when the retransmission indication field has two bits, it may be set as "10", and when the retransmission indication field has three bits, it may be set as "100".

**Table 1**

| Bit state of 2-bit retransmission indication field | | Offset value |
|---|---|---|
| | 00 | Null, i.e., no retransmission |
| | 01 | 3 |
| | 10 | 5 |
| | 11 | 7 |

**Table 2**

| Bit state of 3-bit retransmission indication field | | Offset value |
|---|---|---|
| | 000 | Null, i.e., no retransmission |
| | 001 | 2 |
| | 010 | 3 |
| | 011 | 4 |
| | 100 | 5 |
| | 101 | 6 |
| | 110 | 7 |
| | 111 | 8 |

It should be appreciated that, the above Tables 1 and 2 are for illustrative purposes only. The retransmission indication field may have bits at any other value and have any other bit states.

Mode 2: the retransmission indication information uses a bitmap. Similar to mode 1, in the first PDCCHs in the slots 5, 6, 7 and 8, the retransmission indication information in the first PDCCH is to be set as to indicate that the slot 4 is the first tune unit. For example, depending on an uplink/downlink configuration, one time period is defined as half of a radio frame, i.e., five slots, the retransmission indication field has five bits, and each bit corresponds to one slot. A half of the radio frame before another half of the radio frame where the PDCCH transmission is performed is determined as a region corresponding to the bitmap, and a first half frame of a current radio frame (i.e., slots 0 to 5) is a time period corresponding to the retransmission indication information, i.e., the 5-bit retransmission indication field in the first PDCCH transmitted in the slots 5 to 8 is "00001", which indicates that the slot 4 is the first time unit and the first UCI (the eMBB HARQ-ACK) dropped in the slot 4 needs to be retransmitted in the slot 9. For another example, one radio frame is a time period, the retransmission indication field has ten bits, and each bit corresponds to one slot. A radio frame where the PDCCH transmission is performed is determined as a region corresponding to the bitmap, i.e., the 10-bit retransmission indication field in the PDCCH transmitted in the slots 5 to 8 is "0000100000", which indicates that the slot 4 is the first time unit and the first UCI (the eMBB HARQ-ACK) dropped in the slot 4 needs to be retransmitted in the slot 9.

Second mode: in the first PDCCH for scheduling the PDSCH transmission in the slot 8, the network device merely sets the retransmission indication information to be in an indication state indicating that the slot 4 is the first time unit. In this process, merely A bits (corresponding to the above-mentioned mode 1) or B bits (corresponding to the above-mentioned mode 2) in the first PDCCH in the slot 8 are set as a corresponding content, and the retransmission indication information in the other slots is set as to indicate that no retransmission is to be performed, which will not be particularly defined herein.

Further, in the slot 9 and on a same PUCCH resource, the network device receives the 4-bit HARQ-ACK (i.e., the second UCI) which should have been transmitted in the slot 9 and corresponds to the PDSCH in the slots 5 to 8, and the 3-bit HARQ-ACK (i.e., the first UCI) in the slot 4 which is indicated to be retransmitted in the slot 9 and corresponds to the PDSCH in the slots 0 to 3. In addition, the first UCI is cascaded after the second UCI through agreement, and one resource set is determined in preconfigured PUCCH resource sets in accordance with the total quantity of bits of the cascaded UCI. Different resource sets correspond to different UCI bit quantity ranges. Next, one PUCCH resource in the set is determined in accordance with a PUCCH resource indication field in a last one of the first PDCCHs (i.e., in the slot 8) for receiving the first UCI and the second UCI, and the first UCI and the second UCI are separated from each other in accordance with a cascading order.

In this embodiment, behaviors of the terminal will be described as follows.

The first UCI (eMBB HARQ-ACK) on the PUCCH resource 1 is dropped in the slot 4 because the PUSCH carrying the URLLC service is scheduled, and the terminal determines that the first UCI dropped in the slot 4 is to be retransmitted in a subsequent slot in accordance with a specific content of the subsequently-received retransmission indication information in the first PDCCH in the following modes.

First mode: the retransmission indication fields in the first PDCCHs for feeding back the HARQ-ACKs in a same slot have a same value, and at this time, there are the following two modes.

Mode 1: the retransmission indication information indicates an offset value. K1 indication fields in the first PDCCHs in the slots 5 to 8 have values of 4, 3, 2 and 1 respectively, and the HARQ-ACK is transmitted in the slot 9 through the PUCCH. When the retransmission indication field has two bits and the retransmission indication fields obtained in the first PDCCHs in the slots 5 to 8 are all "10", the slot 9 is determined as the second time unit. When the slot 9 is taken as a reference, the offset value is determined as five slots in accordance with the above-mentioned Table 1, and a slot 9-5=4 is determined as a slot in which the UCI is to be transmitted, i.e., the first time unit. Hence, the first UCI dropped in the slot 4 is retransmitted in the slot 9. When the retransmission indication field has three bits and the retransmission indication fields obtained in the first PDCCHs in the slots 5 to 8 are all "100", the slot 9 is determined as the second time unit. When the slot 9 is taken as a reference, the offset value is determined as five slots in accordance with the above-mentioned Table 1, and a slot 9-5=4 is determined as a slot in which the UCI is to be transmitted, i.e., the first time unit. Hence, the first UCI dropped in the slot 4 is retransmitted in the slot 9.

Mode 2: the retransmission indication information uses a bitmap. K1 indication fields in the first PDCCHs in the slots 5 to 8 have values of 4, 3, 2 and 1 respectively, and the HARQ-ACK is transmitted in the slot 9 through the PUCCH. A time period division mode identical to that at a network device side is adopted. For example, depending on an uplink/downlink configuration, one time period is defined as half of a radio frame, i.e., five slots, the retransmission indication field has five bits, and each bit corresponds to one slot. A half of the radio frame before another half of the radio frame where the PDCCH transmission is performed is determined as a region corresponding to the bitmap, and a first half frame of a current radio frame (i.e., slots 0 to 5) is a time period corresponding to the retransmission indication information, i.e., the 5-bit retransmission indication field in the first PDCCH transmitted in the slots 5 to 8 is "00001", which indicates that the slot 4 is the first time unit and the first UCI (the eMBB HARQ-ACK) dropped in the slot 4 needs to be retransmitted in the slot 9. For another example, one radio frame is a time period, the retransmission indication field has ten bits, and each bit corresponds to one slot. A radio frame where the PDCCH transmission is performed is determined as a region corresponding to the bitmap, i.e., the 10-bit retransmission indication field in the PDCCH transmitted in the slots 5 to 8 is "0000100000", which indicates that the slot 4 is the first time unit and the first UCI (the eMBB HARQ-ACK) dropped in the slot 4 needs to be retransmitted in the slot 9.

Second mode: the retransmission indication information in the first PDCCHs for feeding back the HARQ-CKs in a same slot has different indication values, and whether the retransmission is to be performed is determined in accordance with the retransmission indication information in a last one of the first PDCCHs, i.e., the retransmission indication field in a current first PDCCH covers that in a previous first PDCCH. A slot in which the first UCI to be transmitted in the slot 9 is dropped is determined merely through parsing the retransmission indication field in the first PDCCH in the slot 8 as mentioned in the above mode 1 or 2, and the other description will not be particularly defined herein.

Further, in the slot 9 and on a same PUCCH resource, the terminal transmits the 4-bit HARQ-ACK (i.e., the second UCI) which should have been transmitted in the slot 9 and corresponds to the PDSCH in the slots 5 to 8, and the 3-bit HARQ-ACK (i.e., the first UCI) in the slot 4 which is indicated to be retransmitted in the slot 9 and corresponds to the PDSCH in the slots 0 to 3. In addition, the first UCI is cascaded after the second UCI through agreement, and one resource set is determined in preconfigured PUCCH resource sets in accordance with the total quantity of bits of the cascaded UCI. Next, one PUCCH resource in the set is determined in accordance with a PUCCH resource indication field in a last one of the first PDCCHs (i.e., a PDCCH in the slot 8) for transmitting the first UCI and the second UCI cascaded to each other.

### Second Embodiment

This embodiment differs from the first embodiment mainly in that the semi-static codebook is adopted in the first embodiment, while a dynamic codebook is adopted in the second embodiment. Further, in the second embodiment, in the slots 4 and 9 described in the first embodiment, depending on a dynamic codebook determination mode, a T-DAI in the PDCCH corresponding to the PDSCH for feeding back the HARQ-ACK in the slot 4 is positioned in accordance with K1, so as to determine an HARQ-ACK having X1 bits in the slot 4 and an HARQ-ACK having X2 bits in the slot 9. X1 is determined in accordance with the quantity of PDSCHs actually scheduled in the slots 0 to 4, and X2 is determined in accordance with the quantity of PDSCHs actually scheduled in the slots 5 to 8. The other modes may refer to those in the first embodiment, and thus will not be particularly defined herein.

### Third Embodiment

In this embodiment, based on the first embodiment and the second embodiment, for the first mode, when merely one first PDCCH including the retransmission indication information is transmitted in the slots 5 to 8 and this first PDCCH is not used to schedule the PDSCH transmission or the PDSCH is not scheduled by the first PDCCH to be transmitted in the slot 9 (e.g., the DCI used by the first PDCCH including the retransmission indication information includes two K1 indication fields, one for indicating a slot where the retransmission is performed and one for indicating a slot where the HARQ-ACK for the PDSCH scheduled by the first PDCCH is transmitted), and the retransmission is still performed in the slot 9, it may be determined, in accordance with the above-mentioned definition of the retransmission indication information, that the first UCI dropped in the slot 4 is to be retransmitted in the slot 9. Merely the first UCI is to be transmitted in the slot 9, and no other UCI is transmitted in the slot 9. Depending on an agreed mode, when a PUCCH resource in the slot 4 on which the first UCI is transmitted is a PUCCH resource 1, the 3-bit first UCI dropped in the slot 4 is to be retransmitted in the slot 9 on the PUCCH resource 1. Alternatively, a PUCCH resource is determined through agreement in accordance with a PUCCH resource indication field in the first PDCCH including the retransmission indication information, i.e., a PUCCH resource set is determined in accordance with the quantity of bits of the 3-bit first UCI, a PUCCH resource is determined in the set in accordance with the PUCCH resource indication filed, and then the 3-bit first UCI is retransmitted on the PUCCH resource. When the PDSCH is scheduled by the first PDCCH to feed back the HARQ-ACK in the other slot, the resource indication field in the first PDCCH may also be used to determine the PUCCH resource for the scheduled PDSCH in the other slot. Although the resource is determined in accordance with a same indication field, there is no conflict because the PUCCH is transmitted in different slots.

### Fourth Embodiment

Based on the first to third embodiments, when the indication state of the retransmission indication information in mode 1 is used to indicate a plurality of offset values or the bitmap in mode 2 includes more than one "1", it may be determined that the first UCI is to be retransmitted in a plurality of first time units. For example, the slots 2 and 4 are both first time units, and the first UCI is to be transmitted in the slot 9. The first UCI in the slot 2 has two bits and it is transmitted on a PUCCH resource 1, and the second UCI in the slot 4 has three bits and it is transmitted on a PUCCH resource 2. At this time, when no other UCI is to be transmitted in the slot 9, there is any of the following modes.

In one mode, the 2-bit first UCI in the slot 2 is cascaded to the 3-bit first UCI in the slot 3 to obtain 5-bit UCI, and the 5-bit UCI is retransmitted in the slot 9 on the PUCCH resource 2. Alternatively, the 5-bit UCI is retransmitted on a PUCCH resource determined in accordance with the quantity of bits of the cascaded UCI and a PUCCH resource indication field in the PDCCH (a specific determination process may refer to that mentioned hereinabove, and thus will not be particularly defined herein).

In another mode, the 2-bit first UCI dropped in the slot 2 is retransmitted in the slot 9 on the PUCCH resource 1, and the 3-bit first UCI dropped in the slot 4 is retransmitted in the slot 9 on the PUCCH resource 2. The PUCCH resource 1 does not overlap with the PUCCH resource 2 in the slot 9.

When the second UCI is to be transmitted in the slot 9, there is any of the following modes.

In one mode, the 2-bit first UCI in the slot 2 is cascaded to the 3-bit first UCI in the slot 3. For example, the 2-bit first UCI in the slot 2 is cascaded to the 3-bit first UCI in the slot 3 in a chronological order, and then the cascaded first UCI is cascaded after the second UCI in the slot 9. The cascaded UCI is then transmitted in the slot 9 on a PUCCH resource determined in accordance with the quantity of bits of the cascaded UCI and the PUCCH resource indication field in the PDCCH (a specific determination process may refer to that mentioned hereinabove, and thus will not be particularly defined herein).

In another mode, the 2-bit first UCI dropped in the slot 2 is retransmitted in the slot 9 on the PUCCH resource 1, the 3-bit first UCI dropped in the slot 4 is retransmitted in the slot on the PUCCH resource 2, and the second UCI is transmitted in the slot 9 on a PUCCH resource determined in accordance with the quantity of bits of the second UCI and the PUCCH resource indication field in the PDCCH (a specific determination process may refer to that mentioned hereinabove, and thus will not be particularly defined herein). The PUCCH resource 1, the PUCCH resource 2 and the PUCCH resource for the second UCI do not overlap with each other in the slot 9. Alternatively, when one or more of the PUCCH resource 1 and the PUCCH resource 2 overlaps with the PUCCH resource for the second UCI, the UCI corresponding to the overlapped PUCCH resources is cascaded, and then transmitted on a PUCCH resource determined in accordance with the quantity of bits of the cascaded UCI and the PUCCH resource indication field in the PDCCH (a specific determination process may refer to that mentioned hereinabove, and thus will not be particularly defined herein).

It should be appreciated that, in the above first to fourth embodiments, the description has been given merely when the first PDCCH is a PDCCH for scheduling the PDSCH transmission. In the embodiments of the present disclosure, the PDCCH for scheduling the PDSCH transmission may also be replaced with an SPS PDCCH release, and a procedure thereof is the same as that mentioned in the first to fourth embodiments.

In the above first to fourth embodiments, a cause for dropping the UCI is that there is a conflict between different priority levels, and the method may also be applicable when the UCI is dropped for any other causes.

In the above first to fourth embodiments, the first UCI is the HARQ-ACK, and when the retransmission is supported, the method may also be applicable to any other UCI, e.g., the CSI, the SR or any UCI combination.

In the above first to fourth embodiments, the slot may be replaced with sub-slot, and an implementation process thereof may the same.

In addition, in the above first to fourth embodiments, one carrier is taken as an example. For carrier aggregation, depending on a codebook generation mode defined in a protocol, the size and contents of the generated codebook are different, but the retransmission indication and the specific retransmission process will be the same.

When there is any other UCI of a type different from the dropped UCI in the slot where the dropped first UCI is to be retransmitted, e.g., when the dropped first UCI is an HARQ-ACK and CSI and/or an SR are transmitted in the slot 9, the CSI and/or SR and the HARQ-ACK may be transmitted independently when a PUCCH resource for the CSI and/or SR does not overlap with a PUCCH resource for the retransmission of the HARQ-ACK in the slot 9. When the PUCCH resource for the CSI and/or SR overlaps with the PUCCH resource for the retransmission of the HARQ-ACK in the slot 9, they may be transmitted in accordance with a UCI multiplexing transmission mode defined in a protocol. For example, the UCI with a low priority level is dropped and the UCI with a high priority level is transmitted. When they have a same priority level, they may be transmitted in accordance with a multiplexing rule. For example, different schemes are selected for the SR and the HARQ-ACK in accordance with different PUCCH resource formats used by the SR and the HARQ-ACK, e.g., a PUCCH format 1. When the SR is a positive SR, the HARQ-ACK is transmitted on the PUCCH resource for the SR, and it implicitly indicates that there is the positive SR simultaneously. When a PUCCH format 0 is used by the HARQ-ACK, the SR is transmitted on the PUCCH resource for the HARQ-ACK using a cyclic shift value corresponding to an SR state, and it implicitly indicates whether there is the positive SR simultaneously through different cyclic shift values. For example, when the HARQ-ACK uses one of PUCCH formats 2, 3 and 4, the SR and the HARQ-ACK are cascaded and encoded jointly for the transmission.

Further, for the HARQ-ACK and the CSI, when the HARQ-ACK uses one of the PUCCH formats 2, 3 and 4, the PUCCH resources are determined in accordance with the total quantity of bits of the CSI and the HARQ-ACK, and when the resources are insufficient, a part of CSI is dropped. When the HARQ-ACK is an SPS PDSCH HARQ-ACK, the CSI and the HARQ-ACK are cascaded and encoded jointly, and then transmitted on a PUCCH resource corresponding to the CSI.

According to the embodiments of the present disclosure, through the UCI retransmission, it is able to prevent the system transmission performance from being deteriorated when the UCI is dropped due to various conflicts, thereby to improve the entire transmission performance of the system.

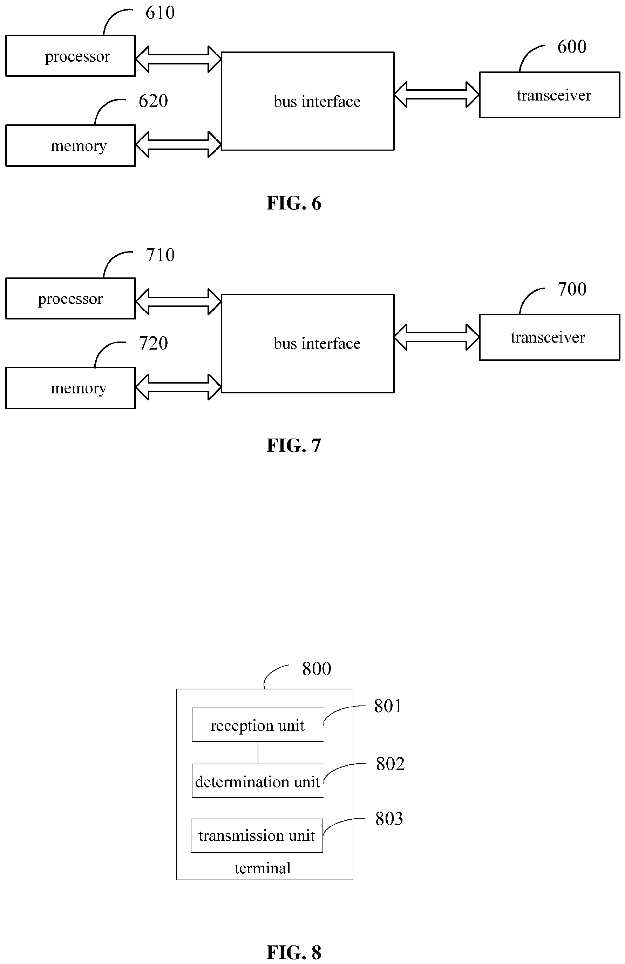

As shown in FIG. 6, the present disclosure further provides in some embodiments a terminal, which includes a memory 620, a transceiver 600 and a processor 610. The memory 620 is configured to store therein a computer program. The transceiver 600 is configured to transmit and receive data under the control of the processor 610. The processor 610 is configured to read the computer program in the memory 620 so as to: receive a first PDCCH, the first PDCCH including a retransmission indication information; determine a first time unit in accordance with the retransmission indication information; and transmit first UCI in a second time unit, the first UCI being UCI dropped in the first time unit, the second time unit being a time unit where uplink channel corresponding to the first PDCCH is transmitted.

The transceiver 600 is configured to transmit and receive data under the control of the processor 610.

In FIG. 6, bus architecture may include a number of buses and bridges connected to each other, so as to connect various circuits for one or more processors 610 and one or more memories 620. In addition, as is known in the art, the bus architecture may be used to connect any other circuits, such as a circuit for a peripheral device, a circuit for a voltage stabilizer and a power management circuit. A bus interface may be provided, and the transceiver 600 may consist of a plurality of elements, i.e., a transmitter and a receiver for communication with any other devices over a transmission medium. The transmission medium includes a wireless channel, a wired channel or an optical cable. With respect to different User Equipments (UEs), a user interface 630 may also be provided for devices which are to be arranged inside or outside the UE, and these devices may include but not limited to a keypad, a display, a speaker, a microphone and a joystick.

The processor 610 may take charge of managing the bus architecture as well as general processings. The memory 620 may store therein data for the operation of the processor 610.

In a possible embodiment of the present disclosure, the processor 610 is a Central Processing Unit (CPU), an Application Specific Integrated Circuit (ASIC), a Field-Programmable Gate Array (FPGA) or a Complex Programmable Logic Device (CPLD). The processor may also use multi-core architecture.

The processor is configured to call the computer program in the memory, so as to implement any method in the embodiments of the present disclosure in accordance with obtained executable instructions. The processor may also be physically separated from the memory.

In a possible embodiment of the present disclosure, a value range of the retransmission indication information includes a first indication state and a second indication state, the first indication state indicates that no UCI retransmission is to be performed, and the second indication state indicates that UCI retransmission is to be performed. The determining the first time unit in accordance with the retransmission indication information includes determining the first time unit in accordance with the retransmission indication information in the case that the retransmission indication information is in the second indication state.

In a possible embodiment of the present disclosure, the retransmission indication information is used to indicate an offset value, and the terminal determines the first time unit in accordance with the offset value; or the retransmission indication information includes K bits, each bit corresponds to a sub-time period in a predefined time period, the first time unit includes one or more time units contained in a sub-time period corresponding to a bit having a first value in the K bits, K is an integer greater than or equal to 1, and one sub-time period includes at least one time unit; or the retransmission indication information includes K bits, each bit corresponds to a time unit in a predefined time period, the first time unit includes one or more time units corresponding to a bit having a first value in the K bits, and K is an integer greater than or equal to 1.

In a possible embodiment of the present disclosure, the determining the first time unit in accordance with the offset value includes: determining one or more time units before the time unit where the uplink channel scheduled by the first PDCCH is transmitted as the first time unit in accordance with the offset value and the time unit where the uplink channel scheduled by the first PDCCH is transmitted; or determining one or more time units before a time unit where the first PDCCH is transmitted as the first time unit in accordance with the offset value and the time unit where the first PDCCH is transmitted; or determining one or more time units before a time unit where a downlink shared channel scheduled by the first PDCCH is transmitted as the first time unit in accordance with the offset value and the time unit where the downlink shared channel scheduled by the first PDCCH is transmitted.

In a possible embodiment of the present disclosure, a unit of the offset value is determined with a definition of the first time unit as a reference; or the unit of the offset value is determined with a definition of the second time unit as a reference; or in the case that the definition of the first time unit is different from the definition of the second time unit, the unit of the offset value is determined with the definition of a time unit, with a larger time length between the first time unit and the second time unit, as a reference; or in the case that the definition of the first time unit is different from the definition of the second time unit, the unit of the offset value is determined with the definition of a time unit, with a smaller time length between the first time unit and the second time unit, as a reference; or the unit of the offset value is determined with the definition of the first time unit and the definition of the second time unit as a reference, or with the definition of any of the first time unit and the second time unit as a reference; wherein the definition of the first time unit is the same as the definition of the second time unit through pre-definition or configuration.

In a possible embodiment of the present disclosure, the predefined time period includes one of a predefined time period containing the first PDCCH transmission, a predefined time period before the first PDCCH transmission, a predefined time period containing uplink channel transmission scheduled by the first PDCCH, or a predefined time period before the uplink channel transmission scheduled by the first PDCCH; and/or a unit of a time unit corresponding to each bit or a unit of a sub-time period corresponding to each bit is determined with a definition of the first time unit as a reference; or a unit of the time unit corresponding to each bit or a unit of a sub-time period corresponding to each bit, is determined with a definition of the second time unit as a reference; or in the case that the definition of the first time unit is different from the definition of the second time unit, a unit of the time unit corresponding to each bit or a unit of a sub-time period corresponding to each bit, is determined with the definition of a time unit with a larger time length between the first time unit and the second time unit as a reference; or in the case that the definition of the first time unit is different from the definition of the second time unit, a unit of the time unit corresponding to each bit or a unit of a sub-time period corresponding to each bit, is determined with a time unit with a smaller time length between the first time unit and the second time unit as a reference; or a unit of the time unit corresponding to each bit or a unit of a sub-time period corresponding to each bit, is determined with the definition of the first time unit and the definition of the second time unit as a reference, or with the definition of any of the first time unit and the second time unit as a reference; wherein the definition of the first time unit is the same as the definition of the second time unit through pre-definition or configuration.

In a possible embodiment of the present disclosure, causes for dropping the first UCI include at least one of: that there is a conflict between an uplink channel carrying the first UCI and the other channel, the other channel having a priority level higher than the uplink channel carrying the first UCI; that all or parts of transmission resources for the uplink channel carrying the first UCI are contained in an uplink region which is notified to be ceased or cancelled through uplink cancellation indication signaling in the case that uplink cancellation is configured for the terminal; that there are symbols occupied by a downlink symbol or a Synchronization Signal Block (SSB) configured through high-layer signaling in a symbol set of the uplink channel carrying the first UCI; that a flexible symbol configured through high-layer signaling is contained in the symbol set of the uplink channel carrying the first UCI and there is a downlink transmission scheduled by a PDCCH on the flexible symbol, or the flexible symbol is indicated as a downlink symbol through indication information in DCI indicating a slot structure when the terminal is configured to detect the DCI indicating the slot structure; that the flexible symbol configured through high-layer signaling is contained in the symbol set of the uplink channel carrying the first UCI, the terminal is configured to detect the DCI indicating the slot structure but the terminal fails to receive the DCI indicating the slot structure; that a PUSCH carrying the first UCI is located in a region where uplink skipping is executed by the terminal; or that a CG PUSCH carrying the first UCI is ceased or cancelled due to the other PUSCH with DCI scheduling.

In a possible embodiment of the present disclosure, the definition of each of the first time unit and the second time unit includes one of at least one subframe, at least one slot or at least one sub-slot, and the definition of the first time unit is the same as or different from the definition of the second time unit.

In a possible embodiment of the present disclosure, in the case that a plurality of first PDCCHs has been received by the terminal and one or more HARQ-ACKs for one or more PDSCHs scheduled by the plurality of first PDCCHs and/or for a SPS PDSCH release indicated by the plurality of first PDCCHs are transmitted in the second time unit, offset values indicated through retransmission indication information in the plurality of first PDCCHs are the same; or the offset values indicated through retransmission indication information in the plurality of first PDCCHs are different, and the first time unit is determined in accordance with a retransmission indication field in each first PDCCH in the plurality of first PDCCHs or a retransmission indication field in a last one of the plurality of first PDCCHs.

In a possible embodiment of the present disclosure, in the case that the first PDCCH includes a priority level indication field, a priority level of the first UCI is the same as or different from a priority level indicated in the priority level indication field, or the priority level of the first UCI is greater than or equal to the priority level indicated in the priority level indication field; or in the case that the first PDCCH does not include the priority level indication field, the priority level of the first UCI is the same as or different from a predefined priority level corresponding to DCI used by the first PDCCH, or the priority level of the first UCI is greater than or equal to the predefined priority level corresponding to the DCI used by the first PDCCH.

In a possible embodiment of the present disclosure, the transmitting the first UCI in the second time unit includes transmitting the first UCI in the second time unit in accordance with a size and bits of the first UCI in the first time unit.

In a possible embodiment of the present disclosure, in the case that the other UCI is not transmitted by the terminal in the second time unit, the transmitting the first UCI in the second time unit includes: when a PDSCH transmission is scheduled by the first PDCCH or an SPS PDSCH release is indicated by the first PDCCH, and an HARQ-ACK for the PDSCH or SPS PDSCH release is transmitted in the second time unit, transmitting the first UCI on a PUCCH resource in the second time unit, the PUCCH resource being determined in accordance with the quantity of bits of the first UCI and a PUCCH resource indication field in the first PDCCH, or the PUCCH resource being determined in accordance with a PUCCH resource index corresponding to the first UCI in the first time unit, or the PUCCH resource being a resource preconfigured through high-layer signaling; or when a PUSCH is scheduled by the first PDCCH to be transmitted in the second time unit, transmitting the first UCI on a PUSCH resource in the second time unit.

In a possible embodiment of the present disclosure, in the case that the first time unit includes a plurality of time units, the processor is further configured to: cascade a plurality of pieces of first UCI dropped in the plurality of time units to each other in a predetermined cascading order, and transmit the cascaded first UCI on a PUCCH resource in the second time unit, the PUCCH resource being determined in accordance with a PUCCH resource index in a target time unit in the plurality of time units corresponding to the first UCI in the target time unit, the target time unit being a first one of the plurality of time units, a last one of the plurality of time units or a time unit in the plurality of time units in which the PUCCH resource corresponding to the first UCI has a maximum capacity, or the PUCCH resource being determined in accordance with the quantity of bits of the cascaded first UCI and a PUCCH resource indication field in the first PDCCH, or the PUCCH resource being a resource preconfigured through high-layer signaling, the predetermined cascading order including at least one of a chronological order of the time units or an order of UCI types; or independently transmit the plurality of pieces of first UCI dropped in the plurality of time units on a plurality of PUCCH resources in the second time unit, the plurality of PUCCH resources being determined in accordance with a PUCCH resource index corresponding to each of the plurality of pieces of first UCI in a corresponding time unit within the plurality of time units.

In a possible embodiment of the present disclosure, in the case that second UCI is transmitted by the terminal in the second time unit, the transmitting the first UCI in the second time unit includes: transmitting the first UCI and the second UCI in a multiplexing manner through a same PUCCH resource, the PUCCH resource being determined in accordance with the total quantity of bits of the first UCI and the second UCI and a PUCCH resource indication field in the first PDCCH, or the PUCCH resource being a resource preconfigured through high-layer signaling; or when HARQ-ACK is contained in both the first UCI and the second UCI, cascading the second UCI with the first UCI, and transmitting the first UCI and the second UCI through a same PUCCH resource, the PUCCH resource being determined in accordance with the total quantity of bits of the first UCI and the second UCI and a PUCCH resource indication field in the first PDCCH, or the PUCCH resource being a resource preconfigured through high-layer signaling; or transmitting the first UCI through a first PUCCH resource and transmitting the second UCI through a second PUCCH resource, wherein the first PUCCH resource does not overlap with the second PUCCH resource in a time domain, the first PUCCH resource being determined in accordance with the quantity of bits of the first UCI and a PUCCH resource indication field in the first PDCCH, or the first PUCCH resource being determined in accordance with a PUCCH resource index corresponding to the first UCI in the first time unit, or the first PUCCH resource being a resource preconfigured through high-layer signaling; or determining a first PUCCH resource corresponding to the first UCI and a second PUCCH resource corresponding to the second UCI, transmitting the first UCI through the first PUCCH resource and transmitting the second UCI through the second PUCCH resource when the first PUCCH resource does not overlap with the second PUCCH resource in a time domain, and transmitting the first UCI and the second UCI in a multiplexing manner through a same PUCCH resource when the first PUCCH resource overlaps with the second PUCCH resource in the time domain, the first PUCCH resource being determined in accordance with the quantity of bits of the first UCI and a PUCCH resource indication field in the first PDCCH, or the first PUCCH resource being determined in accordance with a PUCCH resource index corresponding to the first UCI in the first time unit, or the first PUCCH resource being a resource preconfigured through high-layer signaling.

In a possible embodiment of the present disclosure, a type of the first UCI is the same as or different from a type of the second UCI, and the second UCI includes at least one of an HARQ-ACK of the first PDCCH, or an HARQ-ACK of a PDSCH scheduled by the first PDCCH.

In a possible embodiment of the present disclosure, the first UCI includes at least one of an HARQ-ACK, CSI or an SR; and/or the first UCI includes all or parts of pieces of UCI dropped by the terminal in the first time unit.

In a possible embodiment of the present disclosure, in the case that the processor determines that the terminal supports or is configured with UCI retransmission, the first PDCCH includes the retransmission indication information.

It should be appreciated that, the terminal in the embodiments of the present disclosure is used to implement the steps of the above-mentioned method with a same technical effect, which will not be particularly defined herein.

As shown in FIG. 7, the present disclosure further provides in some embodiments a network device which includes a memory 720, a transceiver 700 and a processor 710. The memory 720 is configured to store therein a computer program. The transceiver 700 is configured to transmit and receive data under the control of the processor 710. The processor 710 is configured to read the computer program in the memory 720, so as to: transmit a first PDCCH to a terminal, the first PDCCH including retransmission indication information; and receive first UCI from the terminal in a second time unit, the first UCI being UCI dropped in a first time unit, the first time unit being a time unit determined in accordance with the retransmission indication information, and the second time unit being a time unit where uplink channel corresponding to the first PDCCH is transmitted.

The transceiver 700 is configured to receive and transmit data under the control of the processor 710.

In FIG. 7, bus architecture may include a number of buses and bridges connected to each other, so as to connect various circuits for one or more processors 710 and one or more memories 720. In addition, as is known in the art, the bus architecture may be used to connect any other circuits, such as a circuit for a peripheral device, a circuit for a voltage stabilizer and a power management circuit. A bus interface may be provided, and the transceiver 700 may consist of a plurality of elements, i.e., a transmitter and a receiver for communication with any other devices over a transmission medium, and the transmission medium includes a wireless channel, a wired channel or an optical cable. The processor 710 may take charge of managing the bus architecture as well as general processings. The memory 720 may store therein data for the operation of the processor 710.

The processor 710 is a CPU, an ASIC, an FPGA or a CPLD. The processor may use multi-core architecture.

The processor is configured to call the computer program in the memory, so as to implement the above-mentioned method in the embodiments of the present disclosure in accordance with obtained executable instructions. The processor may also be physical separated from the memory.

In a possible embodiment of the present disclosure, a value range of the retransmission indication information includes a first indication state and a second indication state, the first indication state indicates that no UCI retransmission is to be performed, and the second indication state indicates that UCI retransmission is to be performed. The first time unit is determined in accordance with the retransmission indication information in the case that the retransmission indication information is in the second indication state.

In a possible embodiment of the present disclosure, the retransmission indication information is used to indicate an offset value, and the first time unit is determined in accordance with the offset value; or the retransmission indication information includes K bits, each bit corresponds to a sub-time period in a predefined time period, the first time unit includes one or more time units contained in a sub-time period corresponding to a bit having a first value in the K bits, K is an integer greater than or equal to 1, and one sub-time period includes at least one time unit; or the retransmission indication information includes K bits, each bit corresponds to a time unit in a predefined time period, the first time unit includes one or more time units corresponding to a bit having a first value in the K bits, and K is an integer greater than or equal to 1.

In a possible embodiment of the present disclosure, the determining the first time unit in accordance with the offset value includes: determining one or more time units before the time unit where the uplink channel scheduled by the first PDCCH is transmitted as the first time unit in accordance with the offset value and the time unit where the uplink channel scheduled by the first PDCCH is transmitted; or determining one or more time units before a time unit where the first PDCCH is transmitted as the first time unit in accordance with the offset value and the time unit where the first PDCCH is transmitted; or determining one or more time units before a time unit where a downlink shared channel scheduled by the first PDCCH is transmitted as the first time unit in accordance with the offset value and the time unit where the downlink shared channel scheduled by the first PDCCH is transmitted.

In a possible embodiment of the present disclosure, a unit of the offset value is determined with a definition of the first time unit as a reference; or the unit of the offset value is determined with a definition of the second time unit as a reference; or in the case that the definition of the first time unit is different from the definition of the second time unit, the unit of the offset value is determined with the definition of a time unit, with a larger time length between the first time unit and the second time unit, as a reference; or in the case that the definition of the first time unit is different from the definition of the second time unit, the unit of the offset value is determined with the definition of a time unit, with a smaller time length between the first time unit and the second time unit, as a reference; or the unit of the offset value is determined with the definition of the first time unit and the definition of the second time unit as a reference, or with the definition of any of the first time unit and the second time unit as a reference; wherein the definition of the first time unit is the same as the definition of the second time unit through pre-definition or configuration.

In a possible embodiment of the present disclosure, the predefined time period includes one of a predefined time period containing the first PDCCH transmission, a predefined time period before the first PDCCH transmission, a predefined time period containing uplink channel transmission scheduled by the first PDCCH, or a predefined time period before the uplink channel transmission scheduled by the first PDCCH; and/or a unit of a time unit corresponding to each bit or a unit of a sub-time period corresponding to each bit is determined with a definition of the first time unit as a reference; or a unit of the time unit corresponding to each bit or a unit of a sub-time period corresponding to each bit, is determined with a definition of the second time unit as a reference; or in the case that the definition of the first time unit is different from the definition of the second time unit, a unit of the time unit corresponding to each bit or a unit of a sub-time period corresponding to each bit, is determined with the definition of a time unit with a larger time length between the first time unit and the second time unit as a reference; or in the case that the definition of the first time unit is different from the definition of the second time unit, a unit of the time unit corresponding to each bit or a unit of a sub-time period corresponding to each bit, is determined with a time unit with a smaller time length between the first time unit and the second time unit as a reference; or a unit of the time unit corresponding to each bit or a unit of a sub-time period corresponding to each bit, is determined with the definition of the first time unit and the definition of the second time unit as a reference, or with the definition of any of the first time unit and the second time unit as a reference; wherein the definition of the first time unit is the same as the definition of the second time unit through pre-definition or configuration.

In a possible embodiment of the present disclosure, causes for dropping the first UCI include at least one of: that there is a conflict between an uplink channel carrying the first UCI and the other channel, the other channel having a priority level higher than the uplink channel carrying the first UCI; that all or parts of transmission resources for the uplink channel carrying the first UCI are contained in an uplink region which is notified to be ceased or cancelled through uplink cancellation indication signaling in the case that uplink cancellation is configured for the terminal; that there are symbols occupied by a downlink symbol or an SSB configured through high-layer signaling in a symbol set of the uplink channel carrying the first UCI; that a flexible symbol configured through high-layer signaling is contained in the symbol set of the uplink channel carrying the first UCI and there is a downlink transmission scheduled by a PDCCH on the flexible symbol, or the flexible symbol is indicated as a downlink symbol through indication information in DCI indicating a slot structure when the terminal is configured to detect the DCI indicating the slot structure; that the flexible symbol configured through high-layer signaling is contained in the symbol set of the uplink channel carrying the first UCI, the terminal is configured to detect the DCI indicating the slot structure but the terminal fails to receive the DCI indicating the slot structure; that a PUSCH carrying the first UCI is located in a region where uplink skipping is executed by the terminal; or that a CG PUSCH carrying the first UCI is ceased or cancelled due to the other PUSCH with DCI scheduling.

In a possible embodiment of the present disclosure, the definition of each of the first time unit and the second time unit includes one of at least one subframe, at least one slot or at least one sub-slot, and the definition of the first time unit is the same as or different from the definition of the second time unit.

In a possible embodiment of the present disclosure, in the case that a plurality of first PDCCHs has been transmitted by the network device and one or more HARQ-ACKs for one or more PDSCHs scheduled by the plurality of first PDCCHs and/or for a SPS PDSCH release indicated by the plurality of first PDCCHs are transmitted in the second time unit, offset values indicated through retransmission indication information in the plurality of first PDCCHs are the same; or the offset values indicated through retransmission indication information in the plurality of first PDCCHs are different, and the first time unit is determined in accordance with a retransmission indication field in each first PDCCH in the plurality of first PDCCHs or a retransmission indication field in a last one of the plurality of first PDCCHs.

In a possible embodiment of the present disclosure, in the case that the first PDCCH includes a priority level indication field, a priority level of the first UCI is the same as or different from a priority level indicated in the priority level indication field, or the priority level of the first UCI is greater than or equal to the priority level indicated in the priority level indication field; or in the case that the first PDCCH does not include the priority level indication field, the priority level of the first UCI is the same as or different from a predefined priority level corresponding to DCI used by the first PDCCH, or the priority level of the first UCI is greater than or equal to the predefined priority level corresponding to the DCI used by the first PDCCH.

In a possible embodiment of the present disclosure, the first UCI is transmitted in the second time unit in accordance with a size and bits of the first UCI in the first time unit.

In a possible embodiment of the present disclosure, in the case that the other UCI does not need to be received by the network device in the second time unit, the receiving, by the network device, the first UCI from the terminal in the second time unit includes: when a PDSCH transmission is scheduled by the first PDCCH or an SPS PDSCH release is indicated by the first PDCCH, and an HARQ-ACK for the PDSCH or SPS PDSCH release is transmitted in the second time unit, receiving the first UCI on a PUCCH resource in the second time unit, the PUCCH resource being determined in accordance with the quantity of bits of the first UCI and a PUCCH resource indication field in the first PDCCH, or the PUCCH resource being determined in accordance with a PUCCH resource index corresponding to the first UCI in the first time unit, or the PUCCH resource being a resource preconfigured through high-layer signaling; or when a PUSCH is scheduled by the first PDCCH to be transmitted in the second time unit, receiving the first UCI on a PUSCH resource in the second time unit.

In a possible embodiment of the present disclosure, in the case that the first time unit includes a plurality of time units, the processor is configured to read the computer program so as to: determine that a plurality of pieces of first UCI dropped in the plurality of time units is cascaded to each other in a predetermined cascading order, and receive the cascaded first UCI on a PUCCH resource in the second time unit, the PUCCH resource being determined in accordance with a PUCCH resource index in a target time unit in the plurality of time units corresponding to the first UCI in the target time unit, the target time unit being a first one of the plurality of time units, a last one of the plurality of time units or a time unit in the plurality of time units in which the PUCCH resource corresponding to the first UCI has a maximum capacity, or the PUCCH resource being determined in accordance with the quantity of bits of the cascaded first UCI and a PUCCH resource indication field in the first PDCCH, or the PUCCH resource being a resource preconfigured through high-layer signaling, the predetermined cascading order including at least one of a chronological order of the time units or an order of UCI types; or independently receive the plurality of pieces of first UCI dropped in the plurality of time units on a plurality of PUCCH resources in the second time unit, the plurality of PUCCH resources being determined in accordance with a PUCCH resource index corresponding to each of the plurality of pieces of first UCI in a corresponding time unit within the plurality of time units.

In a possible embodiment of the present disclosure, in the case that second UCI needs to be received by the network device in the second time unit, the receiving the first UCI from the terminal in the second time unit includes: receiving the first UCI and the second UCI transmitted in a multiplexing manner through a same PUCCH resource, the PUCCH resource being determined in accordance with the total quantity of bits of the first UCI and the second UCI and a PUCCH resource indication field in the first PDCCH, or the PUCCH resource being a resource preconfigured through high-layer signaling; or when HARQ-ACK is contained in both the first UCI and the second UCI, determining that the second UCI is cascaded with the first UCI, and receiving the first UCI and the second UCI transmitted in a cascading manner through a same PUCCH resource, the PUCCH resource being determined in accordance with the total quantity of bits of the first UCI and the second UCI and a PUCCH resource indication field in the first PDCCH, or the PUCCH resource being a resource preconfigured through high-layer signaling; or receiving the first UCI through a first PUCCH resource and receiving the second UCI through a second PUCCH resource, wherein the first PUCCH resource does not overlap with the second PUCCH resource in a time domain, the first PUCCH resource being determined in accordance with the quantity of bits of the first UCI and a PUCCH resource indication field in the first PDCCH, or the first PUCCH resource being determined in accordance with a PUCCH resource index corresponding to the first UCI in the first time unit, or the first PUCCH resource being a resource preconfigured through high-layer signaling; or determining a first PUCCH resource corresponding to the first UCI and a second PUCCH resource corresponding to the second UCI, receiving the first UCI through the first PUCCH resource and receiving the second UCI through the second PUCCH resource when the first PUCCH resource does not overlap with the second PUCCH resource in a time domain, and receiving the first UCI and the second UCI transmitted in a multiplexing manner through a same PUCCH resource when the first PUCCH resource overlaps with the second PUCCH resource in the time domain, the first PUCCH resource being determined in accordance with the quantity of bits of the first UCI and a PUCCH resource indication field in the first PDCCH, or the first PUCCH resource being determined in accordance with a PUCCH resource index corresponding to the first UCI in the first time unit, or the first PUCCH resource being a resource preconfigured through high-layer signaling.

In a possible embodiment of the present disclosure, a type of the first UCI is the same as or different from a type of the second UCI, and the second UCI includes at least one of an HARQ-ACK of the first PDCCH, or an HARQ-ACK of a PDSCH scheduled by the first PDCCH.

In a possible embodiment of the present disclosure, the first UCI includes at least one of an HARQ-ACK, CSI or an SR; and/or the first UCI includes all or parts of pieces of UCI dropped by the terminal in the first time unit.

In a possible embodiment of the present disclosure, in the case that the processor determines that the terminal supports or is configured with UCI retransmission, the first PDCCH includes the retransmission indication information.

It should be appreciated that, the network device in the embodiments of the present disclosure is used to implement the steps of the above-mentioned method with a same technical effect, which will not be particularly defined herein.

As shown in FIG. 8, the present disclosure further provides in some embodiments a terminal 800, which includes: a reception unit 801 configured to receive a first PDCCH, the first PDCCH including a retransmission indication information; a determination unit 802 configured to determine a first time unit in accordance with the retransmission indication information; and a transmission unit 803 configured to transmit first UCI in a second time unit, the first UCI being UCI dropped in the first time unit, the second time unit being a time unit where uplink channel corresponding to the first PDCCH is transmitted.

In a possible embodiment of the present disclosure, a value range of the retransmission indication information includes a first indication state and a second indication state, the first indication state indicates that no UCI retransmission is to be performed, and the second indication state indicates that UCI retransmission is to be performed. The determination unit 802 is further configured to determine the first time unit in accordance with the retransmission indication information in the case that the retransmission indication information is in the second indication state.

In a possible embodiment of the present disclosure, a value range of the retransmission indication information includes a first indication state and a second indication state, the first indication state indicates that no UCI retransmission is to be performed, and the second indication state indicates that UCI retransmission is to be performed. The determination unit 802 is further configured to determine the first time unit in accordance with the retransmission indication information in the case that the retransmission indication information is in the second indication state.

In a possible embodiment of the present disclosure, the retransmission indication information is used to indicate an offset value, and the determination unit 802 is configured to determine the first time unit in accordance with the offset value; or the retransmission indication information includes K bits, each bit corresponds to a sub-time period in a predefined time period, the first time unit includes one or more time units contained in a sub-time period corresponding to a bit having a first value in the K bits, K is an integer greater than or equal to 1, and one sub-time period includes at least one time unit; or the retransmission indication information includes K bits, each bit corresponds to a time unit in a predefined time period, the first time unit includes one or more time units corresponding to a bit having a first value in the K bits, and K is an integer greater than or equal to 1.

In a possible embodiment of the present disclosure, the determination unit 802 is further configured to: determine one or more time units before the time unit where the uplink channel transmission is performed as the first time unit in accordance with the offset value and the time unit where the uplink channel scheduled by the first PDCCH is transmitted; or determine one or more time units before a time unit where first PDCCH transmission is performed as the first time unit in accordance with the offset value and the time unit where the first PDCCH transmission is performed; or determine one or more time units before a time unit where downlink channel transmission is performed as the first time unit in accordance with the offset value and the time unit where the downlink shared channel scheduled by the first PDCCH is transmitted.

In a possible embodiment of the present disclosure, a unit of the offset value is determined with a definition of the first time unit as a reference; or the unit of the offset value is determined with a definition of the second time unit as a reference; or in the case that the definition of the first time unit is different from the definition of the second time unit, the unit of the offset value is determined with the definition of a time unit, with a larger time length between the first time unit and the second time unit, as a reference; or in the case that the definition of the first time unit is different from the definition of the second time unit, the unit of the offset value is determined with the definition of a time unit, with a smaller time length between the first time unit and the second time unit, as a reference; or the unit of the offset value is determined with the definition of the first time unit and the definition of the second time unit as a reference, or with the definition of any of the first time unit and the second time unit as a reference; wherein the definition of the first time unit is the same as the definition of the second time unit through pre-definition or configuration.

In a possible embodiment of the present disclosure, the predefined time period includes one of a predefined time period containing the first PDCCH transmission, a predefined time period before the first PDCCH transmission, a predefined time period containing uplink channel transmission scheduled by the first PDCCH, or a predefined time period before the uplink channel transmission scheduled by the first PDCCH; and/or a unit of a time unit corresponding to each bit or a unit of a sub-time period corresponding to each bit is determined with a definition of the first time unit as a reference; or a unit of the time unit corresponding to each bit or a unit of a sub-time period corresponding to each bit, is determined with a definition of the second time unit as a reference; or in the case that the definition of the first time unit is different from the definition of the second time unit, a unit of the time unit corresponding to each bit or a unit of a sub-time period corresponding to each bit, is determined with the definition of a time unit with a larger time length between the first time unit and the second time unit as a reference; or in the case that the definition of the first time unit is different from the definition of the second time unit, a unit of the time unit corresponding to each bit or a unit of a sub-time period corresponding to each bit, is determined with a time unit with a smaller time length between the first time unit and the second time unit as a reference; or a unit of the time unit corresponding to each bit or a unit of a sub-time period corresponding to each bit, is determined with the definition of the first time unit and the definition of the second time unit as a reference, or with the definition of any of the first time unit and the second time unit as a reference; wherein the definition of the first time unit is the same as the definition of the second time unit through pre-definition or configuration.

In a possible embodiment of the present disclosure, causes for dropping the first UCI include at least one of: that there is a conflict between an uplink channel carrying the first UCI and the other channel, the other channel having a priority level higher than the uplink channel carrying the first UCI; that all or parts of transmission resources for the uplink channel carrying the first UCI are contained in an uplink region which is notified to be ceased or cancelled through uplink cancellation indication signaling in the case that uplink cancellation is configured for the terminal; that there are symbols occupied by a downlink symbol or an SSB configured through high-layer signaling in a symbol set of the uplink channel carrying the first UCI; that a flexible symbol configured through high-layer signaling is contained in the symbol set of the uplink channel carrying the first UCI and there is a downlink transmission scheduled by a PDCCH on the flexible symbol, or the flexible symbol is indicated as a downlink symbol through indication information in DCI indicating a slot structure when the terminal is configured to detect the DCI indicating the slot structure; that the flexible symbol configured through high-layer signaling is contained in the symbol set of the uplink channel carrying the first UCI, the terminal is configured to detect the DCI indicating the slot structure but the terminal fails to receive the DCI indicating the slot structure; that a PUSCH carrying the first UCI is located in a region where uplink skipping is executed by the terminal; or that a CG PUSCH carrying the first UCI is ceased or cancelled due to the other PUSCH with DCI scheduling.

In a possible embodiment of the present disclosure, the definition of each of the first time unit and the second time unit includes one of at least one subframe, at least one slot or at least one sub-slot, and the definition of the first time unit is the same as or different from the definition of the second time unit.

In a possible embodiment of the present disclosure, in the case that a plurality of first PDCCHs has been received by the terminal and one or more HARQ-ACKs for one or more PDSCHs scheduled by the plurality of first PDCCHs and/or for a SPS PDSCH release indicated by the plurality of first PDCCHs are transmitted in the second time unit, offset values indicated through retransmission indication information in the plurality of first PDCCHs are the same; or the offset values indicated through retransmission indication information in the plurality of first PDCCHs are different, and the first time unit is determined in accordance with a retransmission indication field in each first PDCCH in the plurality of first PDCCHs or a retransmission indication field in a last one of the plurality of first PDCCHs.

In a possible embodiment of the present disclosure, in the case that the first PDCCH includes a priority level indication field, a priority level of the first UCI is the same as or different from a priority level indicated in the priority level indication field, or the priority level of the first UCI is greater than or equal to the priority level indicated in the priority level indication field; or in the case that the first PDCCH does not include the priority level indication field, the priority level of the first UCI is the same as or different from a predefined priority level corresponding to DCI used by the first PDCCH, or the priority level of the first UCI is greater than or equal to the predefined priority level corresponding to the DCI used by the first PDCCH.

In a possible embodiment of the present disclosure, the transmission unit 803 is further configured to transmit the first UCI in the second time unit in accordance with a size and bits of the first UCI in the first time unit.

In a possible embodiment of the present disclosure, in the case that the other UCI is not transmitted by the terminal in the second time unit, the transmission unit 803 is further configured to: when a PDSCH transmission is scheduled by the first PDCCH or an SPS PDSCH release is indicated by the first PDCCH, and an HARQ-ACK for the PDSCH or SPS PDSCH release is transmitted in the second time unit, transmit the first UCI on PUCCH resources in the second time unit, the PUCCH resources being determined in accordance with the quantity of bits of the first UCI and a PUCCH resource indication field in the first PDCCH, or the PUCCH resource being determined in accordance with a PUCCH resource index corresponding to the first UCI in the first time unit, or the PUCCH resource being a resource preconfigured through high-layer signaling; or when a PUSCH is scheduled by the first PDCCH to be transmitted in the second time unit, transmit the first UCI on PUSCH resources in the second time unit.

In a possible embodiment of the present disclosure, in the case that the first time unit includes a plurality of time units, the transmitting, by the terminal, the first UCI in the second time unit includes: cascading a plurality of pieces of first UCI dropped in the plurality of time units to each other in a predetermined cascading order, and transmitting the cascaded first UCI on a PUCCH resource in the second time unit, the PUCCH resource being determined in accordance with a PUCCH resource index in a target time unit in the plurality of time units corresponding to the first UCI in the target time unit, the target time unit being a first one of the plurality of time units, a last one of the plurality of time units or a time unit in the plurality of time units in which the PUCCH resource corresponding to the first UCI has a maximum capacity, or the PUCCH resource being determined in accordance with the quantity of bits of the cascaded first UCI and a PUCCH resource indication field in the first PDCCH, or the PUCCH resource being a resource preconfigured through high-layer signaling, the predetermined cascading order including at least one of a chronological order of the time units or an order of UCI types; or independently transmitting the plurality of pieces of first UCI dropped in the plurality of time units on a plurality of PUCCH resources in the second time unit, the plurality of PUCCH resources being determined in accordance with a PUCCH resource index corresponding to each of the plurality of pieces of first UCI in a corresponding time unit within the plurality of time units.

In a possible embodiment of the present disclosure, in the case that second UCI is transmitted by the terminal in the second time unit, the transmission unit 803 is further configured to: transmit the first UCI and the second UCI through a same PUCCH resource, the PUCCH resource being determined in accordance with the total quantity of bits of the first UCI and the second UCI and a PUCCH resource indication field in the first PDCCH, or the PUCCH resource being a resource preconfigured through high-layer signaling; or when HARQ-ACK is contained in both the first UCI and the second UCI, cascade the second UCI with the first UCI, and transmit the first UCI and the second UCI through a same PUCCH resource, the PUCCH resource being determined in accordance with the total quantity of bits of the first UCI and the second UCI and a PUCCH resource indication field in the first PDCCH, or the PUCCH resource being a resource preconfigured through high-layer signaling; or transmit the first UCI through a first PUCCH resource and transmitting the second UCI through a second PUCCH resource, wherein the first PUCCH resource does not overlap with the second PUCCH resource in a time domain, the first PUCCH resource being determined in accordance with the quantity of bits of the first UCI and a PUCCH resource indication field in the first PDCCH, or the first PUCCH resource being determined in accordance with a PUCCH resource index corresponding to the first UCI in the first time unit, or the first PUCCH resource being a resource preconfigured through high-layer signaling; or determine a first PUCCH resource corresponding to the first UCI and a second PUCCH resource corresponding to the second UCI, transmit the first UCI through the first PUCCH resource and transmitting the second UCI through the second PUCCH resource when the first PUCCH resource does not overlap with the second PUCCH resource in a time domain, and transmit the first UCI and the second UCI through a same PUCCH resource when the first PUCCH resource overlaps with the second PUCCH resource in the time domain, the first PUCCH resource being determined in accordance with the quantity of bits of the first UCI and a PUCCH resource indication field in the first PDCCH, or the first PUCCH resource being determined in accordance with a PUCCH resource index corresponding to the first UCI in the first time unit, or the first PUCCH resource being a resource preconfigured through high-layer signaling.

In a possible embodiment of the present disclosure, a type of the first UCI is the same as or different from a type of the second UCI, and the second UCI includes at least one of an HARQ-ACK of the first PDCCH, or an HARQ-ACK of a PDSCH scheduled by the first PDCCH.

In a possible embodiment of the present disclosure, the first UCI includes at least one of an HARQ-ACK, CSI or an SR; and/or the first UCI includes all or parts of pieces of UCI dropped by the terminal in the first time unit.

In a possible embodiment of the present disclosure, in the case that the terminal determines that the terminal supports or is configured with UCI retransmission, the first PDCCH includes the retransmission indication information.

It should be appreciated that, the terminal in the embodiments of the present disclosure is used to implement the steps of the above-mentioned method with a same technical effect, which will not be particularly defined herein.

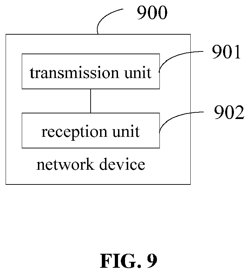

As shown in FIG. 9, the present disclosure further provides in some embodiments a network device 900, which includes: a transmission unit 901 configured to transmit a first PDCCH to a terminal, the first PDCCH including a retransmission indication information; and a reception unit 902 configured to receive first UCI from the terminal in a second time unit, the first UCI being UCI dropped in a first time unit, the first time unit being determined in accordance with the retransmission indication information, the second time unit being a time unit where uplink channel corresponding to the first PDCCH is transmitted.

In a possible embodiment of the present disclosure, a value range of the retransmission indication information includes a first indication state and a second indication state, the first indication state indicates that no UCI retransmission is to be performed, and the second indication state indicates that UCI retransmission is to be performed. The first time unit is determined in accordance with the retransmission indication information in the case that the retransmission indication information is in the second indication state.

In a possible embodiment of the present disclosure, the retransmission indication information is used to indicate an offset value, and the first time unit is determined in accordance with the offset value; or the retransmission indication information includes K bits, each bit corresponds to a sub-time period in a predefined time period, the first time unit includes one or more time units contained in a sub-time period corresponding to a bit having a first value in the K bits, K is an integer greater than or equal to 1, and one sub-time period includes at least one time unit; or the retransmission indication information includes K bits, each bit corresponds to a time unit in a predefined time period, the first time unit includes one or more time units corresponding to a bit having a first value in the K bits, and K is an integer greater than or equal to 1.

In a possible embodiment of the present disclosure, the determining the first time unit in accordance with the offset value includes: determining one or more time units before the time unit where the uplink channel scheduled by the first PDCCH is transmitted as the first time unit in accordance with the offset value and the time unit where the uplink channel scheduled by the first PDCCH is transmitted; or determining one or more time units before a time unit where the first PDCCH is transmitted as the first time unit in accordance with the offset value and the time unit where the first PDCCH is transmitted; or determining one or more time units before a time unit where a downlink shared channel scheduled by the first PDCCH is transmitted as the first time unit in accordance with the offset value and the time unit where the downlink shared channel scheduled by the first PDCCH is transmitted.

In a possible embodiment of the present disclosure, a unit of the offset value is determined with a definition of the first time unit as a reference; or the unit of the offset value is determined with a definition of the second time unit as a reference; or in the case that the definition of the first time unit is different from the definition of the second time unit, the unit of the offset value is determined with the definition of a time unit, with a larger time length between the first time unit and the second time unit, as a reference; or in the case that the definition of the first time unit is different from the definition of the second time unit, the unit of the offset value is determined with the definition of a time unit, with a smaller time length between the first time unit and the second time unit, as a reference; or the unit of the offset value is determined with the definition of the first time unit and the definition of the second time unit as a reference, or with the definition of any of the first time unit and the second time unit as a reference; wherein the definition of the first time unit is the same as the definition of the second time unit through pre-definition or configuration.

In a possible embodiment of the present disclosure, the predefined time period includes one of a predefined time period containing the first PDCCH transmission, a predefined time period before the first PDCCH transmission, a predefined time period containing uplink channel transmission scheduled by the first PDCCH, or a predefined time period before the uplink channel transmission scheduled by the first PDCCH; and/or a unit of a time unit corresponding to each bit or a unit of a sub-time period corresponding to each bit is determined with a definition of the first time unit as a reference; or a unit of the time unit corresponding to each bit or a unit of a sub-time period corresponding to each bit, is determined with a definition of the second time unit as a reference; or in the case that the definition of the first time unit is different from the definition of the second time unit, a unit of the time unit corresponding to each bit or a unit of a sub-time period corresponding to each bit, is determined with the definition of a time unit with a larger time length between the first time unit and the second time unit as a reference; or in the case that the definition of the first time unit is different from the definition of the second time unit, a unit of the time unit corresponding to each bit or a unit of a sub-time period corresponding to each bit, is determined with a time unit with a smaller time length between the first time unit and the second time unit as a reference; or a unit of the time unit corresponding to each bit or a unit of a sub-time period corresponding to each bit, is determined with the definition of the first time unit and the definition of the second time unit as a reference, or with the definition of any of the first time unit and the second time unit as a reference; wherein the definition of the first time unit is the same as the definition of the second time unit through pre-definition or configuration.

In a possible embodiment of the present disclosure, causes for dropping the first UCI include at least one of: that there is a conflict between an uplink channel carrying the first UCI and the other channel, the other channel having a priority level higher than the uplink channel carrying the first UCI; that all or parts of transmission resources for the uplink channel carrying the first UCI are contained in an uplink region which is notified to be ceased or cancelled through uplink cancellation indication signaling in the case that uplink cancellation is configured for the terminal; that there are symbols occupied by a downlink symbol or an SSB configured through high-layer signaling in a symbol set of the uplink channel carrying the first UCI; that a flexible symbol configured through high-layer signaling is contained in the symbol set of the uplink channel carrying the first UCI and there is a downlink transmission scheduled by a PDCCH on the flexible symbol, or the flexible symbol is indicated as a downlink symbol through indication information in DCI indicating a slot structure when the terminal is configured to detect the DCI indicating the slot structure; that the flexible symbol configured through high-layer signaling is contained in the symbol set of the uplink channel carrying the first UCI, the terminal is configured to detect the DCI indicating the slot structure but the terminal fails to receive the DCI indicating the slot structure; that a PUSCH carrying the first UCI is located in a region where uplink skipping is executed by the terminal; or that a CG PUSCH carrying the first UCI is ceased or cancelled due to the other PUSCH with DCI scheduling.

In a possible embodiment of the present disclosure, the definition of each of the first time unit and the second time unit includes one of at least one subframe, at least one slot or at least one sub-slot, and the definition of the first time unit is the same as or different from the definition of the second time unit.

In a possible embodiment of the present disclosure, in the case that a plurality of first PDCCHs has been transmitted by the network device and one or more HARQ-ACKs for one or more PDSCHs scheduled by the plurality of first PDCCHs and/or for a SPS PDSCH release indicated by the plurality of first PDCCHs are transmitted in the second time unit, offset values indicated through retransmission indication information in the plurality of first PDCCHs are the same; or the offset values indicated through retransmission indication information in the plurality of first PDCCHs are different, and the first time unit is determined in accordance with a retransmission indication field in each first PDCCH in the plurality of first PDCCHs or a retransmission indication field in a last one of the plurality of first PDCCHs.

In a possible embodiment of the present disclosure, in the case that the first PDCCH includes a priority level indication field, a priority level of the first UCI is the same as or different from a priority level indicated in the priority level indication field, or the priority level of the first UCI is greater than or equal to the priority level indicated in the priority level indication field; or in the case that the first PDCCH does not include the priority level indication field, the priority level of the first UCI is the same as or different from a predefined priority level corresponding to DCI used by the first PDCCH, or the priority level of the first UCI is greater than or equal to the predefined priority level corresponding to the DCI used by the first PDCCH.

In a possible embodiment of the present disclosure, the first UCI is transmitted in the second time unit in accordance with a size and bits of the first UCI in the first time unit.

In a possible embodiment of the present disclosure, in the case that the other UCI is not received by the network device in the second time unit, the reception unit 902 is further configured to: when a PDSCH transmission is scheduled by the first PDCCH or an SPS PDSCH release is indicated by the first PDCCH, and an HARQ-ACK for the PDSCH or SPS PDSCH release is transmitted in the second time unit, receive the first UCI on PUCCH resources in the second time unit, the PUCCH resources being determined in accordance with the quantity of bits of the first UCI and a PUCCH resource indication field in the first PDCCH, or the PUCCH resource being determined in accordance with a PUCCH resource index corresponding to the first UCI in the first time unit, or the PUCCH resource being a resource preconfigured through high-layer signaling; or when a PUSCH is scheduled by the first PDCCH to be transmitted in the second time unit, receive the first UCI on PUSCH resources in the second time unit.

In a possible embodiment of the present disclosure, in the case that the first time unit includes a plurality of time units, the reception unit 902 is further configured to: determine that a plurality of pieces of first UCI dropped in the plurality of time units is cascaded to each other in a predetermined cascading order, and receive the cascaded first UCI on a PUCCH resource in the second time unit, the PUCCH resource being determined in accordance with a PUCCH resource index in a target time unit in the plurality of time units corresponding to the first UCI in the target time unit, the target time unit being a first one of the plurality of time units, a last one of the plurality of time units or a time unit in the plurality of time units in which the PUCCH resource corresponding to the first UCI has a maximum capacity, or the PUCCH resource being determined in accordance with the quantity of bits of the cascaded first UCI and a PUCCH resource indication field in the first PDCCH, or the PUCCH resource being a resource preconfigured through high-layer signaling, the predetermined cascading order including at least one of a chronological order of the time units or an order of UCI types; or independently receive the plurality of pieces of first UCI dropped in the plurality of time units on a plurality of PUCCH resources in the second time unit, the plurality of PUCCH resources being determined in accordance with a PUCCH resource index corresponding to each of the plurality of pieces of first UCI in a corresponding time unit within the plurality of time units.

In a possible embodiment of the present disclosure, in the case that second UCI needs to be received by the network device in the second time unit, the receiving, by the network device, the first UCI from the terminal in the second time unit includes: receiving the first UCI and the second UCI transmitted in a multiplexing manner through a same PUCCH resource, the PUCCH resource being determined in accordance with the total quantity of bits of the first UCI and the second UCI and a PUCCH resource indication field in the first PDCCH, or the PUCCH resource being a resource preconfigured through high-layer signaling; or when HARQ-ACK is contained in both the first UCI and the second UCI, determining that the second UCI is cascaded with the first UCI, and receiving the first UCI and the second UCI transmitted in a cascading manner through a same PUCCH resource, the PUCCH resource being determined in accordance with the total quantity of bits of the first UCI and the second UCI and a PUCCH resource indication field in the first PDCCH, or the PUCCH resource being a resource preconfigured through high-layer signaling; or receiving the first UCI through a first PUCCH resource and receiving the second UCI through a second PUCCH resource, wherein the first PUCCH resource does not overlap with the second PUCCH resource in a time domain, the first PUCCH resource being determined in accordance with the quantity of bits of the first UCI and a PUCCH resource indication field in the first PDCCH, or the first PUCCH resource being determined in accordance with a PUCCH resource index corresponding to the first UCI in the first time unit, or the first PUCCH resource being a resource preconfigured through high-layer signaling; or determining a first PUCCH resource corresponding to the first UCI and a second PUCCH resource corresponding to the second UCI, receiving the first UCI through the first PUCCH resource and receiving the second UCI through the second PUCCH resource when the first PUCCH resource does not overlap with the second PUCCH resource in a time domain, and receiving the first UCI and the second UCI transmitted in a multiplexing manner through a same PUCCH resource when the first PUCCH resource overlaps with the second PUCCH resource in the time domain, the first PUCCH resource being determined in accordance with the quantity of bits of the first UCI and a PUCCH resource indication field in the first PDCCH, or the first PUCCH resource being determined in accordance with a PUCCH resource index corresponding to the first UCI in the first time unit, or the first PUCCH resource being a resource preconfigured through high-layer signaling.

In a possible embodiment of the present disclosure, a type of the first UCI is the same as or different from a type of the second UCI, and the second UCI includes at least one of an HARQ-ACK of the first PDCCH, or an HARQ-ACK of a PDSCH scheduled by the first PDCCH.

In a possible embodiment of the present disclosure, the first UCI includes at least one of an HARQ-ACK, CSI or an SR; and/or the first UCI includes all or parts of pieces of UCI dropped by the terminal in the first time unit.

In a possible embodiment of the present disclosure, in the case that the network device determines that the terminal supports or is configured with UCI retransmission, the first PDCCH includes the retransmission indication information.

It should be appreciated that, the network device in the embodiments of the present disclosure is used to implement the steps of the above-mentioned method with a same technical effect, which will not be particularly defined herein.

It should be appreciated that, in the embodiments of the present disclosure, the division of the units is for illustrative purposes, and the units are provided merely on the basis of their logic functions. In actual use, the units may be divided in any other ways. In addition, the functional units in the embodiments of the present disclosure may be integrated in one processing unit, or arranged separately, or two or more of the units may be integrated in one unit. The integrated units may be implemented in the form of hardware, or in the form of software functional units.

In the case that the integrated units are implemented in a software form and sold or used as a separate product, they may be stored in a processor-readable medium. Based on this, the technical solutions of the present disclosure, partial or full, or parts of the technical solutions of the present disclosure contributing to the related art, may appear in the form of software products, which may be stored in a storage medium and include several instructions so as to enable computer equipment (a personal computer, a server or network equipment) or a processor to execute all or parts of the steps of the method according to the embodiments of the present disclosure. The storage medium includes any medium capable of storing therein program codes, e.g., a universal serial bus (USB) flash disk, a mobile hard disk (HD), a read-only memory (ROM), a random access memory (RAM), a magnetic disk or an optical disk.

The present disclosure further provides in some embodiments a processor-readable storage medium storing therein a computer program. The computer program is executed by a processor so as to implement the above-mentioned UCI transmission method or UCI reception method.

The processor-readable storage medium may be any available medium or data storage device capable of being accessed by a processor, which includes, but not limited to, a magnetic memory (e.g., floppy disk, hard disk, magnetic tape, or Magnetic Optical disk (MO)), an optical memory (e.g., Compact Disk (CD), Digital Video Disk (DVD), Blue-ray Disk (BD), or High-definition Versatile Disk (HVD)), or a semiconductor memory (e.g., ROM, Electrically Programmable ROM (EPROM), Electrically Erasable PROM (EEPROM), NAND flash, or Solid-State Disk (SSD)).

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to a disk memory and an optical memory) including computer-readable program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicated computer, an embedded processor or any other programmable data processing devices to create a machine, so that instructions capable of being executed by the processor of the computer or the other programmable data processing devices may create a device to achieve the functions assigned in one or more work flows in the flow chart and/or one or more blocks in the block diagram.

These computer program instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These computer program instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

The above embodiments are for illustrative purposes only, but the present disclosure is not limited thereto. Obviously, a person skilled in the art may make further modifications and improvements without departing from the spirit of the present disclosure, and these modifications and improvements shall also fall within the scope of the present disclosure.

## Claims

1. An Uplink Control Information (UCI) transmission method, comprising:
receiving, by a terminal, a first Physical Downlink Control Channel (PDCCH), the first PDCCH comprising a retransmission indication information;
determining, by the terminal, a first time unit in accordance with the retransmission indication information; and
transmitting, by the terminal, first UCI in a second time unit, the first UCI being UCI dropped in the first time unit, the second time unit being a time unit where uplink channel corresponding to the first PDCCH is transmitted.

2. The UCI transmission method according to claim 1, wherein a value range of the retransmission indication information comprises a first indication state and a second indication state, the first indication state indicates that no UCI retransmission is to be performed, and the second indication state indicates that UCI retransmission is to be performed, wherein the determining, by the terminal, the first time unit in accordance with the retransmission indication information comprises determining the first time unit in accordance with the retransmission indication information in the case that the retransmission indication information is in the second indication state.

3. The UCI transmission method according to claim 1, wherein the retransmission indication information is used to indicate an offset value, and the terminal determines the first time unit in accordance with the offset value; or
the retransmission indication information comprises K bits, each bit corresponds to a sub-time period in a predefined time period, the first time unit comprises one or more time units contained in a sub-time period corresponding to a bit having a first value in the K bits, K is an integer greater than or equal to 1, and one sub-time period comprises at least one time unit; or
the retransmission indication information comprises K bits, each bit corresponds to a time unit in a predefined time period, the first time unit comprises one or more time units corresponding to a bit having a first value in the K bits, and K is an integer greater than or equal to 1.

4. The UCI transmission method according to claim 3, wherein the determining, by the terminal, the first time unit in accordance with the offset value comprises:
determining one or more time units before the time unit where the uplink channel scheduled by the first PDCCH is transmitted as the first time unit in accordance with the offset value and the time unit where the uplink channel scheduled by the first PDCCH is transmitted; or
determining one or more time units before a time unit where the first PDCCH is transmitted as the first time unit in accordance with the offset value and the time unit where the first PDCCH is transmitted; or
determining one or more time units before a time unit where a downlink shared channel scheduled by the first PDCCH is transmitted as the first time unit in accordance with the offset value and the time unit where the downlink shared channel scheduled by the first PDCCH is transmitted.

5. The UCI transmission method according to claim 3, wherein a unit of the offset value is determined with a definition of the first time unit as a reference; or
the unit of the offset value is determined with a definition of the second time unit as a reference; or
in the case that the definition of the first time unit is different from the definition of the second time unit, the unit of the offset value is determined with the definition of a time unit, with a larger time length between the first time unit and the second time unit, as a reference; or
in the case that the definition of the first time unit is different from the definition of the second time unit, the unit of the offset value is determined with the definition of a time unit, with a smaller time length between the first time unit and the second time unit, as a reference; or
the unit of the offset value is determined with the definition of the first time unit and the definition of the second time unit as a reference, or with the definition of any of the first time unit and the second time unit as a reference; wherein the definition of the first time unit is the same as the definition of the second time unit through pre-definition or configuration.

6. The UCI transmission method according to claim 3, wherein the predefined time period comprises one of: a predefined time period containing the first PDCCH transmission, a predefined time period before the first PDCCH transmission, a predefined time period containing uplink channel transmission scheduled by the first PDCCH, or a predefined time period before the uplink channel transmission scheduled by the first PDCCH; and/or
a unit of a time unit corresponding to each bit or a unit of a sub-time period corresponding to each bit is determined in accordance with one of:
a unit of a time unit corresponding to each bit or a unit of a sub-time period corresponding to each bit is determined with a definition of the first time unit as a reference; or
a unit of the time unit corresponding to each bit or a unit of a sub-time period corresponding to each bit, is determined with a definition of the second time unit as a reference; or
in the case that the definition of the first time unit is different from the definition of the second time unit, a unit of the time unit corresponding to each bit or a unit of a sub-time period corresponding to each bit, is determined with the definition of a time unit with a larger time length between the first time unit and the second time unit as a reference; or
in the case that the definition of the first time unit is different from the definition of the second time unit, a unit of the time unit corresponding to each bit or a unit of a sub-time period corresponding to each bit, is determined with a time unit with a smaller time length between the first time unit and the second time unit as a reference; or
a unit of a time unit corresponding to each bit or a unit of a sub-time period corresponding to each bit, is determined with the definition of the first time unit and the definition of the second time unit as a reference, or with the definition of any of the first time unit and the second time unit as a reference; wherein the definition of the first time unit is the same as the definition of the second time unit through pre-definition or configuration.

7. The UCI transmission method according to claim 1, wherein causes for dropping the first UCI comprise at least one of:
that there is a conflict between an uplink channel carrying the first UCI and the other channel, the other channel having a priority level higher than the uplink channel carrying the first UCI;
that all or parts of transmission resources for the uplink channel carrying the first UCI are contained in an uplink region which is notified to be ceased or cancelled through uplink cancellation indication signaling in the case that uplink cancellation is configured for the terminal;
that there are symbols occupied by a downlink symbol or a Synchronization Signal Block (SSB) configured through high-layer signaling in a symbol set of the uplink channel carrying the first UCI;
that a flexible symbol configured through high-layer signaling is contained in the symbol set of the uplink channel carrying the first UCI and there is a downlink transmission scheduled by a PDCCH on the flexible symbol, or the flexible symbol is indicated as a downlink symbol through indication information in Downlink Control Information (DCI) indicating a slot structure when the terminal is configured to detect the DCI indicating the slot structure;
that the flexible symbol configured through high-layer signaling is contained in the symbol set of the uplink channel carrying the first UCI, the terminal is configured to detect the DCI indicating the slot structure but the terminal fails to receive the DCI indicating the slot structure;
that a Physical Uplink Shared Channel (PUSCH) carrying the first UCI is located in a region where uplink skipping is executed by the terminal; or
that a Configured Grant (CG) PUSCH carrying the first UCI is ceased or cancelled due to the other PUSCH with DCI scheduling.

8. The UCI transmission method according to claim 1, wherein the definition of each of the first time unit and the second time unit comprises one of: at least one subframe, at least one slot, or at least one sub-slot; wherein the definition of the first time unit is the same as or different from the definition of the second time unit.

9. The UCI transmission method according to claim 1, wherein in the case that a plurality of first PDCCHs has been received by the terminal and one or more Hybrid Automatic Repeat request-ACKnowledgments (HARQ-ACKs) for one or more Physical Downlink Shared Channels (PDSCHs) scheduled by the plurality of first PDCCHs and/or for a Semi-Persistent Scheduling (SPS) PDSCH release indicated by the plurality of first PDCCHs are transmitted in the second time unit, offset values indicated through retransmission indication information in the plurality of first PDCCHs are the same; or
the offset values indicated through retransmission indication information in the plurality of first PDCCHs are different, and the first time unit is determined in accordance with a retransmission indication field in each first PDCCH in the plurality of first PDCCHs or a retransmission indication field in a last one of the plurality of first PDCCHs.

10. The UCI transmission method according to claim 1, wherein in the case that the first PDCCH comprises a priority level indication field, a priority level of the first UCI is the same as or different from a priority level indicated in the priority level indication field, or the priority level of the first UCI is greater than or equal to the priority level indicated in the priority level indication field; or
in the case that the first PDCCH does not comprise the priority level indication field, the priority level of the first UCI is the same as or different from a predefined priority level corresponding to DCI used by the first PDCCH, or the priority level of the first UCI is greater than or equal to the predefined priority level corresponding to the DCI used by the first PDCCH.

11. The UCI transmission method according to claim 1, wherein the transmitting, by the terminal, the first UCI in the second time unit comprises transmitting the first UCI in the second time unit in accordance with a size and bits of the first UCI in the first time unit.

12. The UCI transmission method according to claim 1, wherein in the case that the other UCI is not transmitted by the terminal in the second time unit, the transmitting, by the terminal, the first UCI in the second time unit comprises:
when a PDSCH transmission is scheduled by the first PDCCH or an SPS PDSCH release is indicated by the first PDCCH, and an HARQ-ACK for the PDSCH or SPS PDSCH release is transmitted in the second time unit, transmitting the first UCI on a PUCCH resource in the second time unit, the PUCCH resource being determined in accordance with the quantity of bits of the first UCI and a PUCCH resource indication field in the first PDCCH, or the PUCCH resource being determined in accordance with a PUCCH resource index corresponding to the first UCI in the first time unit, or the PUCCH resource being a resource preconfigured through high-layer signaling; or
when a PUSCH is scheduled by the first PDCCH to be transmitted in the second time unit, transmitting the first UCI on a PUSCH resource in the second time unit.

13. The UCI transmission method according to claim 12, wherein in the case that the first time unit comprises a plurality of time units, the transmitting, by the terminal, the first UCI in the second time unit comprises:
cascading a plurality of pieces of first UCI dropped in the plurality of time units to each other in a predetermined cascading order, and transmitting the cascaded first UCI on a PUCCH resource in the second time unit, the PUCCH resource being determined in accordance with a PUCCH resource index in a target time unit in the plurality of time units corresponding to the first UCI in the target time unit, the target time unit being a first one of the plurality of time units, a last one of the plurality of time units or a time unit in the plurality of time units in which the PUCCH resource corresponding to the first UCI has a maximum capacity, or the PUCCH resource being determined in accordance with the quantity of bits of the cascaded first UCI and a PUCCH resource indication field in the first PDCCH, or the PUCCH resource being a resource preconfigured through high-layer signaling; wherein the predetermined cascading order comprising at least one of a chronological order of the time units or an order of UCI types; or
independently transmitting the plurality of pieces of first UCI dropped in the plurality of time units on a plurality of PUCCH resources in the second time unit, the plurality of PUCCH resources being determined in accordance with a PUCCH resource index corresponding to each of the plurality of pieces of first UCI in a corresponding time unit within the plurality of time units.

14. The UCI transmission method according to claim 1, wherein in the case that second UCI is transmitted by the terminal in the second time unit, the transmitting, by the terminal, the first UCI in the second time unit comprises:
transmitting the first UCI and the second UCI in a multiplexing manner through a same PUCCH resource, the PUCCH resource being determined in accordance with the total quantity of bits of the first UCI and the second UCI and a PUCCH resource indication field in the first PDCCH, or the PUCCH resource being a resource preconfigured through high-layer signaling; or
when HARQ-ACK is contained in both the first UCI and the second UCI, cascading the second UCI with the first UCI, and transmitting the first UCI and the second UCI through a same PUCCH resource, the PUCCH resource being determined in accordance with the total quantity of bits of the first UCI and the second UCI and a PUCCH resource indication field in the first PDCCH, or the PUCCH resource being a resource preconfigured through high-layer signaling; or
transmitting the first UCI through a first PUCCH resource and transmitting the second UCI through a second PUCCH resource, wherein the first PUCCH resource does not overlap with the second PUCCH resource in a time domain, the first PUCCH resource being determined in accordance with the quantity of bits of the first UCI and a PUCCH resource indication field in the first PDCCH, or the first PUCCH resource being determined in accordance with a PUCCH resource index corresponding to the first UCI in the first time unit, or the first PUCCH resource being a resource preconfigured through high-layer signaling; or
determining a first PUCCH resource corresponding to the first UCI and a second PUCCH resource corresponding to the second UCI, transmitting the first UCI through the first PUCCH resource and transmitting the second UCI through the second PUCCH resource when the first PUCCH resource does not overlap with the second PUCCH resource in a time domain, and transmitting the first UCI and the second UCI in a multiplexing manner through a same PUCCH resource when the first PUCCH resource overlaps with the second PUCCH resource in the time domain, the first PUCCH resource being determined in accordance with the quantity of bits of the first UCI and a PUCCH resource indication field in the first PDCCH, or the first PUCCH resource being determined in accordance with a PUCCH resource index corresponding to the first UCI in the first time unit, or the first PUCCH resource being a resource preconfigured through high-layer signaling.

15. The UCI transmission method according to claim 14, wherein a type of the first UCI is the same as or different from a type of the second UCI, and the second UCI comprises at least one of an HARQ-ACK of the first PDCCH, or an HARQ-ACK of a PDSCH scheduled by the first PDCCH.

16. The UCI transmission method according to claim 1, wherein the first UCI comprises at least one of an HARQ-ACK, Channel State Information (CSI) or a Scheduling Request (SR); and/or the first UCI comprises all or parts of pieces of UCI dropped by the terminal in the first time unit.

17. The UCI transmission method according to claim 1, wherein in the case that the terminal determines that the terminal supports or is configured with UCI retransmission, the first PDCCH comprises the retransmission indication information.

18. A UCI reception method, comprising:
transmitting, by a network device, a first PDCCH to a terminal, the first PDCCH comprising retransmission indication information; and
receiving, by the network device, first UCI from the terminal in a second time unit, the first UCI being UCI dropped in a first time unit, the first time unit being a time unit determined in accordance with the retransmission indication information, and the second time unit being a time unit where uplink channel corresponding to the first PDCCH is transmitted.

19. The UCI reception method according to claim 18, wherein a value range of the retransmission indication information comprises a first indication state and a second indication state, the first indication state indicates that no UCI retransmission is to be performed, and the second indication state indicates that UCI retransmission is to be performed, wherein the first time unit is determined in accordance with the retransmission indication information in the case that the retransmission indication information is in the second indication state.

20. The UCI reception method according to claim 18, wherein the retransmission indication information is used to indicate an offset value, and the first time unit is determined in accordance with the offset value; or
the retransmission indication information comprises K bits, each bit corresponds to a sub-time period in a predefined time period, the first time unit comprises one or more time units contained in a sub-time period corresponding to a bit having a first value in the K bits, K is an integer greater than or equal to 1, and one sub-time period comprises at least one time unit; or
the retransmission indication information comprises K bits, each bit corresponds to a time unit in a predefined time period, the first time unit comprises one or more time units corresponding to a bit having a first value in the K bits, and K is an integer greater than or equal to 1.

21. The UCI reception method according to claim 20, wherein the determining the first time unit in accordance with the offset value comprises:
determining one or more time units before the time unit where the uplink channel scheduled by the first PDCCH is transmitted as the first time unit in accordance with the offset value and the time unit where the uplink channel scheduled by the first PDCCH is transmitted; or
determining one or more time units before a time unit where the first PDCCH is transmitted as the first time unit in accordance with the offset value and the time unit where the first PDCCH is transmitted; or
determining one or more time units before a time unit where a downlink shared channel scheduled by the first PDCCH is transmitted as the first time unit in accordance with the offset value and the time unit where the downlink shared channel scheduled by the first PDCCH is transmitted.

22. The UCI reception method according to claim 20, wherein a unit of the offset value is determined with a definition of the first time unit as a reference; or
the unit of the offset value is determined with a definition of the second time unit as a reference; or
in the case that the definition of the first time unit is different from the definition of the second time unit, the unit of the offset value is determined with the definition of a time unit, with a larger time length between the first time unit and the second time unit, as a reference; or
in the case that the definition of the first time unit is different from the definition of the second time unit, the unit of the offset value is determined with the definition of a time unit, with a smaller time length between the first time unit and the second time unit, as a reference; or
the unit of the offset value is determined with the definition of the first time unit and the definition of the second time unit as a reference, or with the definition of any of the first time unit and the second time unit as a reference; wherein the definition of the first time unit is the same as the definition of the second time unit through pre-definition or configuration.

23. The UCI reception method according to claim 20, wherein the predefined time period comprises one of: a predefined time period containing the first PDCCH transmission, a predefined time period before the first PDCCH transmission, a predefined time period containing uplink channel transmission scheduled by the first PDCCH, or a predefined time period before the uplink channel transmission scheduled by the first PDCCH; and/or
a unit of a time unit corresponding to each bit or a unit of a sub-time period corresponding to each bit is determined in accordance with one of:
a unit of a time unit corresponding to each bit or a unit of a sub-time period corresponding to each bit is determined with a definition of the first time unit as a reference; or
a unit of the time unit corresponding to each bit or a unit of a sub-time period corresponding to each bit, is determined with a definition of the second time unit as a reference; or
in the case that the definition of the first time unit is different from the definition of the second time unit, a unit of the time unit corresponding to each bit or a unit of a sub-time period corresponding to each bit, is determined with the definition of a time unit with a larger time length between the first time unit and the second time unit as a reference; or
in the case that the definition of the first time unit is different from the definition of the second time unit, a unit of the time unit corresponding to each bit or a unit of a sub-time period corresponding to each bit, is determined with a time unit with a smaller time length between the first time unit and the second time unit as a reference; or
a unit of a time unit corresponding to each bit or a unit of a sub-time period corresponding to each bit, is determined with the definition of the first time unit and the definition of the second time unit as a reference, or with the definition of any of the first time unit and the second time unit as a reference; wherein the definition of the first time unit is the same as the definition of the second time unit through pre-definition or configuration.

24. The UCI reception method according to claim 18, wherein causes for dropping the first UCI comprise at least one of:
that there is a conflict between an uplink channel carrying the first UCI and the other channel, the other channel having a priority level higher than the uplink channel carrying the first UCI;
that all or parts of transmission resources for the uplink channel carrying the first UCI are contained in an uplink region which is notified to be ceased or cancelled through uplink cancellation indication signaling in the case that uplink cancellation is configured for the terminal;
that there are symbols occupied by a downlink symbol or an SSB configured through high-layer signaling in a symbol set of the uplink channel carrying the first UCI;
that a flexible symbol configured through high-layer signaling is contained in the symbol set of the uplink channel carrying the first UCI and there is a downlink transmission scheduled by a PDCCH on the flexible symbol, or the flexible symbol is indicated as a downlink symbol through indication information in DCI indicating a slot structure when the terminal is configured to detect the DCI indicating the slot structure;
that the flexible symbol configured through high-layer signaling is contained in the symbol set of the uplink channel carrying the first UCI, the terminal is configured to detect the DCI indicating the slot structure but the terminal fails to receive the DCI indicating the slot structure;
that a PUSCH carrying the first UCI is located in a region where uplink skipping is executed by the terminal; or
that a CG PUSCH carrying the first UCI is ceased or cancelled due to the other PUSCH with DCI scheduling.

25. The UCI reception method according to claim 18, wherein the definition of each of the first time unit and the second time unit comprises one of: at least one subframe, at least one slot, or at least one sub-slot; wherein the definition of the first time unit is the same as or different from the definition of the second time unit.

26. The UCI reception method according to claim 18, wherein in the case that a plurality of first PDCCHs has been transmitted by the network device and one or more HARQ-ACKs for one or more PDSCHs scheduled by the plurality of first PDCCHs and/or for a SPS PDSCH release indicated by the plurality of first PDCCHs are transmitted in the second time unit, offset values indicated through retransmission indication information in the plurality of first PDCCHs are the same; or
the offset values indicated through retransmission indication information in the plurality of first PDCCHs are different, and the first time unit is determined in accordance with a retransmission indication field in each first PDCCH in the plurality of first PDCCHs or a retransmission indication field in a last one of the plurality of first PDCCHs.

27. The UCI reception method according to claim 18, wherein in the case that the first PDCCH comprises a priority level indication field, a priority level of the first UCI is the same as or different from a priority level indicated in the priority level indication field, or the priority level of the first UCI is greater than or equal to the priority level indicated in the priority level indication field; or
in the case that the first PDCCH does not comprise the priority level indication field, the priority level of the first UCI is the same as or different from a predefined priority level corresponding to DCI used by the first PDCCH, or the priority level of the first UCI is greater than or equal to the predefined priority level corresponding to the DCI used by the first PDCCH.

28. The UCI reception method according to claim 18, wherein the first UCI is transmitted in the second time unit in accordance with a size and bits of the first UCI in the first time unit.

29. The UCI reception method according to claim 18, wherein in the case that the other UCI does not need to be received by the network device in the second time unit, the receiving, by the network device, the first UCI from the terminal in the second time unit comprises:
when a PDSCH transmission is scheduled by the first PDCCH or an SPS PDSCH release is indicated by the first PDCCH, and an HARQ-ACK for the PDSCH or SPS PDSCH release is transmitted in the second time unit, receiving the first UCI on a PUCCH resource in the second time unit, the PUCCH resource being determined in accordance with the quantity of bits of the first UCI and a PUCCH resource indication field in the first PDCCH, or the PUCCH resource being determined in accordance with a PUCCH resource index corresponding to the first UCI in the first time unit, or the PUCCH resource being a resource preconfigured through high-layer signaling; or
when a PUSCH is scheduled by the first PDCCH to be transmitted in the second time unit, receiving the first UCI on a PUSCH resource in the second time unit.

30. The UCI reception method according to claim 29, wherein in the case that the first time unit comprises a plurality of time units, the receiving, by the network device, the first UCI in the second time unit comprises:
determining that a plurality of pieces of first UCI dropped in the plurality of time units is cascaded to each other in a predetermined cascading order, and receiving the cascaded first UCI on a PUCCH resource in the second time unit, the PUCCH resource being determined in accordance with a PUCCH resource index in a target time unit in the plurality of time units corresponding to the first UCI in the target time unit, the target time unit being a first one of the plurality of time units, a last one of the plurality of time units or a time unit in the plurality of time units in which the PUCCH resource corresponding to the first UCI has a maximum capacity, or the PUCCH resource being determined in accordance with the quantity of bits of the cascaded first UCI and a PUCCH resource indication field in the first PDCCH, or the PUCCH resource being a resource preconfigured through high-layer signaling; wherein the predetermined cascading order comprising at least one of a chronological order of the time units or an order of UCI types; or
independently receiving the plurality of pieces of first UCI dropped in the plurality of time units on a plurality of PUCCH resources in the second time unit, the plurality of PUCCH resources being determined in accordance with a PUCCH resource index corresponding to each of the plurality of pieces of first UCI in a corresponding time unit within the plurality of time units.

31. The UCI reception method according to claim 18, wherein in the case that second UCI needs to be received by the network device in the second time unit, the receiving, by the network device, the first UCI from the terminal in the second time unit comprises:
receiving the first UCI and the second UCI transmitted in a multiplexing manner through a same PUCCH resource, the PUCCH resource being determined in accordance with the total quantity of bits of the first UCI and the second UCI and a PUCCH resource indication field in the first PDCCH, or the PUCCH resource being a resource preconfigured through high-layer signaling; or
when HARQ-ACK is contained in both the first UCI and the second UCI, determining that the second UCI is cascaded with the first UCI, and receiving the first UCI and the second UCI transmitted in a cascading manner through a same PUCCH resource, the PUCCH resource being determined in accordance with the total quantity of bits of the first UCI and the second UCI and a PUCCH resource indication field in the first PDCCH, or the PUCCH resource being a resource preconfigured through high-layer signaling; or
receiving the first UCI through a first PUCCH resource and receiving the second UCI through a second PUCCH resource, wherein the first PUCCH resource does not overlap with the second PUCCH resource in a time domain, the first PUCCH resource being determined in accordance with the quantity of bits of the first UCI and a PUCCH resource indication field in the first PDCCH, or the first PUCCH resource being determined in accordance with a PUCCH resource index corresponding to the first UCI in the first time unit, or the first PUCCH resource being a resource preconfigured through high-layer signaling; or
determining a first PUCCH resource corresponding to the first UCI and a second PUCCH resource corresponding to the second UCI, receiving the first UCI through the first PUCCH resource and receiving the second UCI through the second PUCCH resource when the first PUCCH resource does not overlap with the second PUCCH resource in a time domain, and receiving the first UCI and the second UCI through a same PUCCH resource simultaneously when the first PUCCH resource overlaps with the second PUCCH resource in the time domain, the first PUCCH resource being determined in accordance with the quantity of bits of the first UCI and a PUCCH resource indication field in the first PDCCH, or the first PUCCH resource being determined in accordance with a PUCCH resource index corresponding to the first UCI in the first time unit, or the first PUCCH resource being a resource preconfigured through high-layer signaling.

32. The UCI reception method according to claim 31, wherein a type of the first UCI is the same as or different from a type of the second UCI, and the second UCI comprises at least one of an HARQ-ACK of the first PDCCH, or an HARQ-ACK of a PDSCH scheduled by the first PDCCH.

33. The UCI reception method according to claim 18, wherein the first UCI comprises at least one of an HARQ-ACK, CSI or an SR; and/or the first UCI comprises all or parts of pieces of UCI dropped by the terminal in the first time unit.

34. The UCI reception method according to claim 18, wherein in the case that the network device determines that the terminal supports or is configured with UCI retransmission, the first PDCCH comprises the retransmission indication information.

35. A terminal, comprising a memory, a transceiver and a processor, wherein the memory is configured to store therein a computer program, and the transceiver is configured to transmit and receive data under the control of the processor, wherein the processor is configured to read the computer program in the memory so as to: receive a first PDCCH, the first PDCCH comprising a retransmission indication information; determine a first time unit in accordance with the retransmission indication information; and transmit first UCI in a second time unit, the first UCI being UCI dropped in the first time unit, the second time unit being a time unit where uplink channel corresponding to the first PDCCH is transmitted.

36. The terminal according to claim 35, wherein a value range of the retransmission indication information comprises a first indication state and a second indication state, the first indication state indicates that no UCI retransmission is to be performed, and the second indication state indicates that UCI retransmission is to be performed. The determining the first time unit in accordance with the retransmission indication information comprises determining the first time unit in accordance with the retransmission indication information in the case that the retransmission indication information is in the second indication state.

37. The terminal according to claim 35, wherein the retransmission indication information is used to indicate an offset value, and the terminal determines the first time unit in accordance with the offset value; or
the retransmission indication information comprises K bits, each bit corresponds to a sub-time period in a predefined time period, the first time unit comprises one or more time units contained in a sub-time period corresponding to a bit having a first value in the K bits, K is an integer greater than or equal to 1, and one sub-time period comprises at least one time unit; or
the retransmission indication information comprises K bits, each bit corresponds to a time unit in a predefined time period, the first time unit comprises one or more time units corresponding to a bit having a first value in the K bits, and K is an integer greater than or equal to 1.

38. The terminal according to claim 37, wherein the determining the first time unit in accordance with the offset value comprises:
determining one or more time units before the time unit where the uplink channel scheduled by the first PDCCH is transmitted as the first time unit in accordance with the offset value and the time unit where the uplink channel scheduled by the first PDCCH is transmitted; or
determining one or more time units before a time unit where the first PDCCH is transmitted as the first time unit in accordance with the offset value and the time unit where the first PDCCH is transmitted; or
determining one or more time units before a time unit where a downlink shared channel scheduled by the first PDCCH is transmitted as the first time unit in accordance with the offset value and the time unit where the downlink shared channel scheduled by the first PDCCH is transmitted.

39. The terminal according to claim 38, wherein a unit of the offset value is determined with a definition of the first time unit as a reference; or
the unit of the offset value is determined with a definition of the second time unit as a reference; or
in the case that the definition of the first time unit is different from the definition of the second time unit, the unit of the offset value is determined with the definition of a time unit, with a larger time length between the first time unit and the second time unit, as a reference; or
in the case that the definition of the first time unit is different from the definition of the second time unit, the unit of the offset value is determined with the definition of a time unit, with a smaller time length between the first time unit and the second time unit, as a reference; or
the unit of the offset value is determined with the definition of the first time unit and the definition of the second time unit as a reference, or with the definition of any of the first time unit and the second time unit as a reference; wherein the definition of the first time unit is the same as the definition of the second time unit through pre-definition or configuration.

40. The terminal according to claim 37, wherein the predefined time period comprises one of: a predefined time period containing the first PDCCH transmission, a predefined time period before the first PDCCH transmission, a predefined time period containing uplink channel transmission scheduled by the first PDCCH, or a predefined time period before the uplink channel transmission scheduled by the first PDCCH; and/or
a unit of a time unit corresponding to each bit or a unit of a sub-time period corresponding to each bit is determined in accordance with one of:
a unit of a time unit corresponding to each bit or a unit of a sub-time period corresponding to each bit is determined with a definition of the first time unit as a reference; or
a unit of the time unit corresponding to each bit or a unit of a sub-time period corresponding to each bit, is determined with a definition of the second time unit as a reference; or
in the case that the definition of the first time unit is different from the definition of the second time unit, a unit of the time unit corresponding to each bit or a unit of a sub-time period corresponding to each bit, is determined with the definition of a time unit with a larger time length between the first time unit and the second time unit as a reference; or
in the case that the definition of the first time unit is different from the definition of the second time unit, a unit of the time unit corresponding to each bit or a unit of a sub-time period corresponding to each bit, is determined with a time unit with a smaller time length between the first time unit and the second time unit as a reference; or
a unit of a time unit corresponding to each bit or a unit of a sub-time period corresponding to each bit, is determined with the definition of the first time unit and the definition of the second time unit as a reference, or with the definition of any of the first time unit and the second time unit as a reference; wherein the definition of the first time unit is the same as the definition of the second time unit through pre-definition or configuration.

41. The terminal according to claim 35, wherein causes for dropping the first UCI comprise at least one of:
that there is a conflict between an uplink channel carrying the first UCI and the other channel, the other channel having a priority level higher than the uplink channel carrying the first UCI;
that all or parts of transmission resources for the uplink channel carrying the first UCI are contained in an uplink region which is notified to be ceased or cancelled through uplink cancellation indication signaling in the case that uplink cancellation is configured for the terminal;
that there are symbols occupied by a downlink symbol or an SSB configured through high-layer signaling in a symbol set of the uplink channel carrying the first UCI;
that a flexible symbol configured through high-layer signaling is contained in the symbol set of the uplink channel carrying the first UCI and there is a downlink transmission scheduled by a PDCCH on the flexible symbol, or the flexible symbol is indicated as a downlink symbol through indication information in DCI indicating a slot structure when the terminal is configured to detect the DCI indicating the slot structure;
that the flexible symbol configured through high-layer signaling is contained in the symbol set of the uplink channel carrying the first UCI, the terminal is configured to detect the DCI indicating the slot structure but the terminal fails to receive the DCI indicating the slot structure;
that a PUSCH carrying the first UCI is located in a region where uplink skipping is executed by the terminal; or
that a CG PUSCH carrying the first UCI is ceased or cancelled due to the other PUSCH with DCI scheduling.

42. The terminal according to claim 35, wherein the definition of each of the first time unit and the second time unit comprises one of at least one subframe, at least one slot, or at least one sub-slot; wherein the definition of the first time unit is the same as or different from the definition of the second time unit.

43. The terminal according to claim 35, wherein in the case that a plurality of first PDCCHs has been received by the terminal and one or more HARQ-ACKs for one or more PDSCHs scheduled by the plurality of first PDCCHs and/or for a SPS PDSCH release indicated by the plurality of first PDCCHs are transmitted in the second time unit, offset values indicated through retransmission indication information in the plurality of first PDCCHs are the same; or
the offset values indicated through retransmission indication information in the plurality of first PDCCHs are different, and the first time unit is determined in accordance with a retransmission indication field in each first PDCCH in the plurality of first PDCCHs or a retransmission indication field in a last one of the plurality of first PDCCHs.

44. The terminal according to claim 35, wherein in the case that the first PDCCH comprises a priority level indication field, a priority level of the first UCI is the same as or different from a priority level indicated in the priority level indication field, or the priority level of the first UCI is greater than or equal to the priority level indicated in the priority level indication field; or
in the case that the first PDCCH does not comprise the priority level indication field, the priority level of the first UCI is the same as or different from a predefined priority level corresponding to DCI used by the first PDCCH, or the priority level of the first UCI is greater than or equal to the predefined priority level corresponding to the DCI used by the first PDCCH.

45. The terminal according to claim 35, wherein the transmitting the first UCI in the second time unit comprises transmitting the first UCI in the second time unit in accordance with a size and bits of the first UCI in the first time unit.

46. The terminal according to claim 35, wherein in the case that the other UCI is not transmitted by the terminal in the second time unit, the transmitting the first UCI in the second time unit comprises:
when a PDSCH transmission is scheduled by the first PDCCH or an SPS PDSCH release is indicated by the first PDCCH, and an HARQ-ACK for the PDSCH or SPS PDSCH release is transmitted in the second time unit, transmitting the first UCI on a PUCCH resource in the second time unit, the PUCCH resource being determined in accordance with the quantity of bits of the first UCI and a PUCCH resource indication field in the first PDCCH, or the PUCCH resource being determined in accordance with a PUCCH resource index corresponding to the first UCI in the first time unit, or the PUCCH resource being a resource preconfigured through high-layer signaling; or
when a PUSCH is scheduled by the first PDCCH to be transmitted in the second time unit, transmitting the first UCI on a PUSCH resource in the second time unit.

47. The terminal according to claim 46, wherein in the case that the first time unit comprises a plurality of time units, the processor is further configured to:
cascade a plurality of pieces of first UCI dropped in the plurality of time units to each other in a predetermined cascading order, and transmit the cascaded first UCI on a PUCCH resource in the second time unit, the PUCCH resource being determined in accordance with a PUCCH resource index in a target time unit in the plurality of time units corresponding to the first UCI in the target time unit, the target time unit being a first one of the plurality of time units, a last one of the plurality of time units or a time unit in the plurality of time units in which the PUCCH resource corresponding to the first UCI has a maximum capacity, or the PUCCH resource being determined in accordance with the quantity of bits of the cascaded first UCI and a PUCCH resource indication field in the first PDCCH, or the PUCCH resource being a resource preconfigured through high-layer signaling; wherein the predetermined cascading order comprising at least one of a chronological order of the time units or an order of UCI types; or
independently transmit the plurality of pieces of first UCI dropped in the plurality of time units on a plurality of PUCCH resources in the second time unit, the plurality of PUCCH resources being determined in accordance with a PUCCH resource index corresponding to each of the plurality of pieces of first UCI in a corresponding time unit within the plurality of time units.

48. The terminal according to claim 35, wherein in the case that second UCI is transmitted by the terminal in the second time unit, the transmitting the first UCI in the second time unit comprises:
transmitting the first UCI and the second UCI in a multiplexing manner through a same PUCCH resource, the PUCCH resource being determined in accordance with the total quantity of bits of the first UCI and the second UCI and a PUCCH resource indication field in the first PDCCH, or the PUCCH resource being a resource preconfigured through high-layer signaling; or
when HARQ-ACK is contained in both the first UCI and the second UCI, cascading the second UCI with the first UCI, and transmitting the first UCI and the second UCI through a same PUCCH resource, the PUCCH resource being determined in accordance with the total quantity of bits of the first UCI and the second UCI and a PUCCH resource indication field in the first PDCCH, or the PUCCH resource being a resource preconfigured through high-layer signaling; or
transmitting the first UCI through a first PUCCH resource and transmitting the second UCI through a second PUCCH resource, wherein the first PUCCH resource does not overlap with the second PUCCH resource in a time domain, the first PUCCH resource being determined in accordance with the quantity of bits of the first UCI and a PUCCH resource indication field in the first PDCCH, or the first PUCCH resource being determined in accordance with a PUCCH resource index corresponding to the first UCI in the first time unit, or the first PUCCH resource being a resource preconfigured through high-layer signaling; or
determining a first PUCCH resource corresponding to the first UCI and a second PUCCH resource corresponding to the second UCI, transmitting the first UCI through the first PUCCH resource and transmitting the second UCI through the second PUCCH resource when the first PUCCH resource does not overlap with the second PUCCH resource in a time domain, and transmitting the first UCI and the second UCI in a multiplexing manner through a same PUCCH resource when the first PUCCH resource overlaps with the second PUCCH resource in the time domain, the first PUCCH resource being determined in accordance with the quantity of bits of the first UCI and a PUCCH resource indication field in the first PDCCH, or the first PUCCH resource being determined in accordance with a PUCCH resource index corresponding to the first UCI in the first time unit, or the first PUCCH resource being a resource preconfigured through high-layer signaling.

49. The terminal according to claim 48, wherein a type of the first UCI is the same as or different from a type of the second UCI, and the second UCI comprises at least one of an HARQ-ACK of the first PDCCH, or an HARQ-ACK of a PDSCH scheduled by the first PDCCH.

50. The terminal according to claim 35, wherein the first UCI comprises at least one of an HARQ-ACK, CSI or an SR; and/or the first UCI comprises all or parts of pieces of UCI dropped by the terminal in the first time unit.

51. The terminal according to claim 35, wherein in the case that the processor determines that the terminal supports or is configured with UCI retransmission, the first PDCCH comprises the retransmission indication information.

52. A network device, comprising a memory, a transceiver and a processor, wherein the memory is configured to store therein a computer program, and the transceiver is configured to transmit and receive data under the control of the processor, wherein the processor is configured to read the computer program in the memory, so as to: transmit a first PDCCH to a terminal, the first PDCCH comprising retransmission indication information; and receive first UCI from the terminal in a second time unit, the first UCI being UCI dropped in a first time unit, the first time unit being a time unit determined in accordance with the retransmission indication information, and the second time unit being a time unit where uplink channel corresponding to the first PDCCH is transmitted.

53. The network device according to claim 52, wherein a value range of the retransmission indication information comprises a first indication state and a second indication state, the first indication state indicates that no UCI retransmission is to be performed, and the second indication state indicates that UCI retransmission is to be performed, wherein the first time unit is determined in accordance with the retransmission indication information in the case that the retransmission indication information is in the second indication state.

54. The network device according to claim 52, wherein the retransmission indication information is used to indicate an offset value, and the first time unit is determined in accordance with the offset value; or
the retransmission indication information comprises K bits, each bit corresponds to a sub-time period in a predefined time period, the first time unit comprises one or more time units contained in a sub-time period corresponding to a bit having a first value in the K bits, K is an integer greater than or equal to 1, and one sub-time period comprises at least one time unit; or
the retransmission indication information comprises K bits, each bit corresponds to a time unit in a predefined time period, the first time unit comprises one or more time units corresponding to a bit having a first value in the K bits, and K is an integer greater than or equal to 1.

55. The network device according to claim 54, wherein the determining the first time unit in accordance with the offset value comprises:
determining one or more time units before the time unit where the uplink channel scheduled by the first PDCCH is transmitted as the first time unit in accordance with the offset value and the time unit where the uplink channel scheduled by the first PDCCH is transmitted; or
determining one or more time units before a time unit where the first PDCCH is transmitted as the first time unit in accordance with the offset value and the time unit where the first PDCCH is transmitted; or
determining one or more time units before a time unit where a downlink shared channel scheduled by the first PDCCH is transmitted as the first time unit in accordance with the offset value and the time unit where the downlink shared channel scheduled by the first PDCCH is transmitted.

56. The network device according to claim 54, wherein a unit of the offset value is determined with a definition of the first time unit as a reference; or
the unit of the offset value is determined with a definition of the second time unit as a reference; or
in the case that the definition of the first time unit is different from the definition of the second time unit, the unit of the offset value is determined with the definition of a time unit, with a larger time length between the first time unit and the second time unit, as a reference; or
in the case that the definition of the first time unit is different from the definition of the second time unit, the unit of the offset value is determined with the definition of a time unit, with a smaller time length between the first time unit and the second time unit, as a reference; or
the unit of the offset value is determined with the definition of the first time unit and the definition of the second time unit as a reference, or with the definition of any of the first time unit and the second time unit as a reference; wherein the definition of the first time unit is the same as the definition of the second time unit through pre-definition or configuration.

57. The network device according to claim 54, wherein the predefined time period comprises one of: a predefined time period containing the first PDCCH transmission, a predefined time period before the first PDCCH transmission, a predefined time period containing uplink channel transmission scheduled by the first PDCCH, or a predefined time period before the uplink channel transmission scheduled by the first PDCCH; and/or
a unit of a time unit corresponding to each bit or a unit of a sub-time period corresponding to each bit is determined in accordance with one of:
a unit of a time unit corresponding to each bit or a unit of a sub-time period corresponding to each bit is determined with a definition of the first time unit as a reference; or
a unit of the time unit corresponding to each bit or a unit of a sub-time period corresponding to each bit, is determined with a definition of the second time unit as a reference; or
in the case that the definition of the first time unit is different from the definition of the second time unit, a unit of the time unit corresponding to each bit or a unit of a sub-time period corresponding to each bit, is determined with the definition of a time unit with a larger time length between the first time unit and the second time unit as a reference; or
in the case that the definition of the first time unit is different from the definition of the second time unit, a unit of the time unit corresponding to each bit or a unit of a sub-time period corresponding to each bit, is determined with a time unit with a smaller time length between the first time unit and the second time unit as a reference; or
a unit of a time unit corresponding to each bit or a unit of a sub-time period corresponding to each bit, is determined with the definition of the first time unit and the definition of the second time unit as a reference, or with the definition of any of the first time unit and the second time unit as a reference; wherein the definition of the first time unit is the same as the definition of the second time unit through pre-definition or configuration.

58. The network device according to claim 52, wherein causes for dropping the first UCI comprise at least one of:
that there is a conflict between an uplink channel carrying the first UCI and the other channel, the other channel having a priority level higher than the uplink channel carrying the first UCI;
that all or parts of transmission resources for the uplink channel carrying the first UCI are contained in an uplink region which is notified to be ceased or cancelled through uplink cancellation indication signaling in the case that uplink cancellation is configured for the terminal;
that there are symbols occupied by a downlink symbol or an SSB configured through high-layer signaling in a symbol set of the uplink channel carrying the first UCI;
that a flexible symbol configured through high-layer signaling is contained in the symbol set of the uplink channel carrying the first UCI and there is a downlink transmission scheduled by a PDCCH on the flexible symbol, or the flexible symbol is indicated as a downlink symbol through indication information in DCI indicating a slot structure when the terminal is configured to detect the DCI indicating the slot structure;
that the flexible symbol configured through high-layer signaling is contained in the symbol set of the uplink channel carrying the first UCI, the terminal is configured to detect the DCI indicating the slot structure but the terminal fails to receive the DCI indicating the slot structure;
that a PUSCH carrying the first UCI is located in a region where uplink skipping is executed by the terminal; or
that a CG PUSCH carrying the first UCI is ceased or cancelled due to the other PUSCH with DCI scheduling.

59. The network device according to claim 52, wherein the definition of each of the first time unit and the second time unit comprises one of: at least one subframe, at least one slot, or at least one sub-slot; wherein the definition of the first time unit is the same as or different from the definition of the second time unit.

60. The network device according to claim 52, wherein in the case that a plurality of first PDCCHs has been transmitted by the network device and one or more HARQ-ACKs for one or more PDSCHs scheduled by the plurality of first PDCCHs and/or for a SPS PDSCH release indicated by the plurality of first PDCCHs are transmitted in the second time unit, offset values indicated through retransmission indication information in the plurality of first PDCCHs are the same; or
the offset values indicated through retransmission indication information in the plurality of first PDCCHs are different, and the first time unit is determined in accordance with a retransmission indication field in each first PDCCH in the plurality of first PDCCHs or a retransmission indication field in a last one of the plurality of first PDCCHs.

61. The network device according to claim 52, wherein in the case that the first PDCCH comprises a priority level indication field, a priority level of the first UCI is the same as or different from a priority level indicated in the priority level indication field, or the priority level of the first UCI is greater than or equal to the priority level indicated in the priority level indication field; or in the case that the first PDCCH does not comprise the priority level indication field, the priority level of the first UCI is the same as or different from a predefined priority level corresponding to DCI used by the first PDCCH, or the priority level of the first UCI is greater than or equal to the predefined priority level corresponding to the DCI used by the first PDCCH.

62. The network device according to claim 52, wherein the first UCI is transmitted in the second time unit in accordance with a size and bits of the first UCI in the first time unit.

63. The network device according to claim 52, wherein in the case that the other UCI does not need to be received by the network device in the second time unit, the receiving, by the network device, the first UCI from the terminal in the second time unit comprises:
when a PDSCH transmission is scheduled by the first PDCCH or an SPS PDSCH release is indicated by the first PDCCH, and an HARQ-ACK for the PDSCH or SPS PDSCH release is transmitted in the second time unit, receiving the first UCI on a PUCCH resource in the second time unit, the PUCCH resource being determined in accordance with the quantity of bits of the first UCI and a PUCCH resource indication field in the first PDCCH, or the PUCCH resource being determined in accordance with a PUCCH resource index corresponding to the first UCI in the first time unit, or the PUCCH resource being a resource preconfigured through high-layer signaling; or
when a PUSCH is scheduled by the first PDCCH to be transmitted in the second time unit, receiving the first UCI on a PUSCH resource in the second time unit.

64. The network device according to claim 63, wherein in the case that the first time unit comprises a plurality of time units, the processor is configured to read the computer program so as to:
determine that a plurality of pieces of first UCI dropped in the plurality of time units is cascaded to each other in a predetermined cascading order, and receive the cascaded first UCI on a PUCCH resource in the second time unit, the PUCCH resource being determined in accordance with a PUCCH resource index in a target time unit in the plurality of time units corresponding to the first UCI in the target time unit, the target time unit being a first one of the plurality of time units, a last one of the plurality of time units or a time unit in the plurality of time units in which the PUCCH resource corresponding to the first UCI has a maximum capacity, or the PUCCH resource being determined in accordance with the quantity of bits of the cascaded first UCI and a PUCCH resource indication field in the first PDCCH, or the PUCCH resource being a resource preconfigured through high-layer signaling; wherein the predetermined cascading order comprising at least one of a chronological order of the time units or an order of UCI types; or
independently receive the plurality of pieces of first UCI dropped in the plurality of time units on a plurality of PUCCH resources in the second time unit, the plurality of PUCCH resources being determined in accordance with a PUCCH resource index corresponding to each of the plurality of pieces of first UCI in a corresponding time unit within the plurality of time units.

65. The network device according to claim 52, wherein in the case that second UCI needs to be received by the network device in the second time unit, the receiving the first UCI from the terminal in the second time unit comprises:
receiving the first UCI and the second UCI transmitted in a multiplexing manner through a same PUCCH resource, the PUCCH resource being determined in accordance with the total quantity of bits of the first UCI and the second UCI and a PUCCH resource indication field in the first PDCCH, or the PUCCH resource being a resource preconfigured through high-layer signaling; or
when HARQ-ACK is contained in both the first UCI and the second UCI, determining that the second UCI is cascaded with the first UCI, and receiving the first UCI and the second UCI transmitted in a cascading manner through a same PUCCH resource, the PUCCH resource being determined in accordance with the total quantity of bits of the first UCI and the second UCI and a PUCCH resource indication field in the first PDCCH, or the PUCCH resource being a resource preconfigured through high-layer signaling; or
receiving the first UCI through a first PUCCH resource and receiving the second UCI through a second PUCCH resource, wherein the first PUCCH resource does not overlap with the second PUCCH resource in a time domain, the first PUCCH resource being determined in accordance with the quantity of bits of the first UCI and a PUCCH resource indication field in the first PDCCH, or the first PUCCH resource being determined in accordance with a PUCCH resource index corresponding to the first UCI in the first time unit, or the first PUCCH resource being a resource preconfigured through high-layer signaling; or
determining a first PUCCH resource corresponding to the first UCI and a second PUCCH resource corresponding to the second UCI, receiving the first UCI through the first PUCCH resource and receiving the second UCI through the second PUCCH resource when the first PUCCH resource does not overlap with the second PUCCH resource in a time domain, and receiving the first UCI and the second UCI through a same PUCCH resource simultaneously when the first PUCCH resource overlaps with the second PUCCH resource in the time domain, the first PUCCH resource being determined in accordance with the quantity of bits of the first UCI and a PUCCH resource indication field in the first PDCCH, or the first PUCCH resource being determined in accordance with a PUCCH resource index corresponding to the first UCI in the first time unit, or the first PUCCH resource being a resource preconfigured through high-layer signaling.

66. The network device according to claim 65, wherein a type of the first UCI is the same as or different from a type of the second UCI, and the second UCI comprises at least one of an HARQ-ACK of the first PDCCH, or an HARQ-ACK of a PDSCH scheduled by the first PDCCH.

67. The network device according to claim 52, wherein the first UCI comprises at least one of an HARQ-ACK, CSI or an SR; and/or the first UCI comprises all or parts of pieces of UCI dropped by the terminal in the first time unit.

68. The network device according to claim 52, wherein in the case that the processor determines that the terminal supports or is configured with UCI retransmission, the first PDCCH comprises the retransmission indication information.

69. A terminal, comprising:
a reception unit configured to receive a first PDCCH, the first PDCCH comprising a retransmission indication information;
a determination unit configured to determine a first time unit in accordance with the retransmission indication information; and
a transmission unit configured to transmit first UCI in a second time unit, the first UCI being UCI dropped in the first time unit, the second time unit being a time unit where uplink channel corresponding to the first PDCCH is transmitted.

70. A network device, comprising:
a transmission unit configured to transmit a first PDCCH to a terminal, the first PDCCH comprising a retransmission indication information; and
a reception unit configured to receive first UCI from the terminal in a second time unit, the first UCI being UCI dropped in a first time unit, the first time unit being determined in accordance with the retransmission indication information, the second time unit being a time unit where uplink channel corresponding to the first PDCCH is transmitted.

71. A processor-readable storage medium storing therein a computer program, wherein the computer program is executed by a processor so as to implement the UCI transmission method according to any one of claims 1 to 17, or the UCI reception method according to any one of claims 18 to 34.

72. A computer program product stored in a non-volatile storage medium, wherein the computer program product is executed by at least one processor so as to implement the UCI transmission method according to any one of claims 1 to 17, or the UCI reception method according to any one of claims 18 to 34.

73. A terminal, configured to implement the UCI transmission method according to any one of claims 1 to 17.

74. A network device, configured to implement the UCI reception method according to any one of claims 18 to 34.
